# EUROPÄISCHE PATENTSCHRIFT

(11) **EP 4 440 928 B1**
(45) Veröffentlichungstag und Bekanntmachung des Hinweises auf die Patenterteilung: **27.05.2026**
(21) Anmeldenummer: 22813538.0
(22) Anmeldetag: 04.11.2022
(51) Int. Cl.: B64C 3/48, B64C 9/04, B64C 27/58, F01D 5/14, B63H 1/00, B63H 3/00

(54) **VORRICHTUNG MIT EINEM ASYMMETRISCHEN, VERSTELLBAREN FLÜGELPROFIL**
DEVICE COMPRISING AN ASYMMETRICAL ADJUSTABLE WING PROFILE
DISPOSITIF COMPRENANT UN PROFIL D'AILE RÉGLABLE ASYMÉTRIQUE

(30) Priorität: 01.12.2021 DE 102021005965
(43) Veröffentlichungstag der Anmeldung: 09.10.2024
(73) Patentinhaber: Grimm, Friedrich, 70376 Stuttgart (DE)
(72) Erfinder: Grimm, Friedrich, 70376 Stuttgart (DE)
(74) Vertreter: RDL Patentanwälte PartG mbB
(86) Internationale Anmeldenummer: PCT/EP2022/080886
(87) Internationale Veröffentlichungsnummer: WO 2023/099117

(56) Entgegenhaltungen:
- WO-A1-85/00573
- GB-A- 1 023 766
- GB-A- 2 386 884
- US-A- 5 114 104

## Beschreibung

Die Erfindung betrifft eine Vorrichtung mit einem asymmetrischen Flügelprofil und mit einer Verstellvorrichtung.

Die Vorrichtung mit dem asymmetrischen Flügelprofil und mit der Verstellvorrichtung kann sowohl als Wind- und Wasserturbine, als auch als Luftfahrzeug ausgebildet sein. Dabei sind auch Ausführungen möglich, die mehrere dieser Eigenschaften aufweisen, beispielsweise ein Luftfahrzeug, das auch als Wind- und Wasserturbine einsetzbar ist oder diese aufweist.

Der Oberbegriff Luftfahrzeug betrifft im Rahmen der Erfindung insbesondere Drehflügelfahrzeuge wie Hubschrauber, aber auch Flugzeuge mit Tragflächen. Bei Luftfahrzeugen setzt sich die Anströmung aus der Fahrt- oder Fluggeschwindigkeit, der Geschwindigkeit des Windes, und der Geschwindigkeit des jeweiligen Flugmanövers, sowie im Falle von Hubschraubern zusätzlich aus der Umlaufgeschwindigkeit der Rotorblätter zusammen und bildet eine resultierende bzw. relative Anströmung, während bei Wind- und Wasserturbinen die Anströmung aus der Geschwindigkeit der jeweiligen Strömung und aus der Umlaufgeschwindigkeit der Rotorblätter resultiert.

### Stand der Technik

Verstellbare Rotorblätter für Wind- oder Wasserturbinen und für Drehflügelfahrzeuge, wie Wasserfahrzeuge, Luftfahrzeuge und insbesondere für Hubschrauber, sind an sich bekannt. Verstellbare Flügelprofile sind bei Flugzeugen z.B. an den Tragflächen ausgebildet, an denen Teile des Leitwerks, wie Querruder, LandeklappenTrägerverkleidungen, sowie Vorflügel mit sich bei Betätigung öffnenden Luftspalten und einer Vielzahl von beweglichen Klappen vorgesehen sind, welche die idealerweise laminare Umströmung des variablen Flügelprofils einer Tragfläche empfindlich stören. Bekannte Lösungen für die Blattverstellung von Rotorblättern mit einem symmetrischen oder asymmetrischen Flügelprofil nutzen ein Getriebe mit Schubstangen, sodass die Rotorblätter in einem Umlauf abrupten Lastwechseln unterworfen sind. Dabei ändert sich der Anstellwinkel der Profilsehne des Rotorblatts z.B. bei einem Hubschrauber oder bei einer Windturbine mit vertikaler Rotationsachse oder auch bei einem Voith-Schneiderpropeller schlagartig. Dadurch ausgelöste heftige Lastwechselreaktionen übertragen sich unmittelbar auf die Struktur eines Drehflügelfahrzeugs und einer Wind- oder Wasserturbine, bewirken dabei extreme dynamische Beanspruchungen des jeweiligen Gesamtsystems und breiten sich in dem umgebenden Fluid als Druckwellen aus. Das wohl prominenteste Beispiel einer derartigen Drehflügelkinematik ist ein Hubschrauber. Gegenüber einem Starrflügelflugzeug hat der Hubschrauber den Vorteil, dass er ohne Lande- und Startbahn auskommt und senkrecht starten und landen kann. Die Fähigkeit des Schwebeflugs, d.h. im Stand in der Luft stehen zu bleiben, und die Möglichkeit, seitwärts zu fliegen oder eine langsame Drehung um die Hochachse auszuführen, sind weitere spezifische Vorteile dieses Drehflüglers. Den Vorteilen stehen jedoch einige Nachteile entgegen, die im Folgenden kurz erwähnt werden. Der Hubschrauber ist nicht eigenstabil, sein Schwerpunkt liegt oberhalb des Rumpfs, sodass der Pilot durch kontinuierliches Steuern die jeweilige Fluglage nachjustieren muss. Durch Verschiebung der Taumelscheibe nach oben oder unten wird der Anstellwinkel der Rotorblätter unmittelbar geändert, wodurch sich der Auftrieb des Hauptrotors erhöht oder vermindert, sodass der Hubschrauber steigt oder sinkt. Allein dieses Flugmanöver ist mit einer Änderung der Motor- bzw. Turbinenleistung verbunden und erfordert ein Gegensteuern mittels des Heckrotors. Beim Geradeausflug werden die Taumelscheibe und die Rotorebene in Flugrichtung geneigt. Die Höchstgeschwindigkeit eines Hubschraubers ist durch die Aerodynamik der Rotorblätter begrenzt, da das jeweils nach vorne laufende Blatt durch die anströmende Luft eine höhere Geschwindigkeit hat als das nach hinten laufende Rotorblatt. Dadurch entsteht ein Ungleichgewicht zwischen dem vorlaufenden Blatt und dem nachlaufenden Blatt. Bei dem vorlaufenden Blatt überlagern sich die Fahrtgeschwindigkeit und die Umlaufgeschwindigkeit, sodass bei einem Rotordurchmesser von z.B. zehn Metern an den Blattspitzen sehr schnell die Schallgeschwindigkeit überschritten wird. Wird dieser Punkt erreicht, sind damit nicht nur aerodynamische Nachteile, sondern auch eine unangenehme Lärmentwicklung verbunden. Deshalb liegt die Spitzengeschwindigkeit eines Hubschraubers bei etwa 200-300 km/h, wobei ein Kampfhubschrauber eine Geschwindigkeit von mehr als 400 km/h erreichen kann. Dabei ist der Hubschrauber sehr starken Vibrationen ausgesetzt, die durch die Taumelscheibe verursacht werden. Zu der im Vergleich zu einem Starrflügelflugzeug geringeren Fahrtgeschwindigkeit dieses Luftfahrzeugs kommt eine begrenzte Gipfelhöhe, die typischerweise bei 5.000 Metern liegt und bei einem Kampfhubschrauber bis zu 12.000 Meter betragen kann. Die Flugleistung geht mit einem erhöhten Treibstoffverbrauch einher. Als eine Sonderform des Hubschraubers hat sich der Gyrokopter als Kleinflugzeug etabliert. Die Fähigkeit der Autorotation bei Triebwerksausfall und die Möglichkeit die Rotorblätter an der Rotationsachse platzsparend zusammenzulegen, eröffnet die Möglichkeit eines individuellen Mobilitätsangebots, das die Vorteile eines Kraftfahrzeugs mit den Vorteilen eines Kleinflugzeugs auf sich vereinigt. Die systembedingten Nachteile der Drehflügelkinematik eines Hubschraubers bleiben jedoch erhalten. Auf dem Gebiet der Steuerungstechnik sind hier aktuelle Entwicklungen zu Aktuatoren für eine elektromagnetische Ventilsteuerung bei Verbrennungsmotoren zu nennen. Bei Verbrennungsmotoren sind Drehzahlen von 7000 U/min üblich, sodass die dort benötigte hohe Frequenz und Standfestigkeit eines elektromagnetischen Aktuators für die Steuerung der Drehflügelkinematik eines Hubschraubers besonders geeignet erscheint. Aktuelle Entwicklungen für Drehflügelfahrzeuge greifen das Prinzip des Voith-Schneider-Propellers als Flugzeugantrieb auf. Der Voith-Schneider-Propeller ist kein reiner Auftriebsläufer, sondern stößt sich mit seiner speziellen Drehflügelkinematik an bestimmten Stellpositionen des Rotors von dem jeweiligen Fluid ab, woraus große Belastungen des Getriebes und eine nach oben begrenzte Umlaufgeschwindigkeit resultieren. Der Voith-Schneider-Propeller hat zwar einen guten Wirkungsgrad bei geringer Fahrtgeschwindigkeit, die Antriebsleistung nimmt jedoch mit zunehmender Fahrtgeschwindigkeit eines Wasserfahrzeugs rapide ab, sodass bei etwa sieben Knoten eine Obergrenze erreicht wird und deshalb die Anwendung dieses Schiffspropellers auf langsam fahrende Wasserfahrzeuge wie Schlepp- und Bugsierfahrzeuge sowie auf pendelnde Fahren und andere auf kurze Fahrstrecken spezialisierte Wasserfahrzeuge beschränkt ist. Windkraftanlagen mit einer vertikalen Rotationsachse sind als sog. Darrieus-Rotoren nach ihrem Erfinder benannt und haben im Vergleich zu Windkraftanlagen mit einer horizontalen Rotationsachse den großen Vorteil, dass sie nicht zu der jeweiligen Strömungsrichtung ausgerichtet werden müssen. Der Darrieus-Rotor läuft leise, da er sein Leistungsoptimum bereits bei einer Schnelllaufzahl erreicht, die dem drei- bis vierfachen der Windgeschwindigkeit entspricht. Die Rotorblätter sind mit einem radialen Abstand zu der Rotationsachse angeordnet und haben ein symmetrisches Flügelprofil. Ausgehend von dem Betz'schen Gesetz, das für die Nutzung der in einem Strömungsquerschnitt gespeicherten kinetischen Energie die theoretische Obergrenze mit 16/27-zigstel des Gesamtinhalts der kinetischen Energie des Strömungsquerschnitts feststellt, erreichen bekannte Vertikalachsrotoren mit einem symmetrischen Flügelprofil der Rotorblätter nur einen Wirkungsgrad von etwa 30% bis maximal 45%, während der maximale Wirkungsgrad bei Horizontalachsrotoren mit einem asymmetrischen Flügelprofil bei mehr als 50% liegt. Dieser deutliche Unterschied kann damit erklärt werden, dass ein symmetrisches Flügelprofil bei gleichen Anströmungsbedingungen nur etwa zwei Drittel des Auftriebs eines asymmetrischen Flügelprofils liefert. Als Möglichkeit einer extensiven Nutzung der Wasserkraft kommen Küstenabschnitte in Betracht, an denen bestimmte Reliefausbildungen hohe, durch Ebbe und Flut hervorgerufene Strömungsgeschwindigkeiten bewirken, wie dies z.B. beim Oosterscheldesperrwerk in den Niederlanden der Fall ist. Zwischen den Pfeilern dieses Sperrwerks strömt das in der Oosterschelde angestaute Wasser bei Ebbe mit einer hohen Strömungsgeschwindigkeit bisher ungenutzt in die Nordsee. Gezeitenkraftwerke und Meeresströmungskraftwerke werden in Zukunft eine entscheidende Rolle bei der Gewinnung regenerativer Energie spielen. Der weitere Ausbau der Wasserkraft im Inland leidet unter dem Zielkonflikt zwischen der Stromgewinnung an Querbauwerken der Flusslaufe und der damit verbundenen Konsequenz einer Unterbrechung der natürlichen Wanderwege für Fische und kann deshalb mit den bisherigen Techniken zur Gewinnung der Wasserkraft nicht einfach fortgesetzt werden.

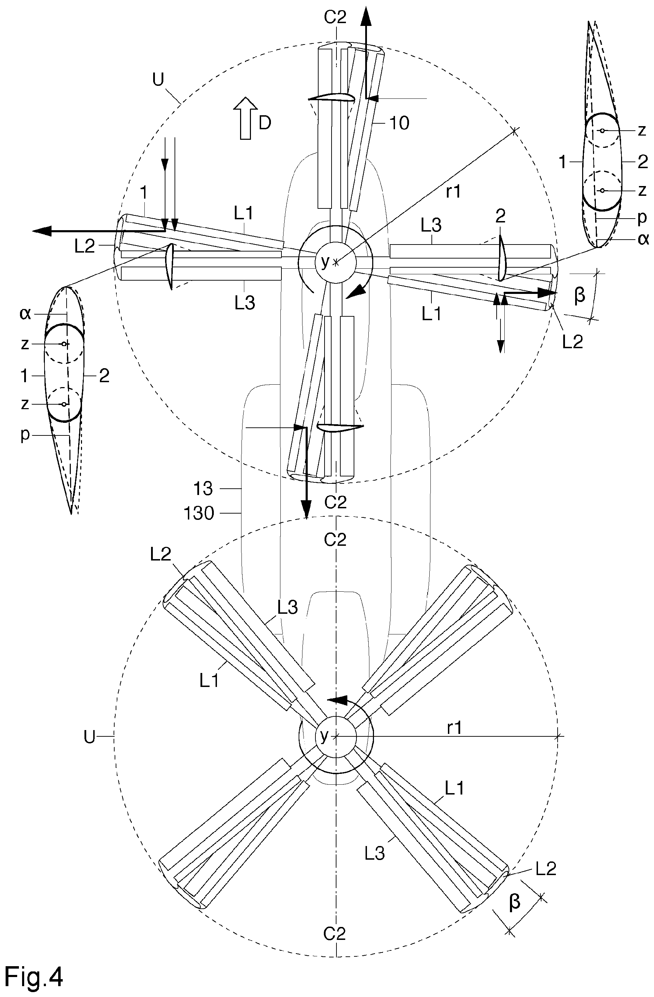

Aus der US 4 383 801 A geht ein verschwenkbares Rotorblatt für eine Windturbine mit vertikaler Rotationsachse hervor, das in der bevorzugten Ausführungsform einteilig ausgebildet ist, aber wie dort in Fig. 4 gezeigt auch zwei- oder dreiteilig ausgebildet sein kann und mittels eines externen Getriebes an der der Rotationsachse verstellt wird. Aus der DE 10 2020 007 543 B3 geht eine Windkraftanlage mit einer vertikalen Rotationsachse hervor, bei der die die Saugseite der Rotorblätter in einem Umlauf des Rotors zweimal von der Außenseite auf die Innenseite der Umlaufbahn wechselt. Eine von Schläuchen gebildete pneumatische Verstellvorrichtung bewegt das vordere und das hintere Flügelsegment der dreiteilig aufgebauten Rotorblätter.

Aus der US 2017 / 0 051 720 A1 geht eine Windturbine mit vertikaler Rotationsachse hervor, bei der die Saugseite mehrteilig ausgebildeter, verstellbarer Rotorblätter mittels von Seilzügen oder Schubstangen und mittels von Getrieben in einem Umlauf des Rotorblatts jeweils zur Leeseite ausrichtbar ist.

Aus der DE 38 25 241 A1 geht eine Windturbine mit vertikaler Rotationsachse hervor, bei der aus Segmenten zusammengesetzte Rotorblätter mit einem tragenden Mittelholm aus Stahl und mit Ballastgewichten ausgestattet sind, wobei mindestens das Segment mit der Hinterkante beweglich ist.

Aus der DE 10 2010 047 918 A1 geht eine Windturbine mit horizontaler Rotationsachse hervor, bei der die Hinterkanten der Rotorblätter mittels von pneumatischen Muskeln beweglich ausgebildet sind, um im Sinne einer Leistungssteigerung des Rotors die Rotorblätter an die jeweilige aerodynamische Belastung anzupassen.

Aus der US 5 114 104 A geht ein verstellbares Rotorblatt hervor, bei dem zwischen einem Nasen- und einem Hinterkantensegment des Rotorblatts eine kinematische Kette vorgesehen ist, um das in einer Grundstellung symmetrische Flügelprofil in ein asymmetrisches Flügelprofil zu wandeln.

Aus der DE 10 2008 025 414 A1 geht ein aerodynamisch verformbares Profil mit einer mittels von Aktuatoren reversibel verformbaren Kontur für Luftfahrzeuge und insbesondere für Drehflügelflugzeuge hervor, bei dem eine Deckhaut mit einem schubweichen Sandwichkern sowie mit quer zur Verformungsrichtung angeordneten biegeweichen Stegen verbunden ist.

Aus der US 2010 / 0 247 314 A1 geht ein Rotorblatt für eine Windturbine mit einer verstellbaren Hinterkante hervor, bei dem paarweise angeordnete Aktoren jeweils einen Stapel von piezoelektrischen Elementen aufweisen, sodass die Verstellung der Rotorblatthinterkante durch eine Längenänderung der piezoelektrischen Elemente bewirkt wird.

Aus der DE 699 16 360 T2 geht ein Tragflächenprofil für ein Flugzeug mit beweglicher Vorder- und Hinterkante hervor. Das Flügelprofil weist an der Flügelnase zwei elastisch verformbare Elastomerplatten auf, die mittels eines Drehaktuators verstellbar sind, während die Flügelhinterkante mittels eines Linearaktuators verstellbar ist.

Aus der US 3 716 209 A geht eine verstellbare Flügelnase für die Tragfläche eines Flugzeugs hervor, bei der die Profilkontur mittels einer von Druckstäben gebildete kinematische Struktur und mittels eines drehbaren Nasensegments aufrecht erhalten wird.

Aus der KR 10 2012 0 041 722 A geht eine Windkraftanlage mit vertikaler Rotationsachse und mit dreiteiligen Rotorblättern hervor, bei der die Blattverstellung mittels einer Translationsbewegung von Aktuatoren für das vordere und das hintere Flügelsegment bewirkt wird.

Aus der WO 2017 / 089 047 A1 geht eine Windkraftanlage mit vertikaler Drehachse hervor, bei der einteilige Rotorblätter drehbar auf einer Kreisbahn gelagert sind und mit einer gewölbten Oberseite in Leerichtung ausrichtbar sind.

Aus der DE 10 2010 011 708 A1 geht eine Turbine mit passiver Schaufelstellung hervor, bei der ein Getriebe mit einem Gestänge eine Verstellung der Rotorblätter derart ermöglicht, dass sich die Saugseite jeweils leeseitig zur Windrichtung ausrichtet.

Aus der DE 10 2017 011 890 A1 geht ein Fluggerät hervor, bei dem eine Drehflügelkinematik mit einem außerhalb des Rotorblatts liegenden Gestänge realisiert wird.

Aus der US 9 346 535 B1 geht ein Flugzeug mit einer Drehflügelanordnung hervor, bei der die Blattverstellung einteilig ausgebildeter Rotorblätter mittels eines zykloiden Getriebes mit Gestänge erfolgt.

Aus der US 2008/0 011 900 A1 geht eine Drehflügelanordnung für ein Luftschiff hervor, bei der die Rotorblätter mittels eines Getriebes mit Gestänge verstellt werden. Aus der WO 2017 112 973 A1 geht ein Luftfahrzeug mit Drehflügelrotoren hervor, deren Rotorblätter mittels eines Getriebes und eines Gestänges in einem Umlauf des Drehflügelrotors verstellbar sind.

Die GB 1 023 766 A zeigt eine Vorrichtung, welche ein asymmetrisches Flügelprofil und eine Verstellvorrichtung aufweist, welches asymmetrische Flügelprofil ein Profildicke und eine sich zwischen einer Flügelnase und einer Flügelhinterkante erstreckende Profilsehne aufweist, welches asymmetrische Flügelprofil in mindestens einem Längsabschnitt ein dreiteiliges variables Flügelprofil aufweist, bei dem ein vorderes und ein hinteres Flügelsegment mittels von zwei Scharnieren mit Drehachsen an ein mittleres Flügelsegment angelenkt sind und dazu eingerichtet sind, gegenüber dem mittleren Flügelsegment eine Drehbewegung um die zugeordnete Drehachse zu ermöglichen, wobei ein simultanes Ein- oder Ausdrehen des vorderen und hinteren Flügelsegments mit zueinander gegensinniger Drehrichtung möglich ist, und wobei sich der Anstellwinkel der Profilsehne beim Ein- oder Ausdrehen ändert.

### Aufgabenstellung

Ausgehend von dem dargestellten Stand der Technik liegt der Erfindung die Aufgabe zugrunde eine neue Vorrichtung mit einem asymmetrischen Flügelprofil und mit einer Verstellvorrichtung bereitzustellen, die dazu ausgebildet ist, den aus der Anströmung des asymmetrischen Flügelprofils resultierenden Auftrieb an einer Vorrichtung zu beeinflussen. Diese Aufgabe wird durch den Gegenstand des Anspruchs 1 gelöst.

Eine Vorrichtung hat ein asymmetrisches Flügelprofil und eine Verstellvorrichtung. Das asymmetrische Flügelprofil weist eine Profildicke und eine sich zwischen einer Flügelnase und einer Flügelhinterkante ersteckende Profilsehne auf. In mindestens einem Längsabschnitt weist das asymmetrische Flügelprofil ein dreiteiliges variables Flügelprofil auf, bei dem ein vorderes und ein hinteres Flügelsegment mittels von zwei Scharnieren mit Drehachsen an ein mittleres Flügelsegment angelenkt sind und dazu eingerichtet sind, gegenüber dem mittleren Flügelsegment eine Drehbewegung um die zugeordnete Drehachse zu ermöglichen. Das mittlere Flügelsegment ist als ein in sich starres Gehäuse für die Aufnahme einer Verstellvorrichtung ausgebildet und weist als ein Längsträger des asymmetrischen Flügelprofils ein Hohlprofil auf, das in mindestens einem Längsabschnitt ein Widerlager für die Verstellvorrichtung bildet. Die Verstellvorrichtung ist dazu eingerichtet, mit Hilfe des mindestens einen Elektromotors ein simultanes Ein- oder Ausdrehen des vorderen und des hinteren Flügelsegments mit zueinander gegensinniger Drehrichtung derart zu ermöglichen, dass eine variable Saugseite des asymmetrischen Flügelprofils bewirkt wird, und sich bevorzugt der Anstellwinkel der Profilsehne beim Ein- oder Ausdrehen des vorderen und hinteren Flügelsegments ändert.

Weitere vorteilhafte Eigenschaften und Ausführungsbeispiele der Erfindung gehen aus den Unteransprüchen hervor.

Im Einzelnen hat die Erfindung bevorzugt folgende vorteilhafte Eigenschaften bzw. Ausführungsformen:
- Angabe eines Rotorblatts für Wind- oder Wasserturbinen, das an zehn von zwölf exemplarisch dargestellten Umlaufpositionen eine aus dem Auftrieb abgeleitete tangentiale Antriebskraft erzeugt,
- Angabe eines Rotorblatts für ein Drehflügelfahrzeug, das an zehn von zwölf exemplarisch dargestellten Umlaufpositionen eine aus dem Auftrieb abgeleitete in jede beliebige Fahrtrichtung wirkende Schubkraft erzeugt,
- Angabe eines gerade, bügelförmig, oder polygonzugförmig ausgebildeten Rotorblatts,
- Angabe eines dreiteiligen Flügelprofils, dessen Oberflächen photovoltaische Zellen tragen,
- Angabe eines Rotorblatts für eine Windturbine mit Betriebsstellungen für die Windstärken 3-5 und 5-9 sowie 9-12 entsprechend der Beaufort-Skala,
- Angabe von zwei auf der Umlaufbahn einander gegenüber liegenden Verstellsektoren für die Vermeidung abrupter Lastwechsel der Anströmung,
- Angabe einer vollelektrischen, berührungslosen Verstellvorrichtung für ein Rotorblatt mit einem dreiteiligen Flügelprofil,
- Angabe einer elektromechanischen Verstellvorrichtung mit Kegelradgetriebe oder mit Zylindergesperren für das dreiteilige Flügelprofil einer Wasserturbine,
- Angabe eines Rotorblatts, das mindestens an einem Ende direkt oder indirekt mit einem Motorgenerator verbunden ist,
- Angabe eines von Lamellen gebildeten Blechpakets für den Stator einer elektrischen Verstellvorrichtung,
- Angabe einer Wasserturbine mit einem scheibenförmigen Schwimmkörper,
- Angabe eines für Fische passierbaren Querbauwerks mit einer Mehrzahl von Wasserturbinen,
- Angabe eines Sturmflutsperrwerks mit Wasserturbinen,
- Angabe elektromechanischer Verstellvorrichtungen für die Rotorblätter von Wasserturbinen,
- Angabe vollelektrischer Verstellvorrichtungen der Rotorblätter für Drehflügelflugzeuge und insbesondere für Hubschrauber,
- Angabe einer Tragfläche für ein Flugzeug mit einer variablen Profilsehne und einer variablen Flügelwölbung der Saugseite,
- Angabe einer Windturbine mit einer horizontalen Rotationsachse für radiale Rotorblätter in einer Rotationsebene,
- Angabe einer Pitch-Stall Regulierung für eine Windturbine mittels eines negativen Anstellwinkels der Profilsehne des dreiteiligen Flügelprofils,
- Angabe einer Wind- oder Wasserturbine für eine diametral die Richtung wechselnde Luft- oder Wasserströmung,
- Angabe eines Drehflügelantriebs für eine diametral die Richtung wechselnde Luft- oder Wasserströmung,
- Angabe eines horizontalen Speichenrads mit einer vertikalen Rotationsachse, dessen äußerer Ringträger eine Mehrzahl zu der Rotationsachse parallel ausgerichteter Rotorblätter trägt,
- Angabe eines horizontalen Speichenrads mit einer Seilverspannung für den Längsträger des Rotorblatts,
- Angabe eines horizontalen, seilverspannten Speichenrads mit senkrecht angeordneten Hängeseilen die einen polygonzugförmigen Verlauf der radialen Trag- und Spannseile bewirken
- Angabe eines in zwei Richtungen wirksamen Querstrahlruders,
- Angabe gerader, einachsig gekrümmter Rotorblätter, die beidseitig mit PV Zellen beschichtet sind,
- Angabe eines von einer Boje gebildeten gemeinsamen Schwimmkörpers für eine Windturbine und für eine Wasserturbine, mit vertikaler Rotationsachse.

### Vollelektrische Verstellvorrichtungen

Bei einer bevorzugten Ausführungsvariante ist die Verstellvorrichtung vollelektrisch ausgebildet und besteht aus einem doppelseitig wirksamen Schrittmotor mit Stator und Läufer.

Der Schrittmotor ist in das von dem mittleren Flügelsegment gebildete Gehäuse integriert, das als Längsträger des Flügelprofils in jedem Längsabschnitt des Flügelprofils ein Widerlager für den Stator mit zwei auf der Umlaufbahn einander gegenüber liegenden, Erregerwicklungen für die beiden Läufer des radialen Schrittmotors bildet. Die Läufer sind an Hebelarme des vorderen und hinteren Flügelsegments angelenkt und drehen sich jeweils um die Drehachsen der Scharniere des mittleren Flügelsegments und bilden dabei Gegengewichte zu dem vorderen und dem hinteren Flügelsegment des Rotorblatts, sodass mit alternierend gepolten Permanentmagneten der Läufer ein beidseitiger Luftspalt für eine berührungslose magnetische bzw. elektromagnetische Verbindung zwischen dem mittleren Flügelsegment und den vorderen und hinteren Flügelsegmenten hergestellt wird. Durch Umpolung der Erregerwicklungen des Stators wird das elektrische Ein- und das Ausdrehen des vorderen und des hinteren Flügelsegments jeweils mit gegensinniger Drehrichtung simultan bewirkt. Bei einer weiteren besonders vorteilhaften Ausführungsvariante für eine rein elektrische Blattverstellung des Rotorblatts wird die Verstellvorrichtung von zwei in das mittlere Flügelsegment des Rotorblatts integrierten Linearmotoren gebildet. Die Läufer der Linearmotoren sind dem vorderen und dem hinteren Flügelsegment zugeordnet und mit einem Hebelarm an das mittlere Flügelsegment angelenkt. Mittels einer Steuerungseinheit wechselt die Saugseite des variablen Flügelprofils jeweils an den Stellpositionen eines im Vollwinkel frei einstellbaren Durchmessers der Umlaufbahn zweimal die Orientierung von der Innenseite zur Außenseite der Umlaufbahn. Die Stellfunktion der beiden Läufer wird durch Anlegen einer elektrischen Spannung aktiviert, wobei alternierend gepolte Permanentmagnete mit einer umpolbaren Erregerwicklung des Stators interagieren, sodass mittels einer oszillierenden Linearbewegung der Linearmotoren der Neigungswinkel der Profilsehne des Rotorblatts z.B. an einem Hubschrauber, in einer Sekunde bis zu 30 Lastwechsel durchlaufen kann. Jeder Läufer weist zwei Zungen jeweils mit einer Reihe alternierend gepolter Permanentmagnete auf. Ein beidseitiger Luftspalt zwischen dem Stator und den Permanentmagneten des Läufers stellt eine direkte, berührungslose (magnetische) Wirkverbindung zwischen dem mittleren Flügelsegment und den vorderen und hinteren Flügelsegmenten her. Durch gesteuerte Umpolung der Erregerwicklungen des Stators wird das simultane gegensinnige Ein- und das Ausdrehen des vorderen und des hinteren Flügelsegments bewirkt.

### Elektromechanische Verstellvorrichtungen

Bei einer besonders vorteilhaften Ausführungsvariante für das Ein- und Ausdrehen des vorderen und des hinteren Flügelsegments ist eine elektromechanische Verstellvorrichtung vorgesehen, bei der Elektromotoren mit einem Schritt-Rastgetriebe für Halteelemente in jedem Längsabschnitt des asymmetrischen Flügelprofils ausgebildet sind. In einer ersten Ausführungsvariante ist für die Arretierung des vorderen und des hinteren Flügelsegments die Welle des Elektromotors quer zu der Längsachse des Rotorblatts angeordnet und mit Zylindergesperren verbunden. Bei einer zweiten Ausführungsvariante ist die Welle des Elektromotors parallel zu den Drehachsen der Scharniere des mittleren Blattsegments angeordnet und arretiert die vorderen und hinteren Blattsegmente mittels eines Schneckenrads. Im Falle eines Rotorblatts wechselt die Drehrichtung des Elektromotors mit dem Schritt-Rastgetriebe in einem Umlauf des Rotorblatts jeweils an den Stellpositionen der Umlaufbahn. Bei einer weiteren vorteilhaften elektromechanischen Ausführungsvariante für das simultane Ein- und Ausdrehen des vorderen und des hinteren Flügelsegments des asymmetrisches Flügelprofils sind Linearmotoren koaxial und konzentrisch zu den Drehachsen angeordnet und betätigen Schieber. Dabei greifen Gewinde des vorderen und des hinteren Blattsegment in Gewinde des von dem Linearmotor bewegten Schiebers ein und bewirken die gegensinnige Drehbewegung des vorderen und hinteren Blattsegments. Luftlager zwischen den Gewinden der Scharniere sowie zwischen dem Läufer und dem Stator halten die Reibungskräfte gering und werden durch das Hohlprofil der Scharniere mit Druckluft versorgt. Bei einem Linearmotor kann das elektromagnetisch induzierte Feld der Erregerwicklungen bauartbedingt entweder parallel oder senkrecht zu der Bewegungsrichtung des Läufers ausgerichtet werden. Der Linearmotor erlaubt eine exakte Positionierung des als Läufer ausgebildeten Schiebers, sodass der positive Anstellwinkel für die Blattsegmente exakt eingestellt und variiert werden kann. Die Verstellvorrichtung mit der Stell- und Haltefunktion ist dazu ausgebildet, beträchtliche aerodynamisch bewirkte Sogkräfte sowie im Fall eines Rotorblatts Zentrifugalkräfte aufzunehmen, wobei das vordere und das hintere Flügelsegment in jedem Längsabschnitt individuell verstellbar und arretierbar sind. Die geringe Steigung der Gewinde ermöglicht eine Übersetzung der Verstellkraft von bevorzugt 1 zu 10.

### Rotorblatt und Rotormodul

Das Rotorblatt mit dem asymmetrischen Flügelprofil ist in eine Mehrzahl von Längsabschnitten untergliedert und gerade, bügelförmig oder polygonzugförmig ausgebildet. Eine Mehrzahl von Rotorblättern, die an mindestens einem Ende mit einem Motorgenerator verbunden sind, bilden ein Rotormodul. Das Rotormodul rotiert um eine Rotationsachse auf einer durch einen Radius definierten Umlaufbahn, die durch einen im Umkreis von 360 Grad frei einstellbarer Durchmesser mit zwei Stellpositionen in zwei Hälften unterteilbar ist. Die Saugseiten des variablen Flügelprofils werden mittels der Verstellvorrichtung in einer ersten Hälfte der Umlaufbahn zu der Außenseite und in einer zweiten Hälfte zu der Innenseite der Umlaufbahn orientiert. An dem Durchmesser mit den Stellpositionen nimmt das asymmetrische Flügelprofil temporär die Gestalt eines symmetrisches Flügelprofil an, dessen Profilsehne tangential zu der kreisförmigen Umlaufbahn des Rotormoduls ausgerichtet ist. Durch das simultane Ein- und Ausdrehen des vorderen und hinteren Flügelsegments, jeweils mit gegensinniger Drehrichtung, erhält die Profilsehne einen Anstellwinkel, der in beiden Hälften der Umlaufbahn einen positiven Betrag aufweist. Das mittlere Flügelsegment bildet in jedem Längsabschnitt des asymmetrischen Flügelprofils ein Gehäuse für die von mindestens einem Elektromotor gebildete Verstellvorrichtung und bildet einen Längsträger des Rotorblatts mit einem kastenförmigen Hohlprofil, dessen auf der Umlaufbahn einander gegenüberliegenden Flansche einen Teil der Oberfläche des asymmetrischen Flügelprofils bilden. Eine Vielzahl der als Hohlprofile ausgebildeten Längsträger sind jeweils an Knotenpunkten mit queraussteifenden Ringträgern verbunden, sodass ein selbsttragendes, in sich biege-, schub- und torsionssteifes Rotormodul gebildet wird. Das gerade, bügelförmig oder polygonzugförmig ausgebildete Rotorblatt eines Rotormoduls ist in mindestens einem Längsabschnitt parallel zu der Rotationsachse ausgerichtet. An den im Vollwinkel frei einstellbaren Stellpositionen eines Durchmessers der Umlaufbahn wird die von Elektromotoren gebildete Verstellvorrichtung derart betätigt, dass die Saugseite des variablen Flügelprofils in einem Umlauf des Rotorblatts von der Außen- auf die Innenseite der Umlaufbahn wechselt und umgekehrt. Dabei sind das vordere und das hintere Flügelsegment jeweils an den Stellpositionen in den Drehachsen der Scharniere des mittleren Flügelsegments mit gegensinniger Drehrichtung um bis zu acht Grad gegenüber dem mittleren, von dem Längsträger gebildeten Flügelsegment verstellbar, sodass ein positiver Anstellwinkel der Profilsehne in beiden Hälften der Umlaufbahn des variablen Flügelprofils entweder elektromagnetisch mittels des Luftspalts zwischen den Läufern und den Statoren der Elektromotoren oder mittels von Halteelementen eines mit den Elektromotoren verbundenen Schrittrastgetriebes beibehalten wird. Zwischen den Flügelsegmenten des dreiteilig ausgebildeten Flügelprofils sind Gelenkspalte zwischen dem vorderen Flügelsegment mit der Flügelnase und dem mittleren im Bereich der maximalen Profildicke des Flügelprofils angeordneten Flügelsegment und dem hinteren Flügelsegment mit der Flügelhinterkante ausgebildet, sodass bevorzugt mit Ausnahme der Gelenkspalte die Flügeloberflächen des dreiteiligen Flügelprofils vollflächig photovoltaische Zellen tragen können.

### Drehflügelturbinen und Drehflügelfahrzeuge

Im Unterschied zu einer Drehflügelturbine sind bei einem Drehflügelfahrzeug die Saugseiten des asymmetrischen Flügelprofils an dem im Vollwinkel frei einstellbaren Durchmesser mit den Stellpositionen auf der Umlaufbahn der Rotorblätter in beiden Hälften der Umlaufbahn des Rotormoduls zu der jeweiligen Fahrtrichtung ausrichtbar und dazu ausgebildet Schub in Flug- bzw. in Fahrtrichtung oder Umkehrschub entgegen der Flug- bzw. der Fahrtrichtung zu erzeugen. Im Falle einer Wind- oder Wasserturbine sind die Saugseiten des asymmetrischen Flügelprofils an dem im Vollwinkel frei einstellbaren Durchmesser mit den Stellpositionen auf der Umlaufbahn unabhängig von einer horizontal oder vertikal ausgerichteten Rotationsachse zu der Leeseite der Strömung ausrichtbar. Eine besonders vorteilhafte Ausführungsform betrifft Drehflügelturbinen und Drehflügelfahrzeuge, bei denen die Richtung der Strömung regelmäßig diametral wechselt. Dies ist z.B. bei einem Wellenkraftwerk mit einer Luftkammer der Fall, bei dem die Welle ein Luftvolumen aus der Luftkammer verdrängt, sodass eine auflandige Luftströmung genutzt wird, um eine Windturbine anzutreiben, wobei mit einer von der rückströmenden Welle erzeugten ablandigen Luftströmung die Windturbine unter Beibehaltung der Drehrichtung weiter angetrieben wird, indem die Saugseite von radialen in einer Rotationsebene angeordneten Rotorblättern mittels der Verstellvorrichtung jeweils zur strömungsabgewandten Seite wechselt. Eine periodisch die Richtung wechselnde Strömung wird auch durch Gezeitenströmungen erzeugt, sodass eine Wasserturbine prinzipiell den gleichen Aufbau zeigt wie die Windturbine.

Sowohl für die Wind- als auch für die Wasserturbine ist dabei von Vorteil, dass in einer neutralen Übergangsstellung beim Wechsel der Richtung der Strömung die Profilsehne des variablen Flügelprofils parallel zu der Rotationsebene angeordnet ist und mittels der Verstellvorrichtung die Profilsehne jeweils einen positiven Anstellwinkel von bis zu vier Grad gegenüber dem in einer Übergangsstellung temporär vorhandenen symmetrischen Flügelprofil aufweisen kann, sodass der von der resultierenden Anströmung erzeugte Auftrieb an der Rotationsebene eine maximale tangentiale Antriebskraft bewirkt. Als ein Pendant zu der Wind- oder Wasserturbine, die für eine diametral die Richtung wechselnde Strömung ausgelegt ist, wird ein von dem Motorgenerator angetriebenes Querstrahlruder für ein Wasserfahrzeug vorgeschlagen, bei dem die Saugseite der in einer Rotorebene radial angeordneten Rotorblätter mit dem asymmetrischen Flügelprofil bedarfsweise in Schubrichtung orientierbar ist, ohne dabei die Drehrichtung des Motorgenerators zu ändern.

### Drehflügelfahrzeuge und Flugzeuge

In einer Ausführungsform ist das Drehflügelfahrzeug als ein Hubschrauber ausgebildet, der entweder ein einzelnes Rotormodul, oder ein front- und heckseitiges, jeweils mit gegensinniger Drehrichtung rotierendes Rotormodul aufweist. Das Rotorblatt des Hubschraubers ist bügelförmig ausgebildet und weist ein asymmetrisches Flügelprofil auf, das an einem unteren in Drehrichtung des Rotormoduls vorauslaufenden Längsabschnitt an einem mittleren Längsabschnitt und an einem oberen, in Drehrichtung des Rotormoduls nachlaufenden Längsabschnitt ausgebildet ist. Dabei ist der untere Längsabschnitt gegenüber dem oberen Längsabschnitt in Umfangsrichtung mit einem Versatz von etwa 10 Grad angeordnet, wobei der mittlere Längsabschnitt den unteren mit dem oberen Längsabschnitt schräg verbindet und parallel zu der Rotationachse mit einer Steigung in Drehrichtung ausgebildet ist. In den unteren und oberen Längsabschnitten des Rotormoduls ist der Durchmesser mit den Stellpositionen jeweils in Flugrichtung und in dem mittleren Längsabschnitt jeweils quer zur Flugrichtung ausrichtbar. Bei einer besonders vorteilhaften Ausführungsvariante des Hubschraubers bildet ein aus vier bügelförmigen Rotorblättern aufgebautes Rotormodul zusammen mit einer mit dem tropfenförmig ausgebildeten Rumpf des Hubschraubers verbundenen heckseitigen Propelleranordnung ein hybrides Antriebssystem. Die vier bügelförmigen Rotorblätter rotieren jeweils paarweise und mit gegensinniger Drehrichtung um die Rotationachse des Rotormoduls und um den stromlinienförmig ausgebildeten Rumpf einschließlich einer heckseitigen Propelleranordnung, wobei ein bügelförmiges Rotorblatt jeweils einen oberhalb und unterhalb des Rumpfs parallel zu der Längsachse angeordneten Längsabschnitt aufweist und die Längsabschnitte jeweils an ihren äußeren Enden durch den mittleren parallel zu der Rotationsachse angeordneten Längsabschnitt verbunden sind. Dieser mittlere Längsabschnitt ist dazu ausgebildet aus dem Stand Schub in jede beliebige Flugrichtung zu erzeugen, indem der Durchmesser mit den Stellpositionen im Umkreis von 360 Grad jeweils senkrecht zu der gewünschten Flugrichtung ausrichtbar ist. Eine weitere besonders vorteilhafte Ausführungsform für das variable asymmetrische Flügelprofil mit der Verstellvorrichtung betrifft die Tragfläche eines Flugzeugs, bei dem in mindestens einem Längsabschnitt der Tragfläche das mittlere Flügelsegment als Gehäuse für einen Elektromotor ausgebildet ist, wobei das vordere und das hintere Flügelsegment des dreiteiligen Flügelprofils mit dem Halteelement einer von einem Schritt-Rastgetriebe gebildeten Verstellvorrichtung derart verbunden sind, dass durch die Betätigung der Verstellvorrichtung der von der Saugseite des variablen Flügelprofils bewirkte Auftrieb an die jeweilige Flugsituation des Flugzeugs anpassbar ist, wobei das Schritt-Rastgetriebe bevorzugt eine Übersetzung der Kraftübertragung von 1 zu 10 aufweist. Die Tragflächen weisen bei Auslegungsgeschwindigkeit des Flugzeugs bevorzugt einen Anstellwinkel von ungefähr zwei Grad gegenüber der Längsachse des Flugzeugs auf. Durch Betätigung der Verstellvorrichtung vergrößert sich nicht nur die Flügelwölbung des asymmetrischen Flügelprofils, sondern auch der Anstellwinkel auf einen Betrag von ungefähr drei bis vier Grad, sodass ein Steigflug allein durch die Betätigung der Verstellvorrichtung ermöglicht wird. Bei Start und Landung bewirkt eine maximale Flügelwölbung einen Anstellwinkel von bis zu sechs Grad. Deshalb kann auf ausfahrbare Vorflügel und Heckklappen, die aufgrund von durchlüfteten Spalten aerodynamisch nicht optimal sind, weitgehend verzichtet werden, sodass die Tragfläche mit dem starr mit dem Rumpf verbundenen Längsträger und beweglichen nasenseitigen und heckseitigen Flügelsegmenten keine herkömmliche Vorflügel und Klappen und keine Landeklappenträgerverkleidungen, sogenannte Kanus an der Flügelunterseite benötigt.

### Wind- und Wasserturbinen mit einer vertikalen Rotationsachse

Bei ersten Ausführungsformen für Wind- und Wasserturbinen rotieren die Rotorblätter eines Rotormoduls auf einer zylindrischen Umlaufbahn um eine vertikale Rotationsachse und wechseln an einem senkrecht zu der Strömungsrichtung ausrichtbaren Durchmesser der Umlaufbahn die Orientierung der Saugseite des asymmetrischen Flügelprofils. An dem Durchmesser mit den Stellpositionen wird bei einer Wind- oder Wasserturbine die Saugseite des asymmetrischen Flügelprofils des Rotorblatts mittels der Verstellvorrichtung in beiden Hälften der Umlaufbahn des Rotormoduls zu der jeweiligen Strömungsrichtung ausgerichtet. Eine besonders vorteilhafte Ausführungsform der Windturbine betrifft ein Rotormodul, das die durch Kreiselmomente hervorgerufene Massenträgheit für eine Stabilisierung der Rotationsachse des Rotormoduls gegenüber Richtungsänderungen nutzt. Das Rotormodul weist in diesem Fall ein Speichenrad auf, das in einer horizontalen Rotationsebene um eine vertikale Rotationsachse rotiert und bei dem Trag- und Spannseile einen äußeren, radial von der Rotationsachse beabstandeten Ringträger mit einer Nabe verbinden. Der als ein Druckring ausgebildete Ringträger trägt eine Mehrzahl von parallel zu der vertikalen Rotationsachse angeordnete gerade Rotorblätter. Die Längsträger der Rotorblätter sind biegesteif mit dem Ringträger verbunden und können zusätzlich mittels einer an dem Längsträger angreifenden Seilverspannung mit den Trag- und Spannseilen des Speichenrades stabilisiert werden. Die Nabe des Speichenrades ist an einem oberen und einem unteren Drehlager mit einer Tragkonstruktion der Windturbine derart verbunden, dass ein Luftspalt zwischen mindestens einem koaxial und konzentrisch zu der Rotationsachse angeordneten tragwerksseitigen Stator und mindestens einem nabenseitigen Läufer des Motorgenerators der Windturbine ausgebildet ist. Die Windkraftanlage mit dem Kreisel ist onshore oder offshore in einem Baugrund verankerbar, wobei die Kreiselwirkung bevorzugt für eine Windturbine genutzt wird, deren Tragkonstruktion einen als ballastierte Boje ausgebildeten Schwimmkörper aufweist, der mittels von Seilen und Ankern am Grund des Meeres verankerbar ist. Die oberen und unteren von Seilen gebildeten radialen Speichen können durch vertikale Hänger untereinander verbunden und in Umfangsrichtung trianguliert werden, sodass das Speichenrad eine Leichtbaukonstruktion mit überwiegend axial beanspruchten Traggliedern aufweist und deshalb mit einem Durchmesser von mehreren hundert Metern ausgebildet werden kann. Dabei gilt: Je größer der Durchmesser um so geringer die zentrifugale Beanspruchung der Rotorblätter. Dieser Zusammenhang gilt auch für Windturbinen, bei denen eine Mehrzahl von Rotormodulen vertikal übereinander gestapelt sind und von einem basisseitigen Speichenrad mit einem von einem Druckring gebildeten Ringträger getragen werden. In diesem Fall weisen eine Mehrzahl von Rotormodulen jeweils ein dreiteiliges asymmetrisches Flügelprofil auf, das an einem im Umkreis von 360° zur jeweiligen Windrichtung ausrichtbaren Durchmesser die Saugseite des Flügelprofils von der Außenseite zur Innenseite der Umlaufbahn wechselt und umgekehrt. Die Rotorblätter sind mit einem Radius von der vertikalen Rotationsachse beabstandet und jeweils an ihrem oberen und unteren Ende mit einem umfangsunterspannten Ringträger verbunden. Der basisseitige Ringträger weist Druckstäbe auf, die den von den gestapelten Rotormodulen gebildeten Rotor mit dem unteren Drehlager einer Nabe verbinden, während Paare von V-förmig angeordneten Zugspeichen mit dem oberen Drehlager der Nabe derart verspannt sind, dass zwischen dem oberen Drehlager und dem unteren Drehlager ein vertikaler Hebelarm gebildet wird, um das Kippmoment des Rotors über die Nabe in einen als Kragarm ausgebildeten Fuß der Windturbine abzuleiten. Mit einer Anströmfläche von beispielsweise 14.000 qm der filigranen zylinderförmigen seilverspannten Gitterschale wird bei Windgeschwindigkeiten bis zwölf m/s eine Spitzenleistung von ungefähr sieben MW erzielt, während bei Windgeschwindigkeiten von mehr als zwölf m/s die doppelte bis dreifache Leistung im Vergleich zu einer herkömmlichen Windturbine erzielbar ist, die bei dieser Windgeschwindigkeit nur gedrosselt weiter betrieben werden kann und bei Sturm ganz abgeschaltet wird. Wasserturbinen mit einer vertikalen Rotationsachse sind in einem Gewässer mit einer Strömung entweder in einem Querbauwerk des Fließgewässers, oder schwimmend verankert. Eine schwimmend ausgebildete Wasserturbine hat einen Schwimmkörper, der an der Wasseroberfläche schwimmt und einen ringförmigen getriebelosen Motorgenerator mit einer Welle aufnimmt und mittels von mindestens einem Anker und Ankerseilen am Grund des Gewässers verankert ist. Das Rotormodul der Wasserturbine ist unterhalb des Schwimmkörpers mit einem radialen Abstand zu der Rotationachse angeordnet und besteht aus einem oberen und einem unteren Ringträger die untereinander durch die Längsträger einer Mehrzahl dreiteiliger Rotorblätter verbunden sind und zusammen mittels einer radialen Seilverspannung mit der Welle des Motorgenerators ein biege-, schub- und torsionssteifes Rotormodul bilden.

Der Schwimmkörper ist entweder als ein rechteckiges Floß mit PV-Kollektoren (PV = Photovoltaik) an der Oberseite oder als eine diskusförmige Scheibe oder als ein Schwimmring ausgebildet. Als ein Gehäuse für die Elektromotoren der Verstellvorrichtung ist das im Bereich der maximalen Profildicke des asymmetrischen Flügelprofils angeordnete mittlere Flügelsegment vorgesehen, das einen in mehrere Längsabschnitte untergliederten Längsträger des asymmetrischen Flügelprofils und ein Widerlager für die gegenläufigen Drehbewegungen des vorderen Flügelsegments mit der Flügelnase und des hinteren Flügelsegments mit der Flügelhinterkante bildet.

Mittels der Verstellvorrichtung für die Flügelsegmente des dreiteiligen Flügelprofils ist der Anstellwinkel der Profilsehne des asymmetrischen Flügelprofils gegenüber einem temporär nutzbaren symmetrischen Flügelprofil derart verstellbar, dass aus dem Auftrieb des variablen Flügelprofils im Falle der Wind- oder Wasserturbine eine tangentiale Antriebskraft und im Falle des Drehflügelfahrzeugs eine Schubkraft ableitbar ist. Ein Rotorblatt, das gerade ausgebildet ist, rotiert auf einer ringförmigen Umlaufbahn in der Rotorebene um die Rotationsachse. Der von dem mittleren Flügelsegment gebildete Längsträger des Rotorblatts ist entweder an seinem äußeren oder an seinem inneren Ende als Blattwurzel ausgebildet und starr mit dem Motorgenerator verbunden, wobei die Verstellvorrichtung im Falle der Wind- oder Wasserturbine dazu ausgebildet ist, die Saugseite des variablen Flügelprofils in einer periodisch diametral die Richtung wechselnden Strömung zur Leeseite auszurichten.

### Wind- und Wasserturbinen mit einer horizontalen Rotationsachse

Bei Wind- oder Wasserturbinen rotiert das Rotormodul, das in einer vertikalen Rotationsebene um eine horizontale Rotationsachse rotiert. Dabei ist ein seilverspanntes Speichenrad mit einer Nabe und mit einem äußeren, als Druckring ausgebildeten Ringträger mittels eines Azimutlagers an einem Mast zu der jeweiligen Richtung der Strömung ausrichtbar, wobei eine Mehrzahl von Rotorblättern auf einer ringförmigen Umlaufbahn mit einem inneren und einem äußeren Radius um die horizontale Rotationsachse rotieren. Die als Längsträger des Rotorblatts ausgebildeten mittleren Flügelsegmente der in sich verwunden ausgebildeten Rotorblätter sind mittels einer Einspannung an einander paarweise gegenüberliegende Rotorköpfen biegesteif mit dem Ringträger derart verbunden, dass in jedem Längsabschnitt des Rotorblatts die Profilsehne des asymmetrischen Flügelprofils gegenüber einer aus der Wind- und der Umlaufgeschwindigkeit resultierende Anströmung einen positiven Anstellwinkel von bis zu sieben Grad aufweist, sodass das asymmetrische Flügelprofil über die gesamte Länge des Rotorblatts einen einstellbaren positiven Anströmwinkel aufweist. Für eine Stall-Stellung werden das vordere und das hintere Flügelsegment des Rotorblatts nach Luv gedreht, sodass ein negativer Anstellwinkel der Profilehne des asymmetrischen Flügelprofils bewirkt wird. Eine Wasserturbine mit horizontaler Rotationsachse kann mit Vorteil mit einem Sturmflutsperrwerk kombiniert werden, wobei zwischen den Pfeilern für verschließbare Tore und einer Brücke Rotormodule mit einer horizontalen Rotationsachse angeordnet sind, die sowohl bei Ebbe als auch bei Flut von der Strömung angetrieben und für die Stromgewinnung genutzt werden können.

### Der Motorgenerator

Ein Freilauf zwischen dem Rotormodul und dem Motorgenerator ermöglicht den Generatorbetrieb des Motorgenerators bei einem Drehflügelfahrzeug, das z.B. in einer Strömung vor Anker liegt oder sich als Luftfahrzeug im Sinkflug befindet. Bei einer Wind- oder Wasserturbine arbeitet der Motorgenerator solange als Motor, bis die jeweilige Auslegungsschnelllaufzahl des Rotormoduls erreicht ist.

Weitere vorteilhafte Ausführungsbeispiele und Eigenschaften der Erfindung gehen aus den Figuren hervor.

Es zeigen:
Fig. 1 einen Hubschrauber mit vier bügelförmigen Rotorblättern in der perspektivischen Übersicht und im schematischen Querschnitt,
Fig. 2 den Hubschrauber nach Fig. 1 mit Darstellung der Auftriebskräfte in den unteren und oberen Längsabschnitten der vier bügelförmigen Rotorblätter des Rotormoduls in der Aufsicht,
Fig. 3 einen Hubschrauber mit zwei Rotormodulen mit jeweils vier bügelförmigen Rotorblättern in der perspektivischen Übersicht,
Fig. 4 den Hubschrauber nach Fig. 3 mit Darstellung der Auftriebskräfte in dem unteren und oberen Längsabschnitt der bügelförmigen Rotorblätter in der Aufsicht,
Fig. 5 den mittleren Längsabschnitt der bügelförmigen Rotorblätter der Hubschrauber nach Fig. 1-4 mit Darstellung der in Flugrichtung ausgerichteten Schubkräfte in dem schematischen Horizontalschnitt,
Fig. 6 eine schwimmende Wasserturbine, oben in der perspektivischen Ausschnittdarstellung und unten in einem schematischen Querschnitt,
Fig. 7 die strömungsdynamisch bewirkten Kräfte einer Windturbine an zwölf exemplarischen Umlaufpositionen des variablen asymmetrischen Flügelprofils im schematischen Schnitt,
Fig. 8 reduzierte, strömungsdynamisch bewirkte Kräfte einer Windturbine an zwölf exemplarischen Umlaufpositionen des variablen symmetrischen Flügelprofils im schematischen Schnitt,
Fig. 9 stark reduzierte, strömungsdynamisch bewirkte Kräfte einer Windturbine an zwölf exemplarischen Umlaufpositionen des variablen asymmetrischen Flügelprofils in der Betriebsstellung für Sturm,
Fig. 10 ein Rotorblatt an einer für eine vollelektrische Blattverstellung des dreiteiligen Flügelprofils vorgesehenen Stellposition der Umlaufbahn in der perspektivischen Explosionsdarstellung,
Fig. 11 das Rotorblatt nach Fig. 10 mit der vollelektrischen Verstellvorrichtung für das dreiteilige Flügelprofil, oben an den Stellpositionen der Umlaufbahn, in der Mitte und unten jeweils in einer Hälfte der Umlaufbahn mit der variablen Profilsehne im schematischen Querschnitt,
Fig. 12 ein Rotorblatt mit einer von Linearmotoren gebildeten vollelektrischen Verstellvorrichtung für das dreiteilige Flügelprofil, oben mit vertauschten Saugseiten für zwei Sektoren der Umlaufbahn und unten mit einer Darstellung eines Linearmotors im schematischen Längsschnitt,
Fig. 13 ein Rotorblatt mit einer elektromechanischen Verstellvorrichtung für das dreiteilige Flügelprofil, oben in der Übersicht und unten im Detail eines Linearmotors jeweils als Explosionsisometrie,
Fig. 14 ein Rotorblatt mit einer elektromechanischen Verstellvorrichtung mit einem Zylindergesperre für das dreiteilige Flügelprofil, oben an den Stellpositionen der Umlaufbahn, in der Mitte und unten jeweils in einer Hälfte der Umlaufbahn mit getauschten Saugseiten des variablen Flügelprofils im schematischen Querschnitt,
Fig. 15 ein Rotorblatt mit einer elektromechanischen Verstell- und Sperrvorrichtung mit einem Schneckenrad für das dreiteilige Flügelprofil in einer perspektivischen Explosionsdarstellung,
Fig. 16 ein Sturmflutsperrwerk mit einer Wasserturbine im Querschnitt,
Fig. 17 eine Windturbine mit einem von einer zylindrischen Gitterschale gebildeten Rotormodul mit vertikaler Rotationsachse,
Fig. 18 eine Windturbine mit einem von einem Speichenrad gebildeten Rotormodul mit vertikaler Rotationsachse,
Fig. 19 eine schwimmende Windturbine mit einem von einem Speichenrad gebildeten Rotormodul mit vertikaler Rotationsachse,
Fig. 20 in der Mitte eine Turbine, die die kinetische Energie einer periodisch diametral die Richtung wechselnden Strömung in eine Drehbewegung wandelt in der Ausschnittperspektive, oben das variable dreiteilige Flügelprofil für eine Strömungsrichtung und unten für die andere Strömungsrichtung jeweils im Querschnitt,
Fig. 21 eine Windturbine mit einem von einem Speichenrad gebildeten Rotormodul mit horizontaler Rotationsachse,
Fig. 22 ein Rotorblatt der Windturbine nach Fig. 21 mit einer elektromechanischen Verstell- und Sperrvorrichtung in drei exemplarischen Querschnitten,
Fig. 23 einen Hubschrauber als ein zehnsitziges Fluggerät, oben in einer perspektivischen Übersicht im Flug und unten nach der Landung in einer Ansicht,
Fig. 24 oben ein Flugzeug, dessen Tragflächen ein dreiteiliges Flügelprofil aufweisen in der Übersicht, und in der Mitte und unten in drei schematischen Querschnitten der Tragfläche mit dem variablen Flügelprofil.

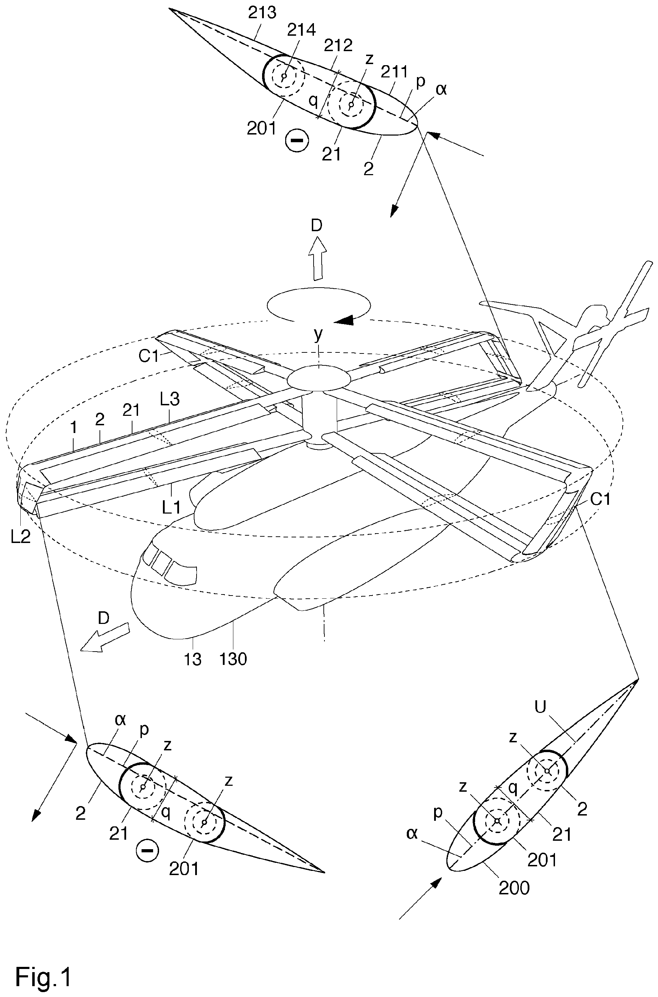

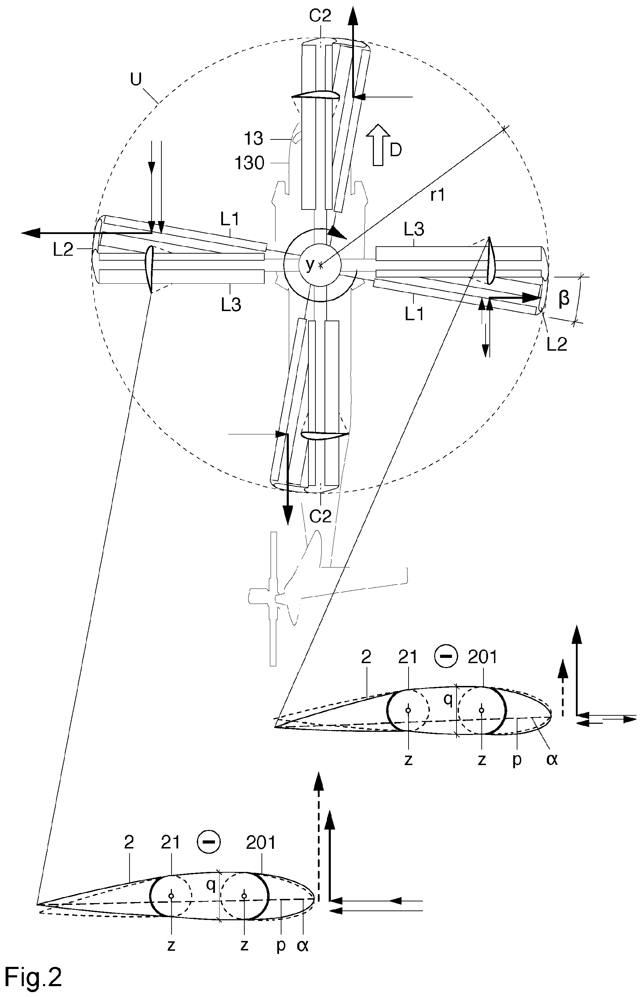

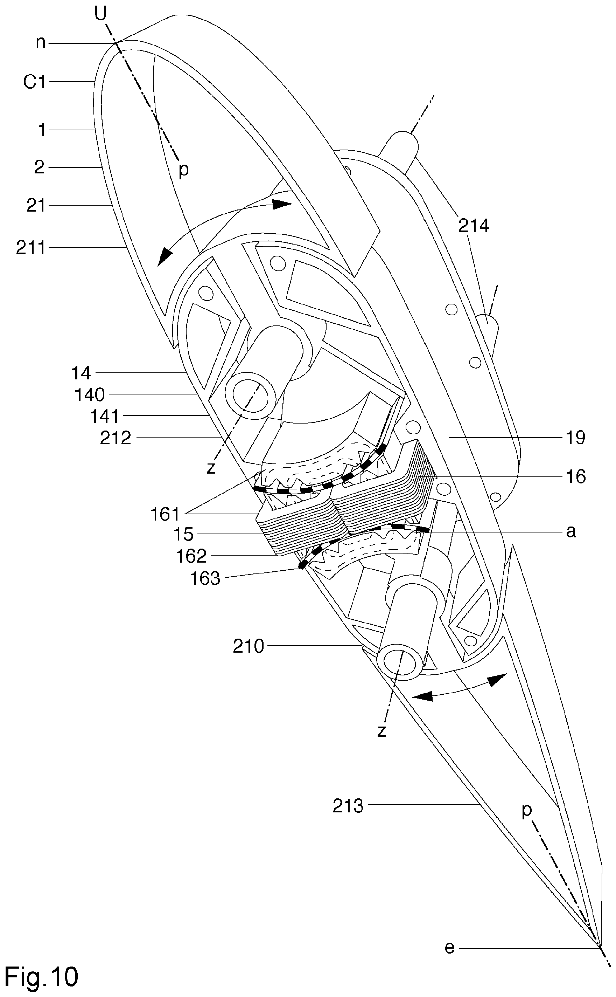

**Fig. 1** zeigt einen Hubschrauber 130 als ein Ausführungsbeispiel aus der Familie der Drehflügelfahrzeuge 13 mit vier bügelförmigen, in drei Längsabschnitte L1-L3 unterteilten Rotorblättern 1, die jeweils ein dreiteiliges Flügelprofil 21 aufweisen. Die Längsträger der bügelförmigen Rotorblätter 2 werden von dem mittleren Flügelsegment 212 des variablen Flügelprofils 2 gebildet und bilden ein Gehäuse 14 mit einem Widerlager 140 für das an das mittlere Flügelsegment 212 mittels der Verstellvorrichtung 15 angelenkte vordere Flügelsegment 211 und für das hintere Flügelsegment 213, vgl. Fig. 10. Wie in Fig. 2 gezeigt, ist der in Drehrichtung vorauslaufende, untere Längsabschnitt L1 und der in Drehrichtung nachlaufende, obere Längsabschnitt L3 eines Rotorblatts 1 dazu ausgebildet, Auftrieb und Schub in Flugrichtung D zu erzeugen, während der Längsabschnitt L2 dazu ausgebildet ist, den Hubschrauber 130 im Schwebeflug mit einer in im Umkreis von 360 Grad in jede Richtung steuerbaren Schubkraft in seiner jeweiligen Flugposition zu halten. Dabei kann die Schubkraft in den Längsabschnitten L2 der Durchmesser mit den Stellpositionen C1 in jede beliebige Flugrichtung D orientiert werden. Das Rotormodul 10 ist über eine Welle mit einem Triebwerk verbunden und hat eine Rotationsachse y, die von der Hochachse des Hubschraubers gebildet wird, und rotiert oberhalb der von dem Rumpf umschlossenen Kabine. Die Drehflügelkinematik der variablen Flügelprofile 2 der Rotorblätter 1 ersetzt eine Taumelscheibe, wobei, wie in Fig. 2 gezeigt, im Geradeausfug der Durchmesser mit den Stellpositionen C2 in dem unteren und oberen Längsabschnitt L1,L3 des bügelförmigen Rotorblatts 1 in Flugrichtung D ausgerichtet wird, um mit einem jeweils unterschiedlichen positiven Anstellwinkel α der Profilsehne p in der bezüglich der Flugrichtung D linken und rechten Hälfte des Rotormoduls 10 jeweils gleichviel Auftrieb und durch eine Neigung des Rotormoduls 10 Schub in Flugrichtung D zu erzeugen. Der in Drehrichtung vorauslaufende untere Längsabschnitt L1 und der in Drehrichtung nachlaufende, obere Längsabschnitt L3 sind durch den Längsabschnitt L2 vertikal voneinander beabstandet und mit dem Versatzwinkel β mit etwa 10 Grad radial gegeneinander versetzt, wobei der mittlere Längsabschnitt L2 das äußere untere Ende des Längsabschnitts L1 mit dem äußeren oberen Ende des Längsabschnitts L3 schräg verbindet. Mit zwei Lagen von Auftrieb erzeugenden Längsabschnitten L1,L3 der Rotorblätter 1 kann der Hubschrauber 130 mit Vorteil als ein Lastenhubschrauber eingesetzt werden, der im Schwebeflug seine Position stabil halten und aus dem Stand in jede Richtung Schub entwickeln kann. Ohne Taumelscheibe zeichnet sich das Rotormodul 10 durch eine hohe Laufruhe aus und ist frei von unerwünschten Vibrationen.

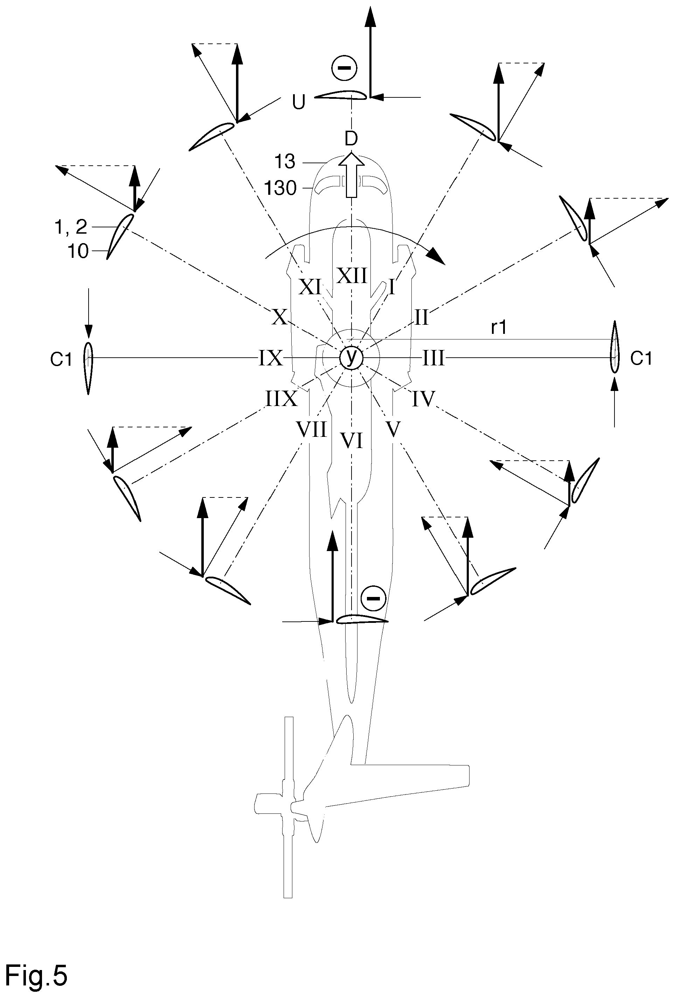

**Fig. 2** zeigt den Hubschrauber 130 nach Fig. 1 mit einer schematischen Darstellung der Längsabschnitte L1,L3 der bügelförmigen Rotorblätter 1, oben in der Übersichtsdarstellung und unten in Detailschnitten des asymmetrischen Flügelprofils 2 jeweils für die, bezogen auf die Flugrichtung D, linke und die rechte Hälfte der Umlaufbahn U. Im Geradeausflug des Hubschraubers 130 wird die resultierende Anströmung von der Drehzahl und der Fluggeschwindigkeit bestimmt, sodass bezüglich der Flugrichtung D in der linken und rechten Hälfte der Umlaufbahn U an den Rotorblättern 1 jeweils unterschiedliche, als gestrichelte Vektoren dargestellte Auftriebskräfte resultieren würden. Durch die in Fig. 1 beschriebene Blattverstellung an den Stellpositionen C2 der voraus- und nachlaufenden Längsabschnitte L1,L3 der Rotorblätter 1 werden in der linken und rechten Hälfte des Rotormoduls 10 gleiche Auftriebskräfte erzeugt, sodass der Hubschrauber 130 im Geradeausflug eine stabile Fluglage einnimmt. In dem Längsabschnitt L2 mit den Stellpositionen C1 des Rotorblatts 1 ist, wie in Fig. 5 gezeigt, eine Blattverstellung vorgesehen, bei der die Schubkraft im Umkreis von 360 Grad in jede beliebige Flugrichtung D gelenkt werden kann. Dies ist insbesondere für einen präzisen Landeanflug und auch für das Einhalten einer bestimmten Flugposition z.B. bei Seitenwind von Vorteil. Im Steigflug ist die Summe der Auftriebskräfte in beiden Hälften der Umlaufbahn U gleich groß, sodass im Steigflug in den Längsabschnitten L1,L3 des Rotorblatts 1 keine Verstellung der Flügelsegmente 211,213 erforderlich ist.

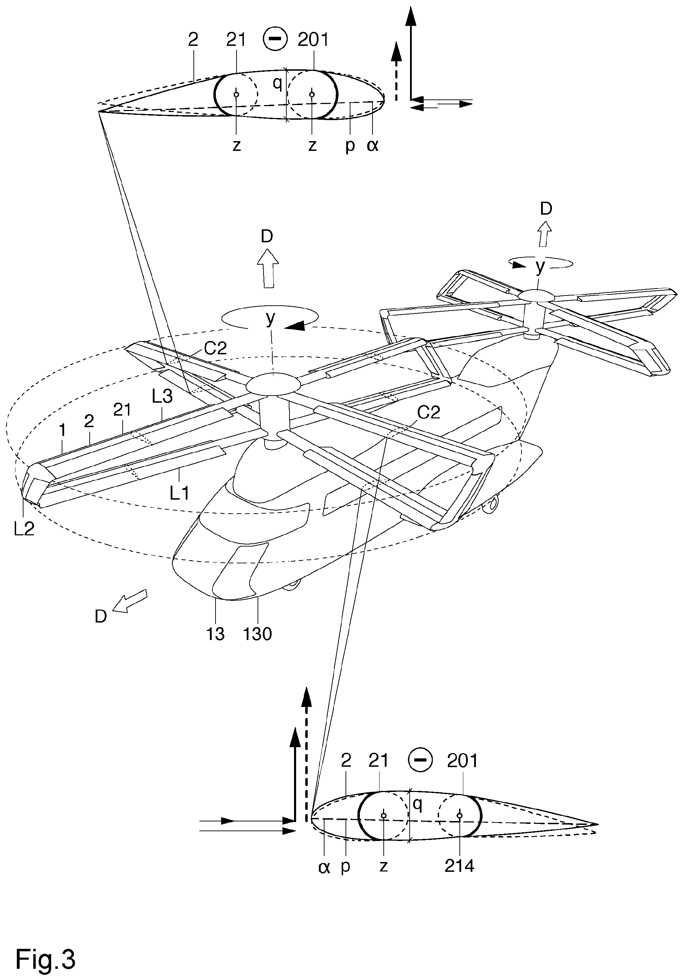

**Fig. 3** zeigt einen Hubschrauber 130 mit zwei in gegensinniger Drehrichtung um die Rotationsachsen y rotierenden Rotormodulen 10. Das front- und das heckseitige Rotormodul 10 weisen jeweils vier bügelförmige Rotorblätter 1 auf, die in einen unteren in Drehrichtung vorauslaufenden Längsabschnitt L1 und einen oberen in Drehrichtung nachlaufenden Längsabschnitt L3 sowie in einen den oberen und den unteren Längsabschnitt L1,L3 miteinander verbindenden, in Drehrichtung bevorzugt schräg gestellten Längsabschnitt L2 untergliedert sind und ein durchgängiges, von dem mittleren Flügelsegment 212 gebildetes Tragprofil 14 aufweisen. Wie in Fig. 1 erläutert, ist der Durchmesser mit den Stellpositionen C2 in Flugrichtung ausgerichtet, sodass durch eine Änderung des positiven Anstellwinkels α der Profilsehne p des variablen Flügelprofils 2 im Geradeausflug des Hubschraubers 130 die Rotormodule 10 jeweils steuer- und backbordseitig gleiche Auftriebskräfte erzeugen, wobei das vordere und das hintere Rotormodul 10 in Flugrichtung D geneigt sind. Der Versatzwinkel β zwischen dem unteren Längsabschnitt L1 und dem oberen Längsabschnitt L3 bewirkt eine optimale Anströmung der vier Rotorblätter 1 des Rotormoduls 10. In dem parallel zu den Rotationsachsen y des Hubschraubers 130 ausgerichteten Längsabschnitten L2 der bügelförmigen Rotorblätter 1 wird der Durchmesser mit den Stellpositionen C1, wie in Fig. 5 gezeigt, quer zur Flugrichtung D ausgerichtet, sodass die Saugseiten (-) des variablen Flügelprofils 2 in dem Längsabschnitt L2 der Rotorblätter 1 Schub in Flugrichtung D erzeugen. Das hier vorgeschlagene Hubschraubermodul hat den Vorteil, dass die Rotormodule 10 an Bug und Heck nicht, wie bisher üblich, in der Höhe versetzt gegeneinander, sondern bezogen auf den Abstand zur Längsachse auf einer Höhe angeordnet werden können, da sich die Umlaufbahnen U nicht überschneiden. Die zweilagige Anordnung der radialen Längsabschnitte L1,L3 bewirkt eine signifikant große Flügeloberfläche, die hohe Auftriebskräfte erzeugen kann, sodass der Hubschrauber 130 insbesondere als ein Lastenhubschrauber geeignet ist. Der gleitende Übergang des Anstellwinkels α an den Stellpositionen C1 und C2 bewirkt einen leisen Rotorlauf und vermeidet auf die gesamte Struktur übertragene Vibrationen im Vergleich zu dem bisher üblichen abrupten Wechsel des Anstellwinkels α mittels einer Taumelscheibe des Rotors. Aus einer angenommenen Blattgeschwindigkeit von 800 km/h für den mittleren Längsabschnitt L2 des bügelförmigen Rotorblatts 1 mit einem Radius r1 von 5 m resultieren 440 Umdrehungen des Rotormoduls 10 pro Minute und einer Frequenz von 20 Hz für die Verstellvorrichtung des Rotorblatts 1 in dem Längsabschnitt L2. Die in Fig. 10-13 gezeigten elektromotorischen Verstellvorrichtungen erfüllen diese Anforderung.

**Fig. 4** zeigt den Hubschrauber 130 nach Fig. 3 in einer Aufsicht der Doppelrotoren mit vektorieller Darstellung der strömungsdynamisch bewirkten Kräfte an einem Rotormodul 10 in den Längsabschnitten L1,L3 der bügelförmigen Rotorblätter 1 und mit Detailschnitten des variablen asymmetrischen Flügelprofils 2 jeweils für die, bezogen auf die Flugrichtung D, rechte und linke Hälfte der Umlaufbahn U. Im Geradeausflug des Hubschraubers 130 setzt sich die resultierende Anströmung aus der Drehzahl und der Fluggeschwindigkeit zusammen, sodass bezüglich der Flugrichtung D in der linken und rechten Hälfte der Umlaufbahn U an den Rotorblättern 1 jeweils unterschiedliche Auftriebskräfte resultieren, die an dem in Flugrichtung D orientierten Durchmesser mit den Stellpositionen C2 dadurch ausgeglichen werden, dass sich der positive Anstellwinkel α der Profilsehne p in einem Umlauf des Rotorblatts 1 zweimal ändert und deshalb in den steuer- und backbordseitigen Hälften der beiden Rotormodule 10 jeweils eine gleich große Auftriebskraft bewirkt wird. In dem Längsabschnitt L2 des Rotorblatts 1 ist, wie in Fig. 5 gezeigt, eine Blattverstellung vorgesehen, bei der die Schubkraft im Umkreis von 360 Grad in jede beliebige Flugrichtung D gelenkt werden kann. Dies ist insbesondere für einen präzisen Landeanflug und auch für das Einhalten einer bestimmten Flugposition z.B. bei Seitenwind von Vorteil. Im Steigflug ist die Summe der Auftriebskräfte in beiden Hälften der Umlaufbahn U gleich groß, sodass im Steigflug in den Längsabschnitten L1,L3 des Rotorblatts 1 keine Verstellung der Anstellwinkel α der Profilsehne p erforderlich ist.

**Fig. 5** zeigt den Geradeausflug des Hubschraubers nach Fig. 1-4 in einem schematischen Horizontalschnitt des Längsabschnitt L2. Der Durchmesser mit den Umlaufpositionen I-XII kann in dem Längsabschnitt L2 jede beliebige Stellung von zwei einander gegenüber liegenden Stellpositionen C1 der Umlaufbahn U ausgerichtet werden. Während die Rotorblätter 1 in den Längsabschnitten L1,L3 Auftrieb bewirken, wie in Fig. 2 bis 4 gezeigt, dient der Längsabschnitt L2 der Erzeugung einer Schubkraft, die im Umkreis von 360 Grad in jede beliebige Flugrichtung D gelenkt werden kann. Bei Windstille ist im Standflug die Verstellvorrichtung 15 der Rotorblätter 1 in den Längsabschnitten L2 abgeschaltet, sodass sich die von den variablen asymmetrischen Flügelprofilen 2 bewirkten Schubkräfte gegenseitig aufheben. Mittels der Verstellvorrichtung 15 der Rotorblätter 1 ist der Hubschrauber 130 sehr gut steuerbar und kann auch bei starkem Seitenwind seine Flugposition sehr genau einhalten, und wie hier dargestellt aus dem Stand in Flugrichtung D beschleunigen, was auch für Start und Landung von besonderem Vorteil ist.

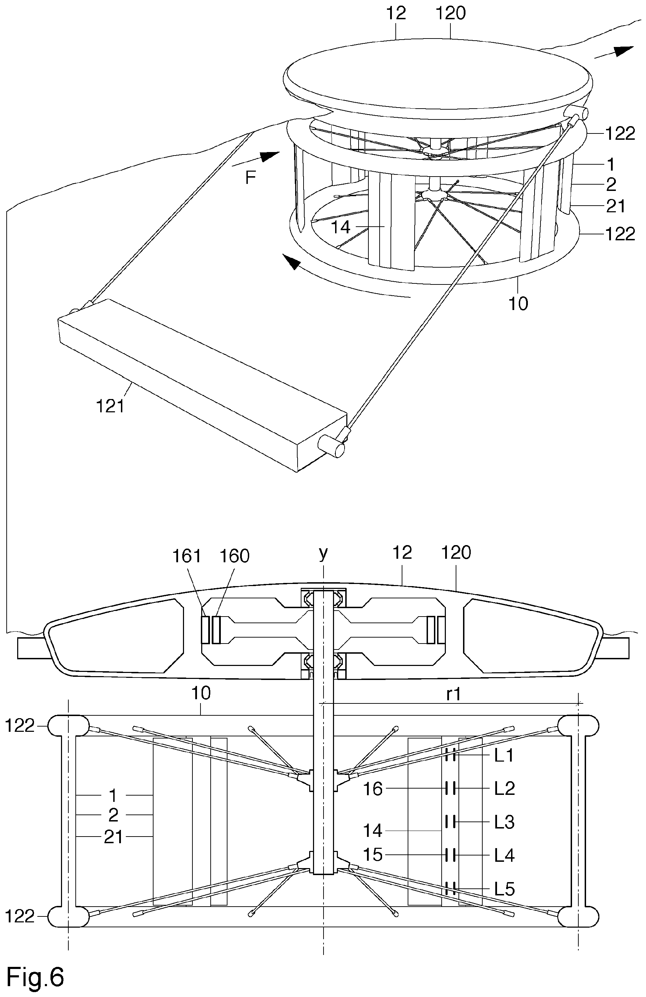

**Fig. 6** zeigt eine schwimmende Wasserturbine 12, die am Grund eines Gewässers mit einer Strömung F verankert ist und an der Wasseroberfläche einen diskusförmigen Schwimmkörper 120 aufweist, der mittels eines Ankers 121 und mittels von Ankerseilen am Grund des Gewässers verankert ist. Das Gehäuse 14 des Motorgenerators ist starr mit dem diskusförmigen Schwimmkörper 120 verbunden. Die Welle des Motorgenerators weist beispielsweise ein oberes und ein unteres, wasserdichtes Kegelrollenlager auf und ist an dem Schwimmkörper 120 eingespannt und mittels von zwei vertikal voneinander beabstandeten Scharen von radialen Messerspeichen mit einem Rotormodul 10 torsionssteif verbunden. Das Rotormodul 10 rotiert auf einer kreisförmigen Umlaufbahn U mit dem Radius r1 um die Rotationsachse y und hat sechs Rotorblätter 1, deren Längsträger jeweils mit einem oberen und einen unteren Ringträger 122 des getauchten Rotormoduls 10 verbunden sind und ein Gehäuse 14 für die Verstellvorrichtung 15 bilden. Für die Aufnahme der Verstellvorrichtungen 15 des variablen Flügelprofils 2 sind die Längsträger der dreiteiligen Flügelprofile 21 in fünf Längsabschnitte L1-L5 untergliedert und bilden das Widerlager 140 und das Gehäuse 14 für die den Längsabschnitten L1-L5 zugeordneten Verstellvorrichtungen 15. Mit nicht näher bezeichneten Ankerseilen für den Anker 121 und mit Gelenken an dem in der Strömung F verankerten diskusförmigen Schwimmkörper 120 ist die Wasserturbine 12 in dem Fließgewässer so verankert, dass sie unterschiedlichen Wasserständen folgen kann.

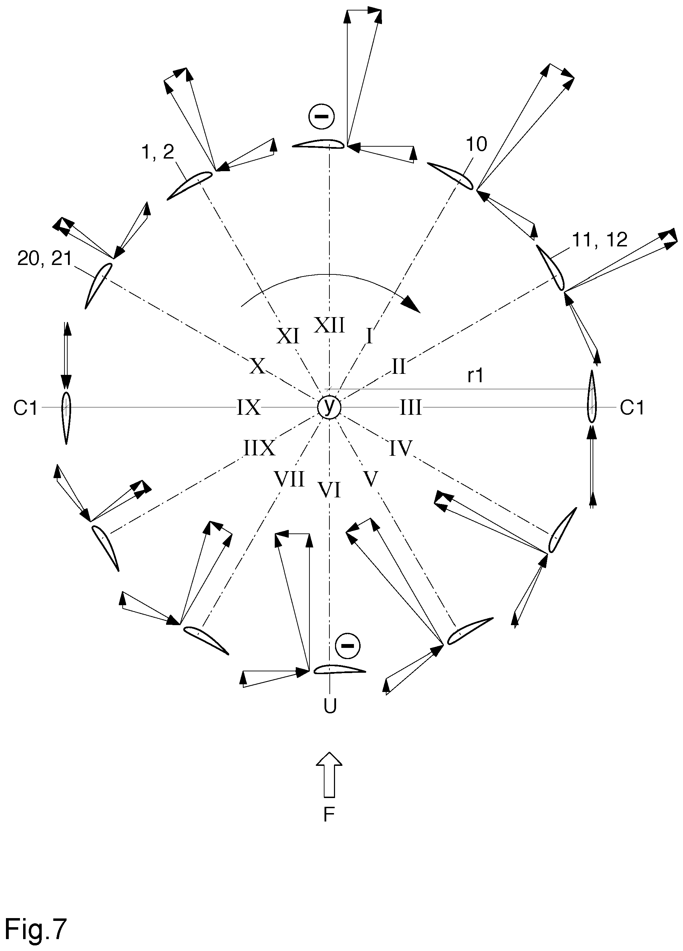

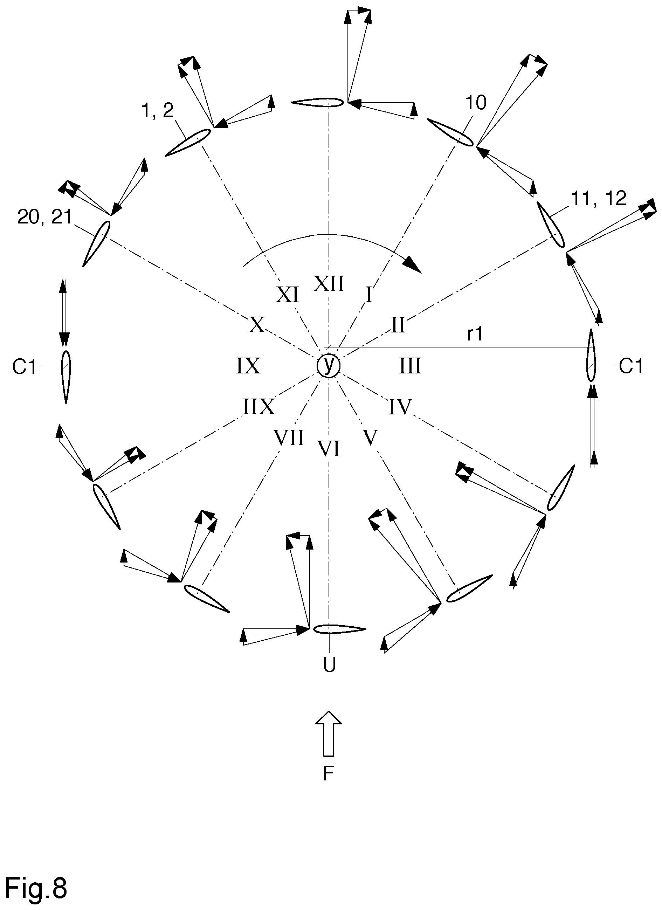

**Fig. 7** zeigt zwölf unterschiedliche Umlaufpositionen I-XII des variablen asymmetrischen Flügelprofils 2 für Wind- und Wasserturbinen 11,12 auf der durch den Radius r1 definierten kreisförmigen Umlaufbahn U. Bezogen auf die Richtung der Strömung F ist die Saugseite (-) des variablen asymmetrischen Flügelprofils 2 im luvseitigen Umlauf zur Innenseite der Umlaufbahn U und im leeseitigen Umlauf zur Außenseite der Umlaufbahn U ausgerichtet, sodass das variable Flügelprofil 2 im Fall einer Windturbine 11 als Clark-YM-15-Profil bei Windstärken 3-6 eine durch Pfeile in Drehrichtung gekennzeichnete tangentiale Antriebskraft bewirkt. An dem Durchmesser mit den Stellpositionen C1 wechselt die Saugseite (-) des variablen Flügelprofils 2 von der Außenseite auf die Innenseite der Umlaufban U und umgekehrt, wobei das variable Flügelprofil 2 jeweils in einer Übergangsstellung ein symmetrisches Flügelprofil 2 aufweist. Im luv- und leeseitigen Umlauf bewirkt deshalb die resultierende Anströmung als Vektorsumme aus der Strömungsgeschwindigkeit und der Umlaufgeschwindigkeit des Rotormoduls 10 eine in Drehrichtung geneigte Auftriebskraft, die bei dem asymmetrischen Flügelprofil 2 etwa um ein Drittel größer ist als bei dem in Fig. 8 betrachteten symmetrischen Flügelprofil 2. Daraus folgt ein wesentlich verbesserter Wirkungsgrad der Drehflügelturbine, die als Wind- oder Wasserturbine 11,12 ausgebildet werden kann, gegenüber einem herkömmlichen Darrieus-Rotor. Bei einer großen Windturbine 11 mit einem Rotordurchmesser von zweihundert Metern beträgt die Umlaufzeit des Rotorblatts 1 mehr als eine halbe Minute, sodass an den Stellpositionen C1 genügend Zeit für die Blattverstellung zur Verfügung steht. Im Unterschied zu einem Darrieus-Rotor, bei dem an den Stellpositionen C1 ein schlagartiger Lastwechsel von Nachteil ist und die Struktur der Windturbine 11 extrem beansprucht, baut die hier beschriebene allmähliche Blattverstellung an den Stellpositionen C1 aerodynamisch bewirkte Lastspitzen ab, sodass die Struktur der Windturbine 11 entlastet wird.

**Fig. 8** zeigt zwölf unterschiedliche Umlaufpositionen I-XII des variablen symmetrischen Flügelprofils 2 der Rotorblätter 1 für die in Fig. 7 dargestellten Wind- und Wasserturbinen 11,12 mit einem symmetrischen Flügelprofil 2. Für die in Fig. 7 bezeichnete Windturbine 11 ist diese einheitliche Rotorblattstellung für die Windstärken 6-9 nach der Beaufort-Skala vorgesehen, um eine um ein Drittel reduzierte Auftriebskraft für den Betrieb der Windturbine bei Sturm zu nutzen. Im Vergleich zu den in Fig. 7 dargestellten Flügelstellungen der Rotorblätter 1 bewirkt das variable Flügelprofils 2 als ein symmetrisches Flügelprofil 2 eine geringere Auftriebskraft und eine daraus resultierende reduzierte tangentiale Antriebskraft.

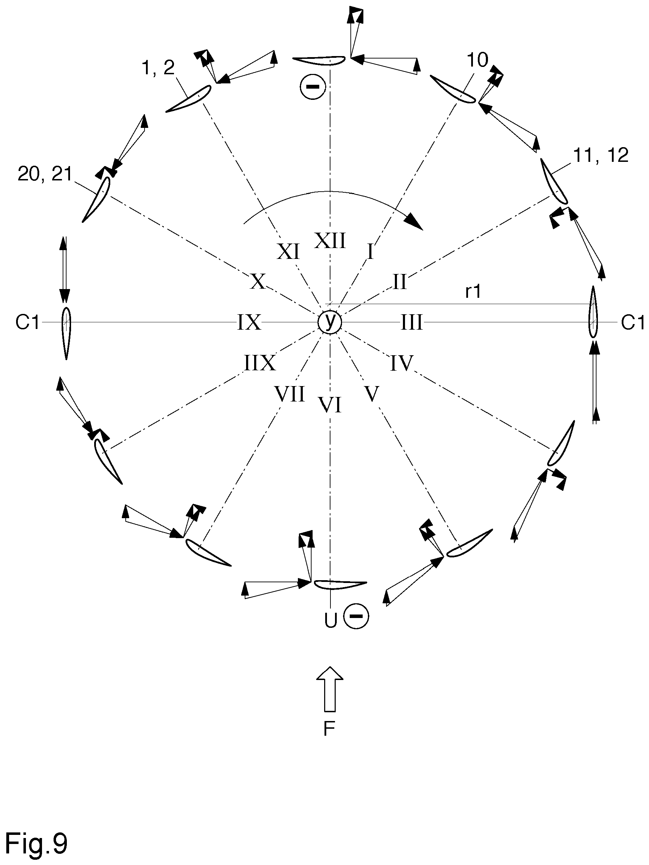

**Fig. 9** zeigt zwölf unterschiedliche Umlaufpositionen I-XII des variablen asymmetrischen Flügelprofils 2 der Rotorblätter 1 für die in Fig. 7 und Fig. 8 dargestellten Drehflügelturbinen. Das variable asymmetrische Flügelprofil 2 der in Fig. 7 dargestellten Windturbine 11 zeigt hier gegenüber der in Fig. 7 beschriebenen Orientierung der Saugseiten (-) des asymmetrischen Flügelprofils 2 eine inverse Stellung mit einem negativen Anstellwinkel der Profilsehnen der asymmetrischen Flügelprofile 2. Bezogen auf die Richtung der Strömung F ist die Saugseite (-) des asymmetrischen Flügelprofils 2 in Form eines Clark-YM-15-Profils im luvseitigen Umlauf zur Außenseite der Umlaufbahn U und im leeseitigen Umlauf zur Innenseite der Umlaufbahn U orientiert, sodass das variable Flügelprofil 2 mit Ausnahme der Stellpositionen C1 bei extremen Windstärken 9-12 nach der Beaufort-Skala an den Umlaufpositionen V-VIII und X-I eine reduzierte tangentiale Antriebskraft bewirkt, der auf den Umlaufpositionen III,IV und IX ein entgegen der Drehrichtung wirkender tangentialer Widerstand entgegen steht. Da die tangentiale Antriebskraft jedoch überwiegt, dreht sich die Windturbine 11 auch bei Orkan und selbst bei einem Hurrikan entsprechend der Saffir-Simpson-Hurrikanskala und wandelt einen Teil der kinetischen Energie des Sturms in eine Drehbewegung um, was gegenüber einem Stillstand der Windturbine 11 einen Vorteil bedeutet.

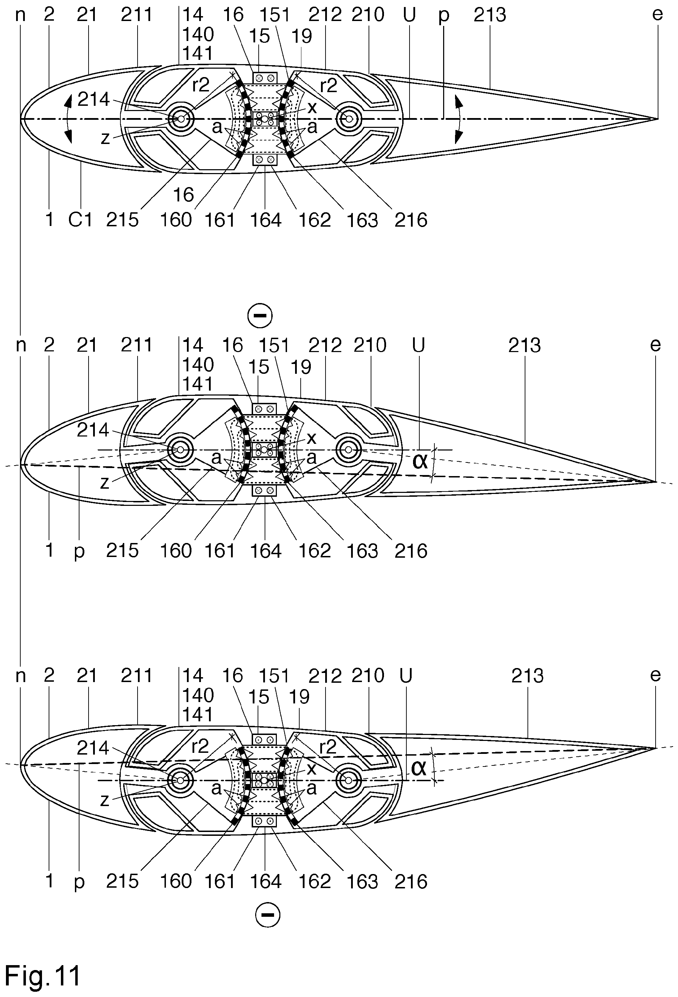

**Fig. 10** zeigt in einer perspektivischen Explosionsdarstellung ein Rotorblatt 1 mit einem symmetrischen variablen Flügelprofil 2, für ein Drehflügelfahrzeug 13 mit Bezug zu Fig. 5 bei dem in den mittleren Längsabschnitten L2 der bügelförmigen Rotorblätter 1 der Durchmesser mit den Stellpositionen C1 orthogonal zur jeweiligen Flugrichtung D ausrichtbar ist und für eine Wind- oder Wasserturbine 11,12 mit Bezug zu Fig. 7 bei der der Durchmesser mit den Stellpositionen C1 jeweils senkrecht zu der Richtung der Strömung F ausrichtbar ist. In beiden Fällen weist das variable Flügelprofil 2 an den Stellpositionen C1 jeweils temporär ein symmetrisches Flügelprofil 2 auf, das spiegelsymmetrisch zu der Profilsehne p und einer Tangente an der Umlaufbahn U mit dem Radius r1 ausgerichtet ist. Das Rotorblatt 1 ist aus drei in sich starren extrudierten Hohlprofilen 141 aufgebaut, die aus einem vorderen Flügelsegment 211 mit einer Flügelnase n, einem mittleren Flügelsegment 212 im Bereich der maximalen Profildicke q und einem hinteren Flügelsegment 213 mit einer Flügelhinterkante e bestehen. Das mittlere Flügelsegment 212 ist als Gehäuse 14 für eine von paarweise angeordneten Elektromotoren 16 gebildete Verstellvorrichtung 15 ausgebildet. Die vorderen und hinteren Flügelsegmente 211,213 sind an das mittlere, von einem extrudierten Hohlprofil 141 gebildeten Flügelsegment 212 angelenkt. Das mittlere Flügelsegment 212 bildet ein Gehäuse 14 und ein Widerlager 140 für zwei Statoren 161 mit Blechpaketen 162 und Erregerwicklungen und stellt mit einem beidseitigen Luftspalt a eine berührungslose elektrische Verbindung zu dem von alternierend gepolten Permanentmagneten 163 gebildeten Läufer 160 eines sektional wirksamen Schrittmotors 164 her. Wie in Fig. 11 näher erläutert, erfolgt das Ein- und Ausdrehen des vorderen und des hinteren Flügelsegments 211,213 um die Drehachsen z durch Umpolung der Erregerwicklungen 162 an den beiden Blechpaketen des Stators 161. Die Läufer 160 bilden mit den Permanentmagneten 163 ein Gegengewicht 216 zu dem vorderen und hinteren Flügelsegment 211,213, sodass bei Rotation ein Kräftegleichgewicht herrscht. Bei einem Rotormodul mit einem Durchmesser von 3 Meter und 800 Umdrehungen pro Minute ergeben sich bis zu 40 Lastwechsel pro Sekunde, die mit dieser vollelektrischen Verstellvorrichtung 15 innerhalb von 3.2 Millisekunden realisierbar sind.

**Fig. 11** zeigt das Rotorblatt 1 nach Fig. 10 in drei schematischen Querschnitten, oben an den Stellpositionen C1 eines quer zur Fahrtrichtung D ausrichtbaren Durchmessers der Umlaufbahn U mit dem Radius r1, wie in Fig. 5 gezeigt. In den schematischen Querschnitten des variablen Flügelprofils 2 in der Mitte und unten sind die Saugseiten (-) in beiden Hälften der Umlaufbahn U jeweils zu der Innen- und Außenseite der Umlaufbahn U ausrichtbar. An den Stellpositionen C1 ist das variable, dreiteilige Flügelprofil 21 als ein symmetrisches Flügelprofil ausgebildet, das spiegelsymmetrisch zu der Profilsehne p und einer Tangente an der Umlaufbahn U mit dem Radius r1 ausgerichtet ist. Das Rotorblatt 1 ist beispielsweise aus drei in sich starren extrudierten Hohlprofilen 141 aufgebaut, die ein vorderes Flügelsegment 211 mit einer Flügelnase n, ein mittleres Flügelsegment 212 im Bereich der maximalen Profildicke q für die Aufnahme der Statoren 161 und ein hinteres Flügelsegment 213 mit einer Flügelhinterkante e aufweisen. Das mittlere Flügelsegment 212 ist als Längsträger des Rotorblatts 1 ausgebildet und bildet das Gehäuse 14 und das Widerlager 140 für die von (bevorzugt radialen) Schrittmotoren 164 gebildete Verstellvorrichtung 15. Gelenkspalte 210 zwischen den Flügelsegmenten 211-213 ermöglichen die laminare Umströmung des variablen Flügelprofils 2 in jeder Betriebsstellung. Die Verstellvorrichtung 15 bewirkt dabei, dass die an den Stellpositionen C1 tangential zur Umlaufbahn U ausgerichtete Profilsehne p in der luv- und leeseitigen Hälfte der Umlaufbahn U einen positiven Anstellwinkel α von bis zu drei Grad gegenüber einer Tangente an der Umlaufbahn U einnimmt.

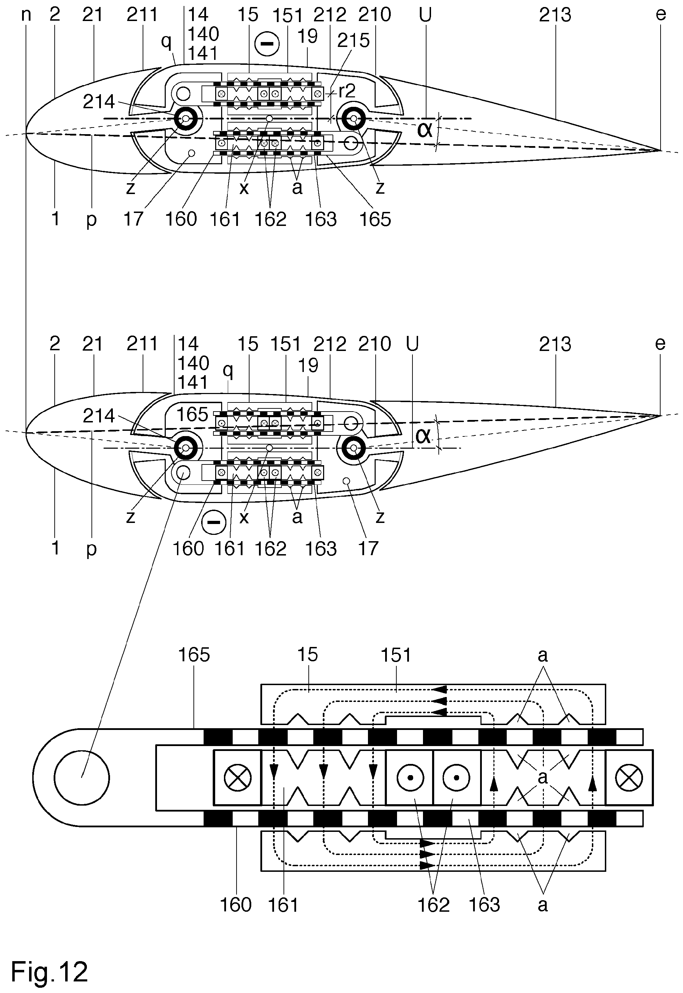

**Fig. 12** zeigt ein Rotorblatt 1 mit einem dreiteiligen Flügelprofil 21 und mit einer Verstellvorrichtung 15, die von zwei in das mittlere Flügelsegment 212 des Rotorblatts 1 integrierten Linearmotoren 165 gebildet wird. Ein Hebelarm 215 des vorderen und des hinteren Flügelsegments 211,213 ist jeweils mit dem Radius r2 an den Scharnieren 214 mit den Drehachsen z des mittleren Flügelsegments 212 angelenkt und mit den Läufern 160 der Linearmotoren 165 verbunden. Mittels einer nicht näher dargestellten Steuerungseinheit wechselt die Saugseite (-) des variablen Flügelprofils 2, wie in Fig. 5 dargestellt, jeweils an den Stellpositionen C1 eines im Vollwinkel frei einstellbaren Durchmessers der Umlaufbahn U zweimal die Orientierung von der Innenseite zur Außenseite der Umlaufbahn U. Die Stellfunktion der von den beiden Linearmotoren 165 gebildeten Verstellvorrichtung 15 wird durch Anlegen einer elektrischen Spannung aktiviert, wobei alternierend gepolte Permanentmagnete 163 mit umpolbaren Erregerwicklungen 162 der Statoren 161 interagieren, sodass wie in Fig. 5 gezeigt in beiden Hälften der Umlaufbahn U in den Längsabschnitten L2 der Rotorblätter 1 eines Hubschraubers 130 mittels der oszillierenden Linearbewegung der paarweise angeordneten Elektromotoren 16 der positive Anstellwinkel α der Profilsehne p des Rotorblatts 1 innerhalb einer Sekunde 20 mal die Orientierung von der Innen- zu der Außenseite der Umlaufbahn U wechselt. Dies gilt für ein Rotormodul 10 des Hubschraubers 130 mit etwa zehn Meter Durchmesser bei einer Umlaufgeschwindigkeit von 800 km/h. Jeder Läufer 160 weist zwei Zungen jeweils mit einer Mehrzahl in Reihe angeordneter und alternierend gepolter Permanentmagnete 163 auf, die in schlitzförmige Taschen des Stators 161 eingreifen. Durch den beidseitigen Luftspalt a zwischen den Läufern 160 und den Statoren 161 der beiden Linearmotoren 165 kann eine berührungslose elektromagnetische Verbindung zwischen den Flügelsegmenten 212-213 hergestellt werden.

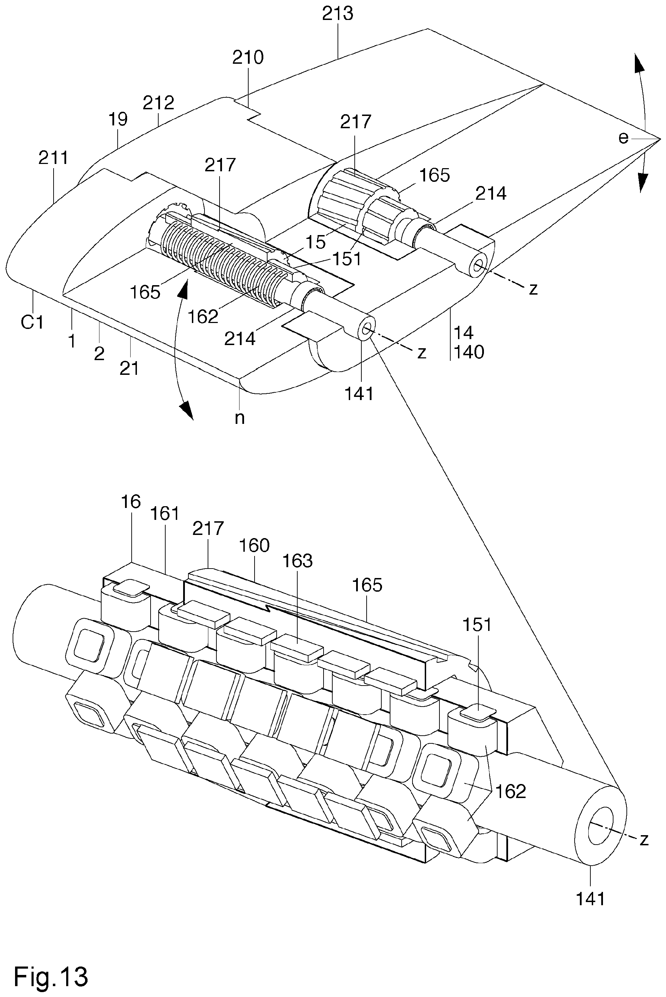

**Fig. 13** zeigt elektromagnetische Verstellvorrichtungen 15 exemplarisch für einen Längsabschnitt L1-Ln des Rotorblatts 1, oben an einer Stellposition C1 mit dem variablen symmetrischen Flügelprofil 2. Die Scharniere 214 sind jeweils konzentrisch und koaxial zu den Drehachsen z für das vordere Blattsegment 211 und das hintere Blattsegment 213 angeordnet und dienen als Kabelkanäle für die Stromversorgung der beiden jeweils von einem Schieber 217 gebildeten Verstellvorrichtungen 15. Bei der oben dargestellten einfachen Ausführung bildet eine Eisenhülse oder ein radiales Blechpaket des Scharniers 214 den Stator 161 mit einer Erregerwicklung 162 für die von einem Schieber 217 gebildeten Verstellvorrichtung 15. Durch Umpolung der Erregerwicklung 162 an der Eisenhülse, wie oben gezeigt, oder an radialen Blechpaketen des Scharniers 214, wie an dem Linearmotor 165 unten gezeigt, führt der Schieber 217 eine oszillierende Bewegung mit einer Frequenz von 20-30 Hz auf einem hohlen Scharnierbolzen aus, wobei Gewindevorsprünge des vorderen und hinteren Blattsegments 211,213 und Gewindeaufnahmen des von dem Linearmotor 165 bewegten Schiebers 217 ineinandergreifen und eine Drehbewegung mit gegensinniger Drehrichtung an dem vorderen und hinteren Blattsegment 211,213, bewirken. Luftlager zwischen den Gewinden der Scharniere 214 sowie zwischen dem Läufer 160 und dem Stator 161 halten die Reibungskräfte gering und werden durch das Hohlprofil 141 der Scharniere 214 mit Druckluft versorgt. Bei dem oben gezeigten Ausführungsbeispiel ist das elektromagnetisch induzierte Feld parallel zu den Drehachsen z ausgerichtet, während bei dem unten dargestellten Linearmotor 165 eine Vielzahl von Erregerwicklungen 162 des Stators 161 jeweils radial zu den Drehachsen z der Blattsegmente 211,213 ausgerichtet sind, und der konzentrisch und koaxial zu den Scharnieren 214 angeordnete Läufer 160 weist eine Vielzahl korrespondierender Permanentmagnete 163 auf. Der Linearmotor 165 erlaubt eine exakte Positionierung des als Läufer 160 des Linearmotors 165 ausgebildeten Schiebers 217, sodass der positive Anstellwinkel α für die Blattsegmente 211,213 sehr exakt eingestellt und variiert werden kann. Die Verstellvorrichtung 15 mit der Stell- und Haltefunktion ist dazu ausgebildet, beträchtliche aerodynamisch bewirkte Sogkräfte sowie Zentrifugalkräfte aufzunehmen, wobei das vordere und das hintere Flügelsegment 211,213 in jedem Längsabschnitt L1-Ln des Rotorblatts 1 individuell verstellbar und arretierbar sind.

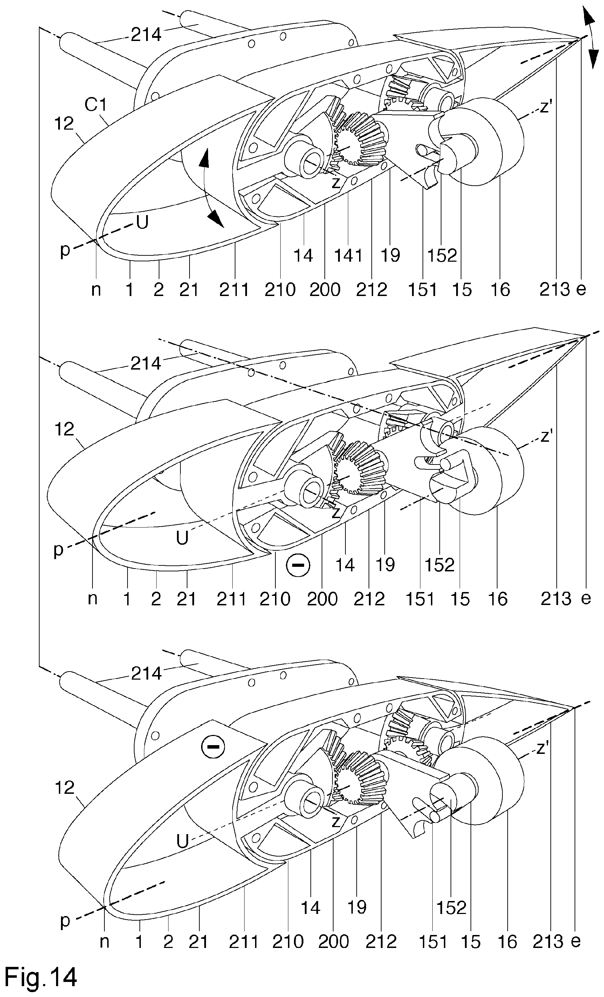

**Fig. 14** oben zeigt ein Rotorblatt 1, bei dem die Verstellvorrichtung 15 einen Elektromotor 16 aufweist, dessen Drehachse z' an den Stellpositionen C1 parallel zu der Profilsehne p des variablen symmetrischen Flügelprofils 2 ausgerichtet ist und bei dem das Halteelement 151 der Verstellvorrichtung 15 ein Zylindergesperre 152 aufweist. In der Mitte und unten ist das variable asymmetrische Flügelprofil 2 mit getauschten Saugseiten (-) dargestellt. Das vordere Flügelsegment 211 und das hintere Flügelsegment 213 sind jeweils an eine Drehachse z des mittleren Flügelsegments 212 angelenkt und werden mit einem von dem Elektromotor 16 angetriebenen Kegelradgetriebe derart verstellt, dass sich das vordere und das hintere Flügelsegment 211,213 an den Stellpositionen C1 jeweils mit gegensinniger Drehrichtung zur Innen- oder zur Außenseite der Umlaufbahn U ein- oder ausdrehen, wobei sich die Drehrichtung des Elektromotors 16 in einem Umlauf des Rotorblatts 1 an den Stellpositionen C1 zweimal ändert. Die perspektivische Explosionsdarstellung zeigt die Verstellvorrichtung 15 für einen Bereich innerhalb eines Längsabschnitts des Rotorblatts 1 mit Flügelsegmenten 211-213, die als Hohlprofile 141 jeweils z.B. als Aluminiumstrang-Pressprofile mit nicht näher bezeichneten Schraubkanälen zur Verbindung der einzelnen Teile des Rotorblatts 1 hergestellt werden können. Das hier dargestellte Schritt-Rast-Getriebe mit Zylindergesperren 152 benötigt für die Beibehaltung des variablen asymmetrischen Flügelprofils 2 mit getauschten Saugseiten (-) in den beiden Hälften der Umlaufbahn U keinen zusätzlichen Energieaufwand, sodass von dem Elektromotor 16 nur vergleichsweise geringe Verstellkräfte aufzubringen sind, da sich das variable Flügelprofil 2 an den Stellpositionen C1 wie in Fig. 5 und Fig. 7-9 gezeigt in einer Fahnenstellung befindet.

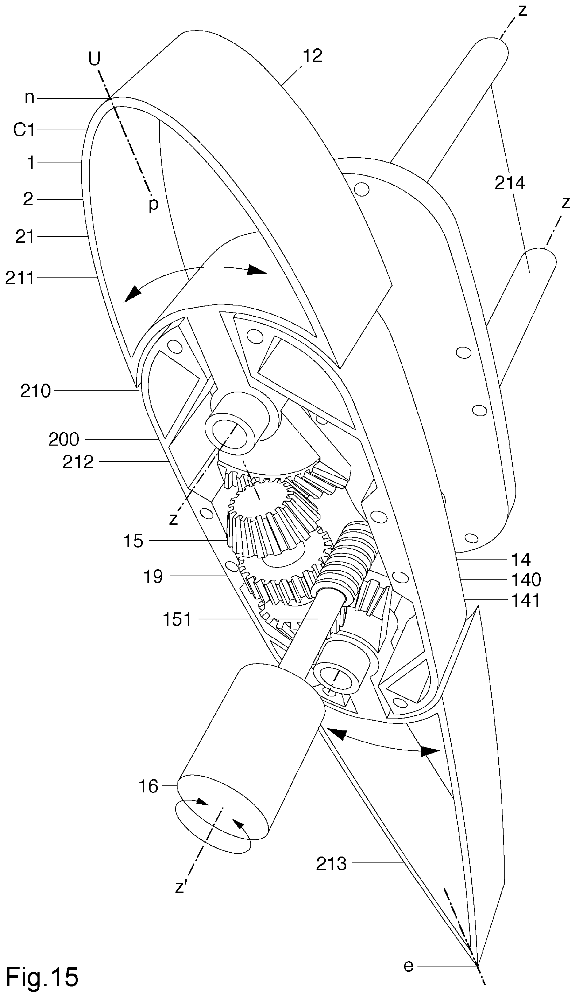

**Fig. 15** zeigt ein Rotorblatt 1, bei dem die Verstellvorrichtung 15 einen Elektromotor 16 und das Halteelement 151 ein Schneckenrad aufweist, in der perspektivischen Explosionsdarstellung eines Abschnitts des Rotorblatts 1 an den Stellpositionen C1 der Umlaufbahn U, wie in Fig. 7-9 gezeigt. Das Rotorblatt 1 entspricht in seinem Aufbau im Wesentlichen dem in Fig. 14 ausführlich erläuterten Ausführungsbeispiel. Im Unterschied zu Fig. 14 weist das Schritt-Rast-Getriebe hier einen Elektromotor 16 auf dessen Drehachse z' parallel zu den Drehachsen z des vorderen und des hinteren Flügelsegments 211,213 ausgerichtet ist und dessen Sperrvorrichtung von einem nicht näher bezeichneten Schneckenrad gebildet wird, das an den Stellpositionen C1 die Verstellkraft mittels von Kegelrädern auf das vordere und das hintere Flügelsegment 211,213 überträgt, wobei das mittlere Flügelsegment 212 ein Widerlager 140 für das Schneckenrad des Elektromotors 16 bildet und in einem Umlauf des Rotorblatts 1 die Drehrichtung des Elektromotors 16 zweimal wechselt.

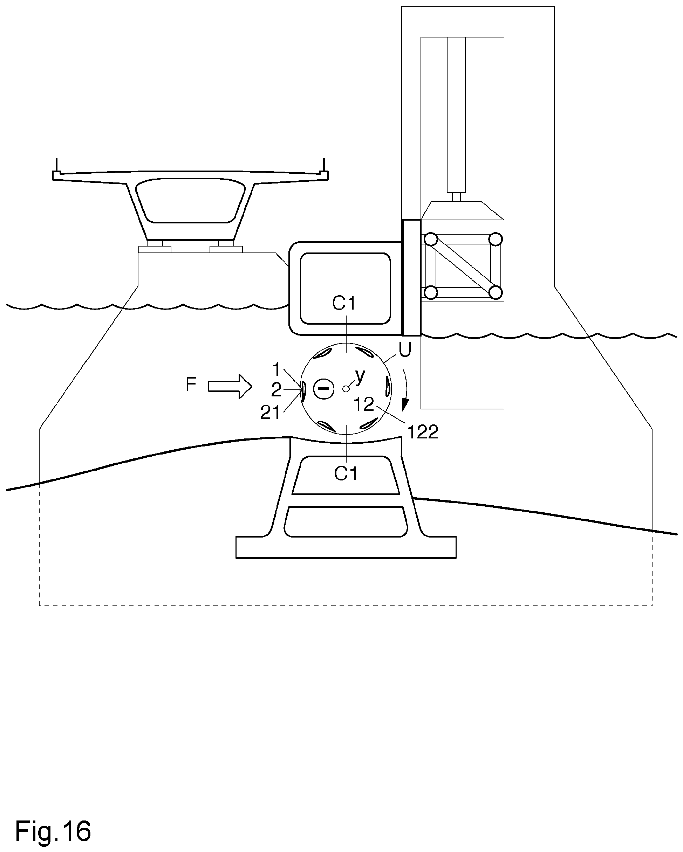

**Fig. 16** zeigt ein Sturmflut-Sperrwerk, wie es z.B. an der Oosterschelde errichtet ist, in einer schematischen Schnittansicht. Das Querbauwerk besteht aus Pfeilern und Brückenelementen sowie einem A-förmigen Gründungskörper, der auf Seiten der Oosterschelde rampenartig ansteigt und auf Seiten der Nordsee eine Stufe aufweist. Bei Ebbe strömt das Wasser der Oosterschelde mit einer hohen Strömungsgeschwindigkeit durch eine Engstelle zwischen dem A-förmigen Gründungskörper und einem oberen Längsträger des Sperrwerks. Zwischen den Pfeilern des Sperrwerks spannen etwa 30 m lange trommelförmige Rotormodule 10 mit einem Durchmesser von etwa 10 m, die im Abstand von 4 m durch scheibenförmige Querträger ausgesteift sind. Insgesamt sechs Rotorblätter 1 mit einem dreiteiligen Flügelprofil 21 verbinden die scheibenförmigen Querträger untereinander, sodass eine biege-, schub- und torsionssteife Rotortrommel gebildet wird, deren Welle an einem wasserdichten Lager des Sperrwerks verankert und mit einem Motorgenerator im Inneren der Pfeiler verbunden ist. An dem Durchmesser mit den Stellpositionen C1 wechselt die Saugseite eines Rotorblatts 1 in einem Umlauf jeweils zweimal von der Innenseite auf die Außenseite der Umlaufbahn U. Die Rotorblätter haben eine Sehnenlänge von 2 m und eine Profildicke von 0,4 m.

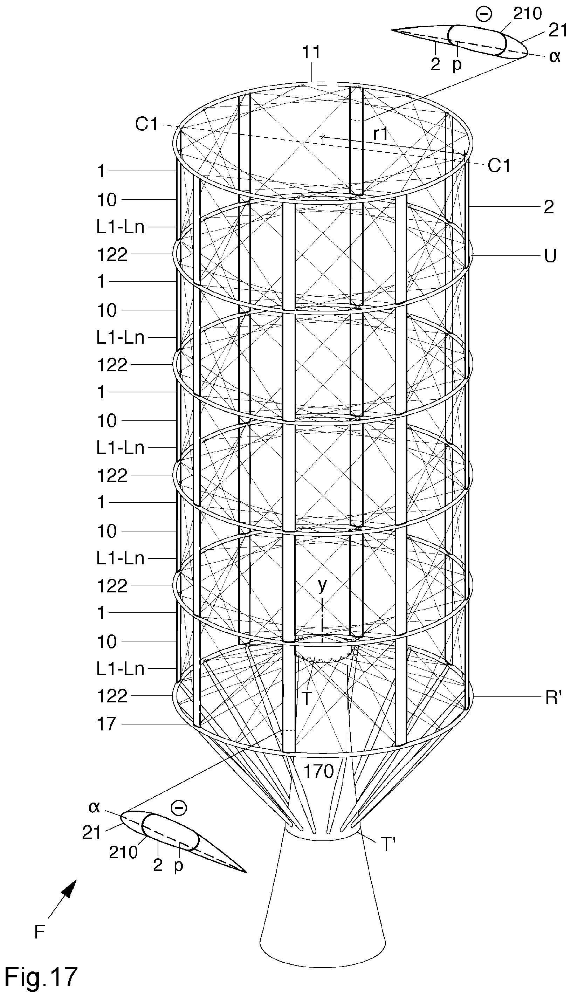

**Fig. 17** zeigt eine Windturbine 11 mit vertikaler Rotationsachse y und einem basisseitigen Speichenrad 17, das fünf vertikal übereinander gestapelte Rotormodule 10 mit jeweils acht Rotorblätter 1 trägt. Die Rotorblätter 1 sind in Längsabschnitte L1-Ln untergliedert und weisen ein dreiteiliges asymmetrisches Flügelprofil 21 auf, das dem in Fig. 10-11 dargestellten Ausführungsbeispiel entspricht. Wie in Fig. 7 gezeigt, wechselt die Saugseite (-) des Flügelprofils 2 an den Stellpositionen C1 eines im Umkreis von 360° zur jeweiligen Windrichtung ausrichtbaren Durchmesser C1 von der Außenseite zur Innenseite der Umlaufbahn und umgekehrt. Die acht Rotorblätter 1 sind mit einem Radius r1 von der vertikalen Rotationsachse y beabstandet und jeweils an ihrem oberen und unteren Ende mit einem umfangsunterspannten Ringträger 122 verbunden. Nicht näher bezeichnete photovoltaische Zellen bedecken bevorzugt mit Ausnahme der Gelenkspalte 210 nach Fig. 11 die Oberflächen der dreiteiligen Flügelprofile 21 der Rotorblätter 1 und sind im Umlauf der Rotormodule 10 abwechselnd auf der Innenseite und auf der Außenseite der Umlaufbahn U zur Sonne orientiert. Der basisseitige Ringträger 122 weist sechzehn Druckstäbe auf, die den von den fünf gestapelten Rotormodulen 10 gebildeten Rotor mit dem unteren Drehlager T' einer Nabe 170 verbinden, während sechzehn Paare von V-förmig angeordneten Zugspeichen mit dem oberen Drehlager T der Nabe 170 derart verspannt sind, dass zwischen dem oberen Drehlager T und dem unteren Drehlager T' ein vertikaler Hebelarm gebildet wird, um das Kippmoment des Rotors über die Nabe 170 in einen als Kragarm ausgebildeten Fuß der Windturbine 11 abzuleiten. Die Anströmfläche der Windturbine 11 entspricht mit 14.000 qm dem Rotordurchmesser einer herkömmlichen Sieben-MW-Windturbine mit horizontaler Drehachse, sodass bis zu einer Windgeschwindigkeit von zwölf m/s die hier dargestellte Windturbine 11 ebenfalls eine Peak-Leistung von sieben MW erbringen kann, während sie dann, wenn bei Windgeschwindigkeiten von mehr als zwölf m/s die Drehzahl einer herkömmlichen Windturbine bereits gedrosselt werden muss, die doppelte bis dreifache Leistung erzielen kann. Die als Kreisel sich stabilisierende Windturbine 11 benötigt aufgrund einer konsequenten Leichtbautechnik mit überwiegend axialbeanspruchten Traggliedern im Vergleich zu einer herkömmlichen Windkraftanlage mit horizontaler Rotationsachse nur die Hälfte des Konstruktionsgewichts.

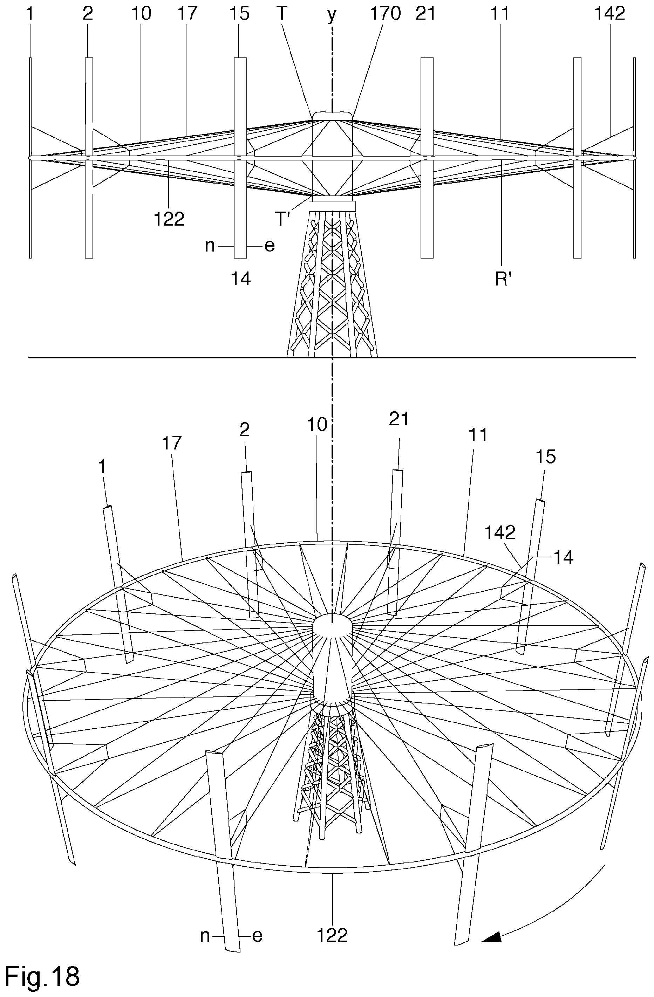

**Fig. 18** zeigt eine Windturbine 11, bei der zehn Rotorblätter 1 mit einem asymmetrische Flügelprofil 2 von einem horizontal angeordneten Speichenrad 17 getragen werden, das ein Rotormodul 10 bildet. Dabei sind die Rotorblätter 1 mit einem äußeren Ringträger 122 verbunden, der mittels einer Vielzahl radialer Speichen mit einer Nabe 170 verbunden ist. Das Speichenrad 17 hat einen Durchmesser von dreihundert Metern, wobei die Rotorblätter 1 durch den Ringträger 122 in zwei jeweils fünfzig Meter lange Hälften unterteilt sind und zwischen dem Ringträger 122 und dem Längsträger des dreiteiligen Flügelprofils 21 eine von einer Seilverspannung 142 gebildete biegesteife Verbindung ausgebildet ist. Die koaxial und konzentrisch zu der vertikalen Drehachse y angeordnete Nabe 170 des Speichenrads 17 ist mittels eines oberen Drehlagers T und eines unteren Drehlagers T' an einer zentralen Tragkonstruktion drehbar gelagert, die bevorzugt im Bereich der Nabe 170 mindestens einen Motorgenerator aufnimmt. Mittels des sich zum Baugrund hin erweiternden Fachwerkturms ist die Windturbine 11 sowohl offshore (vor der Küste) als auch onshore (auf dem Festland) in einem Baugrund verankerbar. Mit einer Anströmfläche von 30.000 qm ist die Windkraftanlage für eine Leistung von dreißig Megawatt Peak ausgelegt.

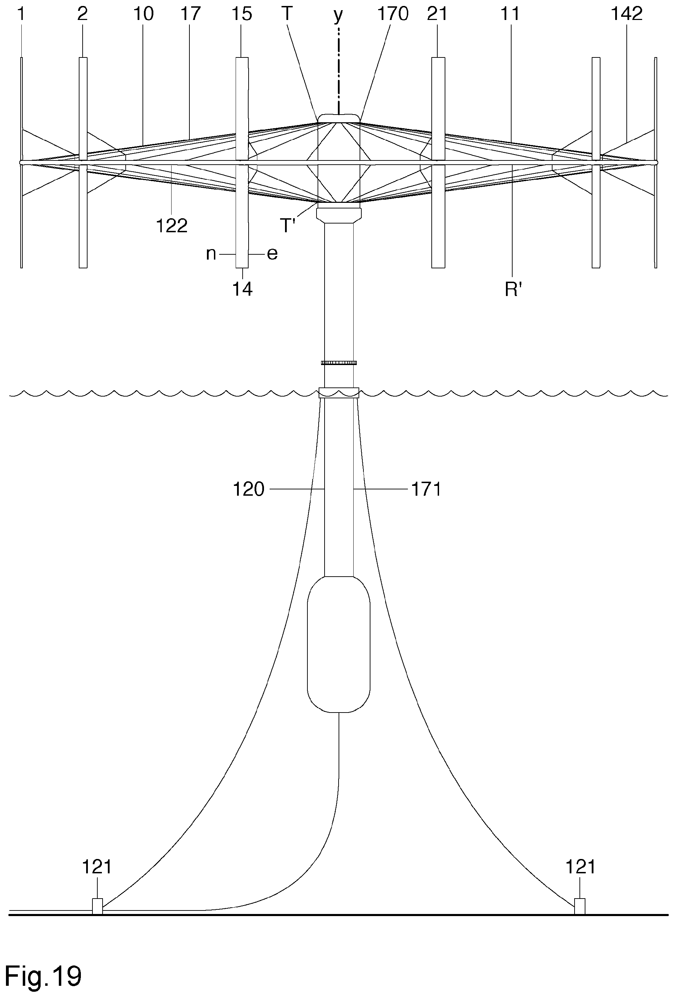

**Fig. 19** zeigt eine schwimmende Windturbine 11, deren Rotormodul 10 dem in Fig. 18 gezeigten Ausführungsbeispiel entspricht. Auch hier ist die Nabe 170 des Speichenrads 17 über ein oberes Drehgelenk T und ein unteres Drehgelenk T' drehbar an einer zentralen Tragkonstruktion gelagert, die im Bereich der Nabe 170 ein Maschinenhaus für mehrere Motorgeneratoren aufnimmt und an ihrem unteren Ende einen Schwimmkörper 120 und eine Boje 171 mit einem Ballastkörper aufweist. Die Tragkonstruktion kann auch als Tragwerk bezeichnet werden. Etwa an der Wasserlinie der schwimmenden Windturbine 11 setzen Ankerseile an, die am Meeresgrund mit Ankern 121 verbunden sind. Die durch Kreiselmomente hervorgerufene Massenträgheit dient der Stabilisierung der vertikalen Rotationsachse y der schwimmenden Windturbine 11. In einem Fließgewässer oder in einer Gezeitenströmung kann unterhalb der Wasserlinie eine Wasserturbine mit einer analogen Konstruktion um die gleiche Rotationsachse y mit gegensinniger Drehrichtung rotieren sodass die ballastierten Boje eine schwimmende Windturbine 11 und eine hier nicht dargestellte Wasserturbine trägt.

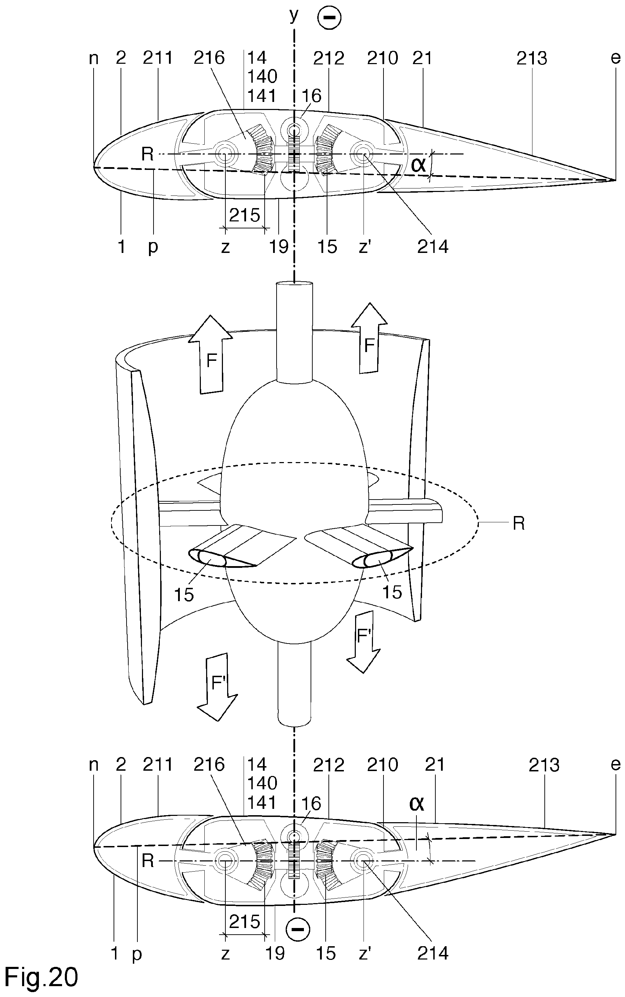

**Fig. 20** zeigt eine Wind- oder Wasserturbine 11,12 mit radial zu der Rotationsachse y in einer Rotationsebene R angeordneten Rotorblättern 1 die für eine regelmäßig diametral die Richtung wechselnde Strömung F,F' ausgelegt ist. Die sechs Rotorblätter sind mit einem koaxial und konzentrisch zu der Rotationsachse y angeordneten Motorgenerator verbunden und behalten ihre Drehrichtung bei, wenn die Richtung der Strömung F,F' wechselt. Dies ist z.B. bei einem Wellenkraftwerk mit einem Gehäuse 14 der Fall, bei dem die Welle ein Luftvolumen aus dem Gehäuse 14 verdrängt, sodass eine auflandige Luftströmung genutzt wird, um eine Windturbine anzutreiben. Hierbei wird mit einer von der rückströmenden Welle erzeugten ablandigen Luftströmung die Windturbine 11 unter Beibehaltung der Drehrichtung weiter angetrieben, indem die Saugseite (-) der sechs radialen Rotorblätter 1 mittels der Verstellvorrichtung 15 jeweils zur strömungsabgewandten Seite wechselt. Eine periodisch die Richtung wechselnde Strömung F,F' wird auch durch Gezeitenströmungen erzeugt, sodass eine Wasserturbine 12 prinzipiell den gleichen Aufbau zeigt wie die Luftturbine. Sowohl für die Wind- als auch für die Wasserturbine 11,12 ist dabei von Vorteil, dass in einer neutralen Übergangsstellung beim Wechsel der Richtung der Strömung F,F' die Profilsehne p des variablen Flügelprofils parallel zu der Rotationsebene R angeordnet ist und mittels der Verstellvorrichtung 15 die Profilsehne p jeweils einen positiven Anstellwinkel α von bis zu vier Grad gegenüber dem temporär vorhandenen symmetrischen Flügelprofil 2 aufweist, sodass aus der aus der Strömungsgeschwindigkeit und der Umlaufgeschwindigkeit resultierenden Auftriebskraft in der Rotationsebene R eine maximale tangentiale Antriebskraft ableitbar ist. Die Ausschnittperspektive in der Mitte zeigt die Übergangsstellung der Rotorblätter 1 des Rotormoduls 10, bei der das variable asymmetrische Flügelprofil 2 temporär ein symmetrisches Flügelprofil 2 aufweist.

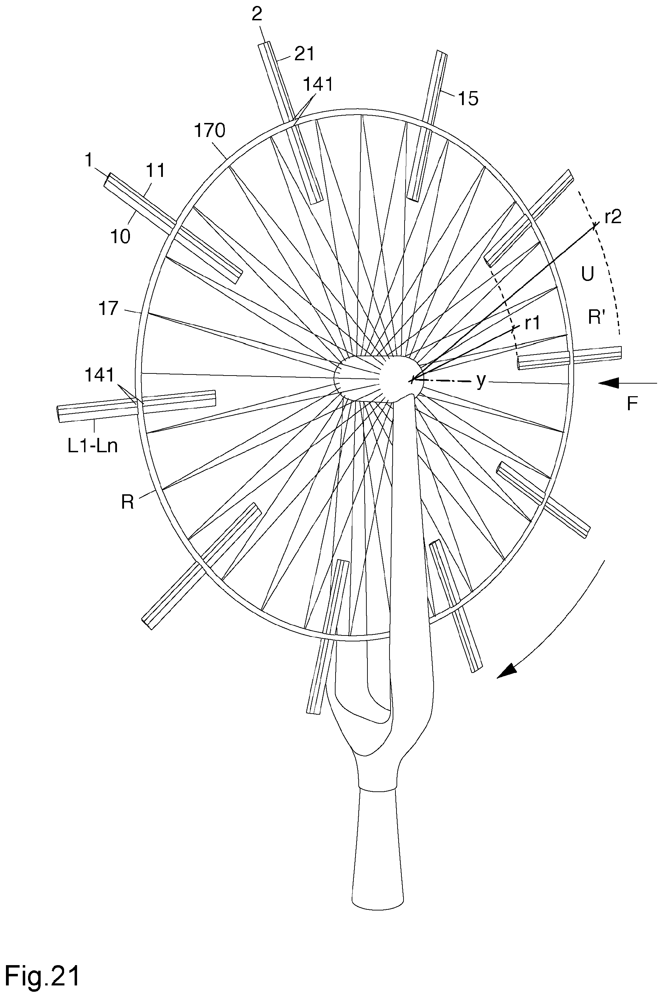

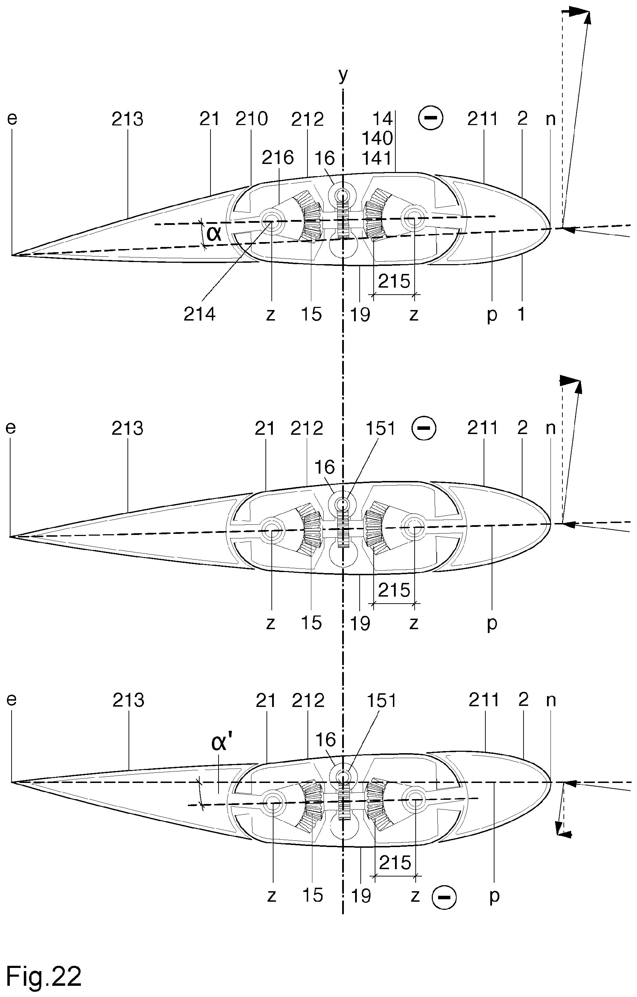

**Fig. 21** zeigt eine Windturbine 11 mit einem Rotormodul 10, das ein seilverspanntes Speichenrad 17 mit einer Vielzahl von radialen Trag- und Spannseilen aufweist, die mit einem in der Rotationsebene R' angeordneten äußeren Ringträger 122 und mit einer Nabe 170 verspannt sind. In der Rotationsebene R' des Speichenrads 17 sind zehn Rotorblätter 1 radial zu der Rotationsachse y angeordnet und weisen jeweils ein dreiteiliges Flügelprofil 21 auf, dessen mittleres Flügelsegment 212 an zwei in der Rotationsebene R' einander diametral gegenüberliegenden Rotorköpfen des Ringträgers 122 eingespannt ist. Das Rotormodul 10 wird von einer Gabel aufgenommen, die in einem Azimutlager (Drehlager) an das obere Ende eines Masts angelenkt ist. Die zehn radialen Rotorblätter 1 rotieren in der vertikalen Rotationsebene R' des Speichenrads 17 auf einer ringförmigen Umlaufbahn U, die durch einen inneren Radius r1 und einen äußeren Radius r2 um die Rotationsache y definiert ist, und bilden zusammen mit dem Speichenrad 17 ein Rotormodul 10 in extremer Leichtbauweise. Der Ringträger 122, die Trag- und Spannseile sowie die Rotorblätter 1 bestehen bevorzugt zumindest teilweise aus Kohlefaserverbundwerkstoffen. Die insgesamt zehn Rotorblätter 1 sind über eine Länge von sechzig Metern um zehn Grad verwunden, wobei eine gestufte Anordnung die Ausbildung einer Mehrzahl von in sich gerade ausgebildeten Längsabschnitten L1-Ln ermöglicht, sodass das Rotorblatt 1 wie in Fig. 22 gezeigt derart verstellbar ist, dass in der Betriebsstellung ein positiver Anstellwinkel α von fünf Grad ausgebildet ist, wobei das symmetrische Flügelprofil 2 einen positiven Anstellwinkel α von einem Grad aufweist und für die Stall-Stellung ein negativer Anstellwinkel α' von drei Grad erforderlich ist, sodass der Verstellbereich des dreiteiligen Flügelprofils 21 insgesamt sieben Grad beträgt. Die in das von dem mittleren Blattsegment 212 gebildete Gehäuse 14 integrierte elektromechanische Verstellvorrichtung 15 entspricht dem in Fig. 14 oder Fig. 15 gezeigten Beispiel. Die Windturbine 11 nach Fig. 21 kann bei Windgeschwindigkeiten von mehr als 12 m/s ohne Einschränkungen betrieben werden. Wechselt sich z.B. ein positiver Anstellwinkel α des asymmetrischen Flügelprofils 2 der Rotorblätter 1 regelmäßig mit einem negativen Anstellwinkel α' ab kann die Drehzahl des Windrads mittels der Verstellvorrichtung 15 stufenlos reguliert werden, wobei die entgegen der Windrichtung orientierte Saugseite (-) des Rotorblatts 1 Schub erzeugt der mit dem in Windrichtung wirkenden Schub verrechnet werden kann, sodass die Tragkonstruktion entlastet wird. Zudem ermöglicht die Stall-Stellung, den Stillstand der Windturbine 11 im Fall von Wartungs- und Reinigungsarbeiten.

**Fig. 22** zeigt eine elektromechanische Verstellvorrichtung 15, die dem in Fig. 14 beschriebenen Ausführungsbeispiel entspricht, in drei Querschnitten des asymmetrischen Flügelprofils 2 eines Rotorblatts 1 der Windturbine 11 nach Fig. 21 im Bereich der an den Ringträger 122 angrenzenden Längsabschnitte L1-Ln des Rotorblatts 1. Die Rotorblätter 1 sind in sich verwunden ausgebildet und sind an ihrem der Rotationsachse y zugewandten Ende maximal gegenüber der Rotationsebene R' des Speichenrads 17 geneigt, während der Neigungswinkel zum äußeren Ende des Rotorblatts 1 hin kontinuierlich abnimmt. Das mittlere Flügelsegment 212 bildet ein Gehäuse 14 und ein Widerlager 140 für die der in Fig. 14 beschriebenen Verstellvorrichtung 15, die in das Hohlprofil 141 des Längsträgers integriert ist. Der in allen Längsabschnitten L1-Ln des Rotorblatts 1 mittels der Verstellvorrichtung 15 realisierbare Verstellbereich zwischen einem positiven und einem negativen Anstellwinkel α,α' ermöglicht mit einer Stall-Pitch Regulierung eine stufenlose Anpassung an die jeweilige Windgeschwindigkeit bis zum Stillstand des Rotormoduls 10, wobei die Profilsehne p der dreiteiligen Flügelprofile 21 einen negativen Anstellwinkel α' aufweist, wie an dem unteren Profilquerschnitt gezeigt. Das asymmetrische Flügelprofils 2 oben zeigt einen positiven Anstellwinkel α von 4 Grad, der so ausgelegt ist, dass das Rotorblatt 1 eine maximale in Drehrichtung wirksame tangentiale Auftriebskraft bewirkt. Für Windgeschwindigkeiten ab 12 m/s kann temporär ein symmetrisches Flügelprofil des dreiteiligen Flügelprofils 21 genutzt werden, wobei die Auftriebskraft und auch die tangentiale Antriebskraft um etwa ein Drittel gegenüber dem oben gezeigten asymmetrischen Flügelprofil 2 reduziert sind. Durch weiteres simultanes Drehen des vorderen Flügelsegments 211 und des hinteren Flügelsegments 213 in Luvrichtung wird der Anstellwinkel α' negativ und bewirkt bei dem unten dargestellten asymmetrischen Flügelprofil 2 einen Wechsel der Saugseite (-) von der Leeseite zur Luvseite, wobei eine Stallposition erreicht ist, bei der die tangentiale Antriebskraft entgegen der Drehrichtung wirkt.

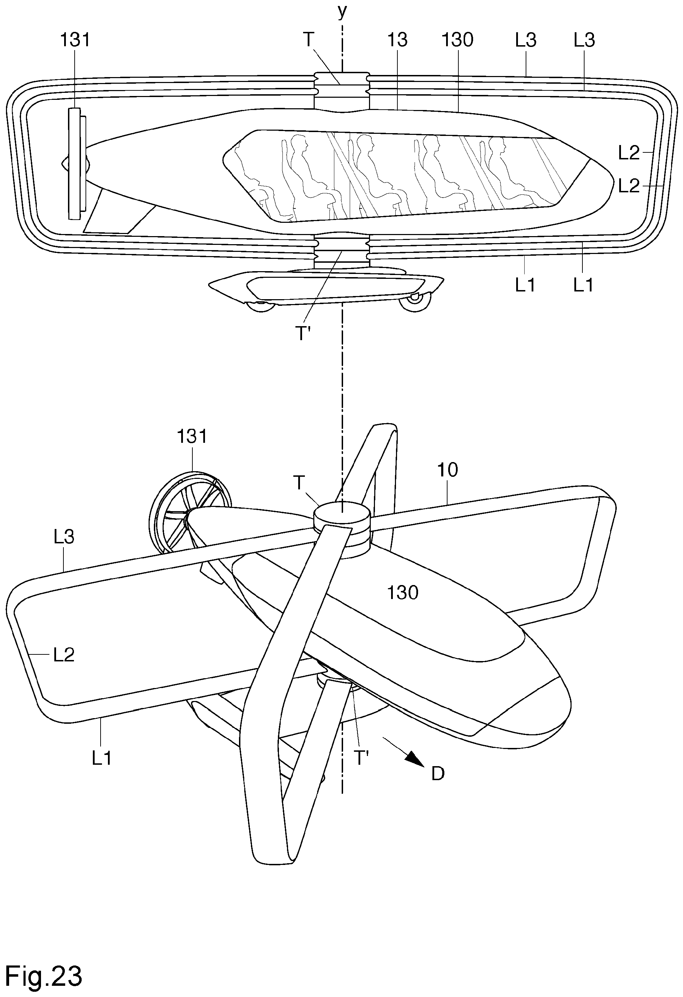

**Fig. 23** zeigt ein Drehflügelfahrzeug 13, das als ein Hubschrauber 130 mit einem von vier bügelförmigen Rotorblättern 1 gebildeten Rotormodul 10 ausgebildet ist, bei dem jeweils zwei paarweise einander gegenüberliegende Rotorblätter 1 gegensinnig um die Rotationsachse y rotieren. Der Rumpf des Hubschraubers 130 ist als eine Kabine für bevorzugt neun Passagiere und einen Piloten ausgebildet und weist bevorzugt eine stromlinienförmige Tropfenform auf, an deren hinterem Ende eine Propelleranordnung 131 angeordnet ist. Die vier bügelförmigen Rotorblätter sind jeweils an ihrem oberen und unteren Ende über Drehlager T,T' mit dem Rumpf verbunden. Dabei ist jeweils ein Rotorblatt 1 in drei Längsabschnitte L1-L3 untergliedert, wobei der äußerste Längsabschnitt L2 den Rumpf einschließlich der Propelleranordnung 180 am Heck umrundet und dazu ausgebildet ist, wie in Fig. 5 gezeigt, im Schwebeflug den Schub im Umkreis von 360° in jede beliebige Richtung zu lenken, während das Rotormodul 10 des Hubschraubers 130 in den Längsabschnitten L1,L3 dazu ausgebildet ist, Auftrieb zu erzeugen, der mittels des verstellbaren asymmetrischen Flügelprofils 2 steuerbar ist. Die von zwei gegenläufig rotierenden Propellern gebildete Propelleranordnung 131 am Heck dient ausschließlich der Erzeugung von Schub in Flugrichtung, sodass mit einem hybriden Antriebskonzept Fluggeschwindigkeiten von bis zu fünfhundert km/h ermöglicht werden. Eine Antriebsleistung von sechshundert bis achthundert KW ist ausreichend, um diese Flugleistung zu ermöglichen.

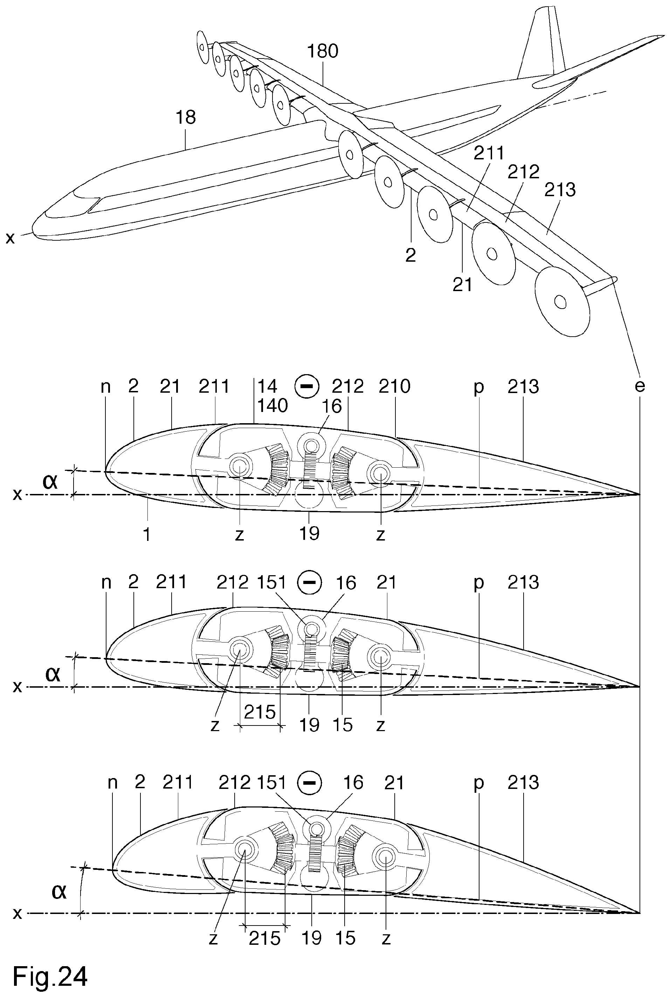

**Fig. 24** zeigt ein Flugzeug 18, bei dem das variable asymmetrische Flügelprofil 2 für die Ausbildung der Tragflächen 180 genutzt wird. Das mittlere Flügelsegment 212 des asymmetrischen Flügelprofils 2 ist starr mit dem Rumpf des Flugzeugs 18 verbunden und dient als Längsträger für die Tragfläche 180. Das elektrisch betriebene Flugzeug 18 ist für eine Betriebsgeschwindigkeit von z.B. 500 km/h ausgelegt. Die elektromechanische Verstellvorrichtung 15 entspricht dem in Fig. 15 erläuterten Ausführungsbeispiel. Der erste von oben nach unten gesehene Profilquerschnitt zeigt ein asymmetrisches Flügelprofil 2, dessen Profilsehne p einen positiven Anstellwinkel α von 1,5 bis 2 Grad gegenüber einer relativen Anströmung δ und gegenüber der Längsmittelachse x des Flugzeugs aufweist, während der zweite Querschnitt eine Flügelstellung mit einem größeren Anstellwinkel α von etwa drei bis vier Grad zeigt, die den von der Tragfläche 180 bewirkten Auftrieb vergrößert. Der untere Querschnitt zeigt eine Flügelstellung für Start und Landung, bei der das vordere Flügelsegment 211 und das hintere Flügelsegment 213 gegenüber dem von dem Längsträger gebildeten mittleren Flügelsegment 212 so stark eingedreht sind, dass die Profilehne p einen positiven Anstellwinkel α von 6 Grad gegenüber der Längsmittelachse x des Flugzeugs 18 aufweist. Gelenkspalte 210 zwischen den drei Flügelsegmenten 211-213 ermöglichen eine laminare Umströmung des Flügelprofils 2 der Tragfläche 180. Die vollkommene Integration der Verstellvorrichtung 15 in das non dem mittleren Flügelsegment 212 gebildete Gehäuse 14 erübrigt herkömmliche Vorflügel und Klappen einschließlich der Landeklappenträgerverkleidungen den sogenannte Kanus an der Flügelunterseite.

Naturgemäß sind im Rahmen der vorliegenden Erfindung vielfältige Abwandlungen und Modifikationen möglich.

**Bezugszeichenliste**

| | | | |
|---|---|---|---|
| Rotorblatt | 1 | **Asymmetrisches** Flügelprofil | 2 |
| Rotormodul | 10 | Saugseite | (-) |
| Windturbine | 11 | Anstellwinkel, positiv, negativ | α,α' |
| Wasserturbine | 12 | Versatzwinkel | β |
| Schwimmkörper | 120 | **Anströmung** | **δ** |
| Anker | 121 | Luftspalt | a |
| Ringträger | 122 | Stellpositionen | **C1,C2** |
| Drehflügelfahrzeug | 13 | Flügelhinterkante | e |
| Hubschrauber | 130 | Strömung | F,**F'** |
| **Propelleranordnung** | **131** | Flugrichtung | D |
| **Gehäuse** | **14** | Längsabschnitt | L1-Ln |
| Widerlager | 140 | Flügelnase | n |
| Hohlprofil | 141 | Profilsehne | p |
| **Seilverspannung** | **142** | Profildicke | q |
| Verstellvorrichtung | 15 | Radius | r1,r2 |
| Halteelement | 151 | **Rotationsebene** | **R**,**R**' |
| Zylindergesperre | 152 | **Drehlager** | **T,T**' |
| Elektromotor | 16 | Umlaufbahn | U |
| Läufer | 160 | Längsachse | x |
| Stator | 161 | Rotationsachse | y |
| Erregerwicklung | 162 | Drehachse | z,z' |
| Permanentmagnet | 163 | Dreiteiliges Flügelprofil | 21 |
| Schrittmotor | 164 | **Gelenkspalt** | 210 |
| Linearmotor | 165 | Vorderes Flügelsegment | 211 |
| **Speichenrad** | **17** | Mittleres Flügelsegment | 212 |
| **Nabe** | **170** | Hinteres Flügelsegment | 213 |
| **Ballastierte Boje** | **171** | Scharnier | 214 |
| **Flugzeug** | **18** | Hebelarm | 215 |
| **Tragfläche** | **180** | Gegengewicht | 216 |
| Umlaufpositionen | I-XII | Schieber | 217 |

## Patentansprüche

1. Vorrichtung, welche ein asymmetrisches Flügelprofil (2) und eine Verstellvorrichtung (15) aufweist, welches asymmetrische Flügelprofil (2) eine Profildicke (q) und eine sich zwischen einer Flügelnase (n) und einer Flügelhinterkante (e) ersteckende Profilsehne (p) aufweist, welches asymmetrische Flügelprofil (2) in mindestens einem Längsabschnitt (L1-Ln) ein dreiteiliges variables Flügelprofil (21) aufweist, bei dem ein vorderes und ein hinteres Flügelsegment (211, 213) mittels von zwei Scharnieren (214) mit Drehachsen (z) an ein mittleres Flügelsegment (212) angelenkt sind und dazu eingerichtet sind, gegenüber dem mittleren Flügelsegment (212) eine Drehbewegung um die zugeordnete Drehachse (z) zu ermöglichen, welches mittlere Flügelsegment (212) ein in sich starres Gehäuse (19) für die Aufnahme der Verstellvorrichtung (15) bildet und als ein Längsträger des asymmetrischen Flügelprofils (2) ein Hohlprofil (141) aufweist, das in mindestens einem Längsabschnitt (L1-Ln) ein Widerlager (140) für die Verstellvorrichtung (15) bildet, wobei die Verstellvorrichtung (15) mindestens einen in dem mittleren Flügelsegment (212) vorgesehenen Elektromotor (16) aufweist und dazu eingerichtet ist, mit Hilfe des mindestens einen Elektromotors (16) ein simultanes Ein- oder Ausdrehen des vorderen und hinteren Flügelsegments (212, 213) mit zueinander gegensinniger Drehrichtung und damit eine variable Saugseite (-) des asymmetrischen Flügelprofils (2) zu ermöglichen, wobei sich der Anstellwinkel (α,α') der Profilsehne (p) beim Ein- oder Ausdrehen des vorderen und hinteren Flügelsegments (212, 213) ändert.

2. Vorrichtung nach Anspruch 1, welche eine Mehrzahl der asymmetrischen Flügelprofile (2) und einen Motorgenerator aufweist, welche Flügelprofile (2) als Rotorblätter (1) ausgebildet sind, welche Rotorblätter (1) ein Rotormodul (10) ausbilden, welches Rotormodul (10) dazu ausgebildet ist, auf einer Umlaufbahn (U) mit Radien (r1,r2) um eine Rotationsachse (y) zu rotieren, welche Rotorblätter (1) mit dem Motorgenerator verbunden sind, und welche Rotorblätter (1) bevorzugt gerade, bügelförmig oder polygonzugförmig ausgebildet sind.

3. Vorrichtung nach Anspruch 2, bei welcher die Mehrzahl von Rotorblättern (1) an mindestens einem Ende mit dem Motorgenerator verbunden sind, und bei welchem Rotormodul (10) ein Durchmesser mit Stellpositionen (C1) die Umlaufbahn (U) in zwei Hälften unterteilt, wobei die Saugseiten (-) des variablen Flügelprofils (2) mittels der Verstellvorrichtung (15) in einer ersten Hälfte der Umlaufbahn (U) an der Außenseite und in einer zweiten Hälfte an der Innenseite der Umlaufbahn (U) eingestellt werden und wobei das variable Flügelprofil (2) an dem Durchmesser mit den Stellpositionen (C1) temporär ein symmetrisches Flügelprofil (2) aufweist, dessen Profilsehne (p) an den Stellpositionen (C1) tangential zu der kreisförmigen Umlaufbahn (U) des Rotormoduls (10) ausgerichtet ist und die Profilsehne (p) durch Ein- und Ausdrehen des vorderen und hinteren Flügelsegments (211,213), jeweils mit gegensinniger Drehrichtung, in beiden Hälften der Umlaufbahn (U) einen positiven Anstellwinkel (α) gegenüber einer Tangente an der Umlaufbahn (U) aufweist und der Längsträger (14) des mittleren Flügelsegments (222) als ein kastenförmiges Hohlprofil (141) ausgebildet ist, dessen auf der Umlaufbahn (U) einander gegenüberliegenden Flansche einen Teil der Oberfläche des asymmetrischen Flügelprofils (2) bilden und eine Mehrzahl von Hohlprofilen (141) an Knotenpunkten mit queraussteifenden Ringträgern (122) verbunden sind und ein selbsttragendes, in sich biege-, schub- und torsionssteifes Rotormodul (10) ausbilden.

4. Vorrichtung nach einem Anspruch 2 oder 3, bei welcher die Rotorblätter (1) in dem mindestens einen Längsabschnitt (L1-Ln) parallel zu der Rotationsachse (y) ausgerichtet sind, wobei an einem Durchmesser der Umlaufbahn (U) mit dem Radius (r1) an einander gegenüberliegenden und im Vollwinkel frei einstellbaren Stellpositionen (C1) die Verstellvorrichtung (15) derart betätigt wird, dass die Saugseite (-) des variablen Flügelprofils (2) in einem Umlauf des Rotorblatts (1) von der Außen- auf die Innenseite der Umlaufbahn (U) wechselt und umgekehrt, wobei das vordere und das hintere Flügelsegment (211,213) jeweils an den Stellpositionen (C1) in den Drehachsen (z) der Scharniere (214) mit gegensinniger Drehrichtung um maximal 9 Grad und bevorzugt um maximal 8 Grad gegenüber dem mittleren, von dem Längsträger (14) gebildeten Flügelsegment (212) verstellbar ist.

5. Vorrichtung nach einem der Ansprüche 2 bis 4, welche dazu eingerichtet ist, ein Rotieren des Rotormoduls (2) um eine horizontale Rotationsachse (y) und ein Rotieren eines seilverspannten Speichenrads (17) mit einer Nabe (170) und mit einem äußeren, als Druckring ausgebildeten Ringträger (122) in einer vertikalen Rotationsebene (R') zu ermöglichen, welches Rotormodul (2) mittels eines Azimutlagers an einem Mast zu der jeweiligen Richtung der Strömung (F) ausrichtbar ist, und welche Vorrichtung dazu eingerichtet ist, eine Mehrzahl von Rotorblättern (1) auf einer ringförmigen Umlaufbahn (U) mit Radien (r1,r2) um die horizontale Rotationsachse (y) zu rotieren und in der vertikalen Rotationsebene (R') die mittleren Flügelsegmente (212) der in sich verwunden ausgebildeten Rotorblätter (1) mittels von paarweise einander gegenüberliegenden Rotorköpfen biegesteif mit dem Ringträger (122) derart zu verbinden, dass in jedem Längsabschnitt (L1-Ln) eines in sich verwundenen Rotorblatts (1) die Profilsehne (p) des asymmetrischen Flügelprofils (2) gegenüber einer aus der Wind- und der Umlaufgeschwindigkeit resultierende Anströmung (A) einen positiven Anstellwinkel (α) von bis zu 7 Grad aufweist, wobei die Vorrichtung für eine Stall-Pitch-Regulierung bevorzugt dazu eingerichtet ist, einen negativen Anstellwinkel (α') der Profilsehne (p) gegenüber der aus der Wind- und der Umlaufgeschwindigkeit resultierenden Anströmung zu bewirken.

6. Vorrichtung nach einem der Ansprüche 2 bis 5, bei welcher die Verstellvorrichtung (15) als elektromechanische Verstellvorrichtung (15) mit Halteelementen (151) ausgebildet ist, wobei in jedem Längsabschnitt (L1-Ln) des Rotorblatts (1) mindestens einer der Elektromotoren (16) mit einem Schritt-Rastgetriebe vorgesehen ist, und welche Halteelemente (151) entweder von einem mit der Welle des Elektromotors (16) verbundenen Zylindergesperre (152) oder von einem mit der Welle des Elektromotors (16) verbundenen Schneckenrad gebildet werden, wobei die Drehrichtung des Elektromotors (16) mit dem Schritt-Rastgetriebe in einem Umlauf des Rotorblatts (1) jeweils an den Stellpositionen (C1) der Umlaufbahn (U) wechselt.

7. Vorrichtung nach einem der Ansprüche 2 bis 6, welche als Drehflügelfahrzeug (13) oder als Windturbine (11) oder als Wasserturbine (12) ausgebildet ist,
wobei
- im Falle des Drehflügelfahrzeugs (13) an den Stellpositionen (C1) der Umlaufbahn (U) die Saugseite (-) des variablen Flügelprofils (2) der Rotorblätter (1) mittels der Verstellvorrichtung (15) in beiden Hälften der Umlaufbahn (U) des Rotormoduls (10) zu der jeweiligen Flugrichtung (D) ausrichtbar ist und der Motorgenerator als Motor betrieben wird, um Schub zu erzeugen, und
- im Falle der Wind- oder Wasserturbine (11,12) unabhängig von einer horizontal oder vertikal ausgerichteten Rotationsachse (y) an den Stellpositionen (C1) der Umlaufbahn (U) die Saugseite (-) des variablen Flügelprofils (2) der Rotorblätter (1) mittels der Verstellvorrichtung (15) zur Leeseite der Strömung (F) ausrichtbar ist, und der Motorgenerator zumindest zeitweise als Generator betreibbar ist und zumindest zeitweise als Motor betreibbar ist, um die Wind- oder Wasserturbine (11, 12) bei schwacher Strömung (F) auf eine für den Selbstlauf erforderliche Drehzahl zu beschleunigen.

8. Vorrichtung nach einem der Ansprüche 2 bis 7, welche als Drehflügelfahrzeug (13), insbesondere als Hubschrauber (130), ausgebildet ist und entweder mit einem Rotormodul (10) oder mit einem frontseitigen und einem heckseitigen, jeweils mit gegensinniger Drehrichtung rotierenden Rotormodul (10) ausgebildet ist, wobei das Rotorblatt (1) bügelförmig ausgebildet ist und einen unteren, in Drehrichtung des Rotormoduls (10) vorauslaufenden Längsabschnitt (L1), einen mittleren Längsabschnitt (L2) und einen oberen, in Drehrichtung des Rotormoduls (10) nachlaufenden Längsabschnitt (L3) aufweist, wobei der untere Längsabschnitt (L1) gegenüber dem oberen Längsabschnitt (L3) einen Versatzwinkel (β) in Umfangsrichtung aufweist und der mittlere Längsabschnitt (L2) den unteren mit dem oberen Längsabschnitt (L1,L3) verbindet und mit einer Steigung in Drehrichtung ausgebildet ist, bei welchen Rotormodulen (10) in den unteren und oberen Längsabschnitten (L1,L3) der Durchmesser mit den Stellpositionen (C1) jeweils in Flugrichtung (D) und in dem mittleren Längsabschnitt (L2) jeweils quer zur Flugrichtung (D) ausrichtbar ist, wobei der Versatzwinkel (β) bevorzugt etwa 10 Grad beträgt.

9. Vorrichtung nach einem der Ansprüche 2 bis 8, welche als Hubschrauber (13) ausgebildet ist, bei welcher ein von vier bügelförmigen Rotorblättern (1) gebildetes Rotormodul (10) zusammen mit einer mit dem Rumpf des Hubschraubers (130) verbundenen heckseitigen Propelleranordnung (131) ein hybrides Antriebssystem bildet, bei dem die vier bügelförmigen Rotorblätter (1) jeweils paarweise und mit gegensinniger Drehrichtung um die Rotationachse (y) und um einen stromlinienförmig ausgebildeten Rumpf einschließlich der heckseitigen Propelleranordnung (131) rotieren, wobei ein bügelförmiges Rotorblatt (1) jeweils einen oberhalb und unterhalb des Rumpfs parallel zu der Längsachse (x) angeordneten Längsabschnitt (L1,L3) aufweist und die Längsabschnitte (L1,L3) jeweils an ihren äußeren Enden durch einen parallel zu der Rotationsachse (y) angeordneten Längsabschnitt (L2) verbunden sind, der dazu ausgebildet ist, den Durchmesser mit den Stellpositionen (C1) im Umkreis von 360 Grad jeweils senkrecht zu einer wählbaren Flugrichtung (D) auszurichten, um aus dem Stand Schub in die wählbare Flugrichtung (D) zu erzeugen.

10. Vorrichtung nach einem der Ansprüche 2 bis 9, welche als Wasserturbine (12) ausgebildet ist, welche eine horizontal oder vertikal ausgerichteten Rotationsachse (y) aufweist, die in einem Gewässer mit einer Strömung (F) entweder in einem Querbauwerk des Fließgewässers, oder in dem Fließgewässer schwimmend verankert ist, und welche einen Schwimmkörper (120) an der Wasseroberfläche aufweist, der mittels von mindestens einem Anker (121) und Ankerseilen am Grund des Gewässers verankert ist und den ringförmigen, getriebelosen Motorgenerator mit einer Welle aufnimmt, die unterhalb des Schwimmkörpers (120) einen radiale Abstand mit dem Radius (r1) zu mindestens einem oberen und einem unteren Ringträger (122) des Rotormoduls (10) aufweist, und welche oberen und unteren Ringträger (122) zusammen mit der Welle und mit den Längsträgern (14) der dreiteiligen Flügelprofile (21) zu einem biege-, schub- und torsionssteifen Rotormodul (10) verbunden sind, wobei der Schwimmkörper (120) bevorzugt entweder als ein rechteckiges Floß mit PV-Kollektoren an der Oberseite oder als eine diskusförmige Scheibe oder als ein Schwimmring ausgebildet ist.

11. Vorrichtung nach einem der Ansprüche 2 bis 10, bei welcher die Rotorblätter (1) gerade ausgebildet sind und auf einer Umlaufbahn (U) mit einem inneren und einem äußeren Radius (r1,r2) in einer Rotationsebene (R) um die Rotationsachse (y) rotieren, wobei der von dem mittleren Flügelsegment (212) gebildete Längsträger (14) des Rotorblatts (1) entweder an seinem äußeren oder an seinem inneren Ende mit dem Motorgenerator verbunden ist und die Verstellvorrichtung (15)
- im Falle einer Windturbine (11) oder einer Wasserturbine (12) dazu ausgebildet sind, die Saugseiten (-) der variablen Flügelprofile (2) in einer periodisch diametral die Richtung wechselnden Strömung (F,F') zur Leeseite auszurichten, und
- im Falle eines Drehflügelfahrzeugs (13) dazu ausgebildet ist, einen Schub in Flugrichtung (D) oder einen Umkehrschub entgegen der Flugrichtung (D) zu erzeugen, oder
- im Falle eines Drehflügelfahrzeugs (13) mit einem Querstrahlruder als ein Querstrahlruder dazu ausgebildet ist, einen Schub in eine von zwei möglichen Richtungen zu erzeugen.

12. Vorrichtung nach einem der Ansprüche 2 bis 11, welche als Windturbine (11) oder als Wasserturbine (12) ausgebildet ist, und welche dazu eingerichtet ist, in einer regelmäßig die Richtung wechselnden Strömung (F,F') die Saugseite (-) einer Mehrzahl von senkrecht und radial zu einer Rotationsachse (y) angeordneten Rotorblättern (1) mittels der Verstellvorrichtung (15) synchron zum Wechsel der Strömungsrichtung jeweils zur strömungsabgewandten Seite hin zu wechseln, wobei das variable Flügelprofil (2) des Rotorblatts (1) in einer Übergangsstellung temporär ein symmetrisches Flügelprofil (2) mit einem Anstellwinkel (α) der Profilsehne (p) von null Grad aufweist und durch die Betätigung der Verstellvorrichtung (15) die jeweilige Arbeitsstellung des asymmetrischen Flügelprofils (2) einen positiven Anstellwinkel (α) aufweist, welcher positive Anstellwinkel (α) bevorzugt bis zu vier Grad jeweils in beide Richtungen der Strömung (F,F') beträgt.

13. Vorrichtung nach einem der Ansprüche 2 bis 12, welche als Windturbine (11) ausgebildet ist, bei welcher das Rotormodul (10) als Kreisel dazu ausgebildet ist, die durch Kreiselmomente und Kreiselkräfte hervorgerufene Massenträgheit für eine Stabilisierung der vertikalen Rotationsachse (y) des als Speichenrad (17) mit einer horizontalen Rotationsebene (R') ausgebildeten Rotormoduls (10) zu nutzen, bei welchem Rotormodul (10) Trag- und Spannseile einen äußeren mit einem Radius (r1) von der Rotationsachse (y) beabstandeten Ringträger (122) mit einer Nabe (170) verbinden, wobei der als Druckring ausgebildete Ringträger (122) eine Mehrzahl von parallel zu der Rotationsachse (y) angeordnete gerade Rotorblätter (1) trägt, die mittels einer Seilverspannung (142) der Längsträger (14) mit dem Ringträger (122) und mit den von Trag- und Spannseilen gebildeten Speichen des Speichenrads (17) mit der Nabe (170) und über ein oberes und ein unteres Drehlager (T,T') mit einer Tragkonstruktion der Windturbine (11) derart verbunden sind, dass ein Luftspalt zwischen mindestens einem koaxial und konzentrisch zu der Rotationsachse (y) angeordneten tragkonstruktionsseitigen Stator und mindestens einem rotorseitigen Läufer des Motorgenerators der Windturbine (11) ausgebildet ist, wobei die Tragkonstruktion onshore oder offshore in einem Baugrund verankerbar ist und die Kreiselwirkung bevorzugt für eine Windturbine (11) genutzt wird, deren Tragkonstruktion einen als ballastierte Boje (171) ausgebildeten Schwimmkörper (120) aufweist, der mittels von Seilen und Ankern (121) am Grund des Meeres verankerbar ist, wobei das Rotormodul (10) bevorzugt mit einem Durchmesser von mehr als hundert Metern, weiter bevorzugt von mehr als zweihundert Metern ausbildbar ist.

14. Vorrichtung nach einem der Ansprüche 2 bis 13, welche als Windturbine (11) ausgebildet ist, bei welcher eine Mehrzahl von Rotormodulen (10) vertikal übereinander gestapelt ist und von einem basisseitigen Ringträger (122) getragen wird, der den Druckring eines biege-, schub-, und torsionssteifen Speichenrads (17) bildet, dessen konzentrisch und koaxial zu der Rotationsachse (y) angeordnete Nabe (170) an der Innenseite den Läufer des Motorgenerators aufnimmt und mittels eines oberen Drehlagers (T) und eines unteren Drehlagers (T') über einen Luftspalt mit einem koaxial und konzentrisch zu der Rotationsachse (y) angeordneten Stator des Motorgenerators verbunden ist, welcher Stator entweder an einen Kragarm der Gründung der Windturbine (11) oder im Falle einer schwimmenden Windturbine (11) an einer ballastierten Boje (171) angeschlossen ist.

15. Vorrichtung nach einem der vorhergehenden Ansprüche, welche als Flugzeug (18) mit mindestens einer Tragfläche (180) ausgebildet ist, bei welcher die Verstellvorrichtung (15) ein Schritt-Rastgetriebe und ein Halteelement (151) aufweist, wobei in mindestens einem Längsabschnitt (L1-Ln) des asymmetrischen Flügelprofils (2) das mittlere Flügelsegment (212) mit mindestens einem Elektromotor (16) und das vordere und das hintere Flügelsegment (211,213) des dreiteiligen Flügelprofils (21) mit dem Halteelement (151) der Verstellvorrichtung (15) derart verbunden sind, dass durch die Betätigung der Verstellvorrichtung (15) der von der Saugseite (-) des variablen Flügelprofils (2) bewirkte Auftrieb an die jeweilige Flugsituation des Flugzeugs (18) anpassbar ist, wobei das Schritt-Rastgetriebe bevorzugt eine Übersetzung der Stellkraft von 1 zu 10 ermöglicht.

## Claims

1. A device comprising an asymmetrical wing profile (2) and an adjusting device (15), which asymmetrical wing profile (2) has a profile thickness (q) and a chord line (p) extending between a leading edge (n) and a trailing edge (e) of the wing, which asymmetrical wing profile (2) has a three-part variable wing profile (21) in at least one longitudinal section (L1-Ln), in which wing profile (21) a front and a rear wing segment (211, 213) are hinged to a middle wing segment (212) by means of two hinges (214) with axes of rotation (z) and are configured to enable a rotary movement about the assigned axis of rotation (z) relative to the middle wing segment (212), which middle wing segment (212) forms an inherently rigid housing (19) for receiving the adjusting device (15) and, as a longitudinal carrier of the asymmetrical wing profile (2), has a hollow profile (141) which forms an abutment (140) for the adjusting device (15) in at least one longitudinal section (L1-Ln), wherein the adjusting device (15) has at least one electric motor (16) provided in the middle wing segment (212) and is configured to enable simultaneous rotating in or rotating out of the front and rear wing segment (212, 213) in directions of rotation opposite to each other with the aid of the at least one electric motor (16) and thus to enable a variable suction side (-) of the asymmetrical wing profile (2), wherein the angle of attack (α,α') of the chord line (p) changes when the front and rear wing segment (212, 213) are rotated in or rotated out.

2. The device according to claim 1, which has a plurality of the asymmetrical wing profiles (2) and a motor generator, which wing profiles (2) are formed as rotor blades (1), which rotor blades (1) form a rotor module (10), which rotor module (10) is formed to rotate on an orbit (U) with radii (r1, r2) about an axis of rotation (y), which rotor blades (1) are connected to the motor generator, and which rotor blades (1) are preferably formed to be straight, bow-shaped or polygon-shaped.

3. The device according to claim 2, in which the plurality of rotor blades (1) is connected at at least one end to the motor generator, and in which rotor module (10) a diameter with setting positions (C1) divides the orbit (U) into two halves, wherein the suction sides (-) of the variable wing profile (2) are adjusted by means of the adjusting device (15) in a first half of the orbit (U) on the outer side and in a second half on the inner side of the orbit (U) and wherein the variable wing profile (2) at the diameter with the setting positions (C1) temporarily has a symmetrical wing profile (2), the chord line (p) of which is oriented tangentially to the circular orbit (U) of the rotor module (10) at the setting positions (C1), and the chord line (p), by rotating in and rotating out the front and rear wing segments (211, 213), in each case in opposite directions of rotation, has a positive angle of attack (α) relative to a tangent to the orbit (U) in both halves of the orbit (U), and the longitudinal carrier (14) of the middle wing segment (222) is formed as a box-shaped hollow profile (141), the flanges of which, which are opposite each other on the orbit (U), form part of the surface of the asymmetrical wing profile (2), and a plurality of hollow profiles (141) is connected at nodal points to transversely stiffening ring carriers (122) and forms a self-supporting rotor module (10) that is inherently resistant to bending, shear and torsion.

4. The device according to claim 2 or 3, in which the rotor blades (1) are oriented parallel to the axis of rotation (y) in the at least one longitudinal section (L1-Ln), wherein the adjusting device (15), at a diameter of the orbit (U) with the radius (r1), at setting positions (C1) opposite to each other and freely adjustable over the entire angular range, is actuated in such a way that the suction side (-) of the variable wing profile (2) changes from the outer to the inner side of the orbit (U) and vice versa in one revolution of the rotor blade (1), wherein the front and rear wing segments (211, 213) are each adjustable at the setting positions (C1) in the axes of rotation (z) of the hinges (214) with opposite directions of rotation by a maximum of 9 degrees and preferably by a maximum of 8 degrees relative to the middle wing segment (212) formed by the longitudinal carrier (14).

5. The device according to any of claims 2 to 4, which is configured to enable rotation of the rotor module (2) about a horizontal axis of rotation (y) and rotation of a cable-tensioned spoke wheel (17) with a hub (170) and with an outer ring carrier (122), formed as a compression ring, in a vertical plane of rotation (R'), which rotor module (2) is alignable to the respective direction of the flow (F) by means of an azimuth bearing on a mast, and which device is configured to rotate a plurality of rotor blades (1) on a ring-shaped orbit (U) with radii (r1, r2) about the horizontal axis of rotation (y) and, in the vertical plane of rotation (R'), to connect the middle wing segments (212) of the intrinsically twisted rotor blades (1) to the ring carrier (122) in a flexurally rigid manner by means of rotor heads located opposite each other in pairs in such a way that in each longitudinal section (L1-Ln) of an intrinsically twisted rotor blade (1) the chord line (p) of the asymmetrical wing profile (2) has a positive angle of attack (α) of up to 7 degrees relative to a flow (A) resulting from the wind speed and the rotational speed, wherein, for stall pitch control, the device is preferably configured to cause a negative angle of attack (α') of the chord line (p) relative to the flow resulting from the wind speed and the rotational speed.

6. The device according to any of claims 2 to 5, in which the adjusting device (15) is formed as an electromechanical adjusting device (15) with holding elements (151), wherein in each longitudinal section (L1-Ln) of the rotor blade (1) at least one of the electric motors (16) is provided with a step-lock gear, and which holding elements (151) are formed either by a cylinder lock (152) connected to the shaft of the electric motor (16) or by a worm wheel connected to the shaft of the electric motor (16), wherein the direction of rotation of the electric motor (16) with the step-lock gear changes in one revolution of the rotor blade (1) respectively at the setting positions (C1) of the orbit (U).

7. The device according to any of claims 2 to 6, which is formed as a rotary wing vehicle (13) or as a wind turbine (11) or as a water turbine (12), wherein
- in the case of the rotary wing vehicle (13), at the setting positions (C1) of the orbit (U), the suction side (-) of the variable wing profile (2) of the rotor blades (1) is alignable to the respective flight direction (D) by means of the adjusting device (15) in both halves of the orbit (U) of the rotor module (10) and the motor generator is operated as a motor to generate thrust, and
- in the case of the wind or water turbine (11, 12), the suction side (-) of the variable wing profile (2) of the rotor blades (1) is alignable, at the setting positions (C1) of the orbit (U), to the leeward side of the flow (F) by means of the adjusting device (15), independently of a horizontally or vertically oriented axis of rotation (y), and the motor generator is operable at least temporarily as a generator and is operable at least temporarily as a motor in order to accelerate the wind or water turbine (11, 12) to a speed required for self-running when the flow (F) is weak.

8. The device according to any of claims 2 to 7, which is formed as a rotary wing vehicle (13), in particular as a helicopter (130), and is formed either with a rotor module (10) or with a frontside and a rear-side rotor module (10), each rotating in opposite directions of rotation, wherein the rotor blade (1) is formed in the shape of a bow and has a lower longitudinal section (L1) leading in the direction of rotation of the rotor module (10), a middle longitudinal section (L2) and an upper longitudinal section (L3) trailing in the direction of rotation of the rotor module (10), wherein the lower longitudinal section (L1) has an offset angle (β) in the circumferential direction relative to the upper longitudinal section (L3) and the middle longitudinal section (L2) connects the lower longitudinal section with the upper longitudinal section (L1, L3) and is formed with a pitch in the direction of rotation, in which rotor modules (10) in the lower and upper longitudinal sections (L1, L3) the diameter is alignable with the setting positions (C1) respectively in the direction of flight (D) and in the middle longitudinal section (L2) respectively transversely to the direction of flight (D), wherein the offset angle (β) is preferably approximately 10 degrees.

9. The device according to any of claims 2 to 8, which is formed as a helicopter (13), in which a rotor module (10) formed by four bow-shaped rotor blades (1) together with a tail-side propeller arrangement (131) connected to the fuselage of the helicopter (130) forms a hybrid drive system, in which the four bow-shaped rotor blades (1) each rotate in pairs and in opposite directions of rotation about the axis of rotation (y) and about a streamlined fuselage including the tail-side propeller arrangement (131), wherein a bow-shaped rotor blade (1) has a respective longitudinal section (L1, L3) arranged above and below the fuselage parallel to the longitudinal axis (x) and the longitudinal sections (L1, L3) are each connected at their outer ends by a longitudinal section (L2) arranged parallel to the axis of rotation (y), which longitudinal section (L2) is formed to align the diameter with the setting positions (C1) through an angle range of 360 degrees respectively perpendicular to a selectable flight direction (D) to generate thrust from a standing position in the selectable flight direction (D).

10. The device according to any of claims 2 to 9, which is formed as a water turbine (12) having a horizontally or vertically oriented axis of rotation (y), which is anchored in a body of water with a flow (F), either in a transverse structure of the flowing body of water or floating in the flowing body of water, and which has a floating body (120) on the water surface, which (120) is anchored to the bottom of the body of water by means of at least one anchor (121) and anchor ropes and receives the ring-shaped, gearless motor generator with a shaft which, below the floating body (120), has a radial distance with the radius (r1) to at least one upper and one lower ring carrier (122) of the rotor module (10), and which upper and lower ring carriers (122) are connected together with the shaft and with the longitudinal carriers (14) of the three-part wing profiles (21) to form a rotor module (10) which is resistant to bending, shear and torsion, wherein the floating body (120) is preferably formed either as a rectangular raft with PV collectors on the top face or as a discus-shaped disk or as a floating ring.

11. The device according to any of claims 2 to 10, in which the rotor blades (1) are formed straight and rotate on an orbit (U) with an inner and an outer radius (r1, r2) in a plane of rotation (R) about the axis of rotation (y), wherein the longitudinal carrier (14) of the rotor blade (1) formed by the middle wing segment (212) is connected, either at its outer or at its inner end, to the motor generator, and the adjusting device (15)
- in the case of a wind turbine (11) or a water turbine (12) is formed to align the suction sides (-) of the variable wing profiles (2) with the leeward side in a flow (F, F') which periodically changes direction diametrically, and
- in the case of a rotary wing vehicle (13) is formed to generate a thrust in the direction of flight (D) or a reverse thrust against the direction of flight (D), or
- in the case of a rotary wing vehicle (13) with a transverse thruster as a transverse thruster is formed to generate thrust in one of two possible directions.

12. The device according to any of claims 2 to 11, which is formed as a wind turbine (11) or as a water turbine (12), and which is configured to change, in a flow (F, F') which regularly changes direction, the suction side (-) of a plurality of rotor blades (1) arranged perpendicularly and radially to an axis of rotation (y) by means of the adjusting device (15) synchronously with the change in flow direction respectively towards the side facing away from the flow, wherein the variable wing profile (2) of the rotor blade (1) in a transitional position temporarily has a symmetrical wing profile (2) with an angle of attack (α) of the chord line (p) of zero degrees and the respective work position of the asymmetrical wing profile (2), by actuation of the adjusting device (15), has a positive angle of attack (α), which positive angle (α) is preferably up to four degrees in each of the two directions of the flow (F,F').

13. The device according to any of claims 2 to 12, which is formed as a wind turbine (11), in which the rotor module (10) is formed as a gyroscope for using the mass inertia caused by gyroscopic moments and gyroscopic forces to stabilize the vertical axis of rotation (y) of the rotor module (10) formed as a spoked wheel (17) with a horizontal plane of rotation (R'), in which rotor module (10) supporting and tensioning cables connect an outer ring carrier (122), which is spaced apart from the axis of rotation (y) by a radius (r1), to a hub (170), wherein the ring carrier (122) formed as a compression ring carries a plurality of straight rotor blades (1) arranged parallel to the axis of rotation (y), which are connected by means of a cable tensioning (142) of the longitudinal carriers (14) to the ring carrier (122) and with the spokes of the spoked wheel (17), which spokes are formed by supporting and tensioning cables, to the hub (170) and, via an upper and a lower pivot bearing (T, T'), to a carrier structure of the wind turbine (11) such that an air gap is formed between at least one stator on the support structure side, arranged coaxially and concentrically to the axis of rotation (y), and at least one rotor-side rotor of the motor generator of the wind turbine (11), wherein the supporting structure can be anchored onshore or offshore in a foundation and the gyroscopic effect is preferably used for a wind turbine (11), the supporting structure of which has a floating body (120) formed as a ballasted buoy (171), which floating body (120) can be anchored to the bottom of the sea by means of ropes and anchors (121), wherein the rotor module (10) can preferably be formed with a diameter of more than one hundred meters, more preferably of more than two hundred meters.

14. The device according to any of claims 2 to 13, which is formed as a wind turbine (11), in which a plurality of rotor modules (10) is stacked vertically on top of each other and is supported by a base-side ring carrier (122), which forms the compression ring of a spoke wheel (17) that is resistant to bending, shear and torsion, the hub (170) of which, arranged concentrically and coaxially to the axis of rotation (y), receives the rotor of the motor generator on the inner side and is connected, by means of an upper pivot bearing (T) and a lower pivot bearing (T'), via an air gap, to a stator of the motor generator arranged coaxially and concentrically to the axis of rotation (y), which stator is coupled either to a cantilever arm of the base of the wind turbine (11) or, in the case of a floating wind turbine (11), to a ballasted buoy (171).

15. The device according to any of the preceding claims, which is formed as an aircraft (18) with at least one lift-generating surface (180), wherein the adjusting device (15) has a step-lock gear and a holding element (151), wherein, in at least one longitudinal section (L1-Ln) of the asymmetrical wing profile (2), the middle wing segment (212) is connected to at least one electric motor (16) and the front and rear wing segments (211, 213) of the three-part wing profile (21) are connected to the holding element (151) of the adjusting device (15) in such a way that the lift generated by the suction side (-) of the variable wing profile (2) can be adapted to the respective flight situation of the aircraft (18) by actuating the adjusting device (15), wherein the step-lock gear preferably enables a ratio of the setting force of 1 to 10.

## Revendications

1. Dispositif présentant un profil d'aile asymétrique (2) et un dispositif de réglage (15), ledit profil d'aile asymétrique (2) présentant une épaisseur de profil (q) et une corde de profil (p) s'étendant entre un nez d'aile (n) et un bord de fuite d'aile (e), ledit profil d'aile asymétrique (2) présentant, dans au moins une section longitudinale (L1-Ln), un profil d'aile variable en trois parties (21), un segment d'aile avant et un segment d'aile arrière (211, 213) étant articulés au moyen de deux charnières (214) avec des axes de rotation (z) à un segment d'aile central (212) et agencés pour permettre, par rapport au segment d'aile central (212), un mouvement de rotation autour de l'axe de rotation associé (z), ledit segment d'aile central (212) formant un boîtier rigide (19) destiné à loger le dispositif de réglage (15) et présentant, en tant que longeron du profil d'aile asymétrique (2), un profilé creux (141) qui, dans au moins une section longitudinale (L1-Ln) forme une butée (140) pour le dispositif de réglage (15), le dispositif de réglage (15) présentant au moins un moteur électrique (16) prévu dans le segment d'aile central (212) et étant conçu pour permettre, à l'aide dudit au moins un moteur électrique (16), un braquage simultané vers l'intérieur ou vers l'extérieur des segments d'aile avant et arrière (212, 213) dans des sens de rotation opposés l'un à l'autre et permettant ainsi d'obtenir un côté d'aspiration variable (-) du profil d'aile asymétrique (2), l'angle d'attaque (α, α') de la corde du profil (p) variant lors de l'inclinaison vers l'intérieur ou vers l'extérieur des segments d'aile avant et arrière (212, 213).

2. Dispositif selon la revendication 1, présentant une pluralité de profils d'ailes asymétriques (2) et un moteur-générateur, lesdits profils d'ailes (2) étant conçus comme des pales de rotor (1), lesquelles pales de rotor (1) formant un module de rotor (10), lequel module de rotor (10) étant conçu pour tourner sur une trajectoire circulaire (U) de rayons (r1, r2) autour d'un axe de rotation (y), lesdits pales de rotor (1) étant reliées au moteur-générateur, et lesdites pales de rotor (1) étant de préférence rectilignes, en forme d'étrier ou en forme de polygone allongé.

3. Dispositif selon la revendication 2, dans lequel la pluralité de pales de rotor (1) est reliée au moteur-générateur à au moins une extrémité, et dans lequel module de rotor (10), un diamètre comportant des positions de réglage (C1) divise la trajectoire circulaire (U) en deux moitiés, les côtés d'aspiration (-) du profil d'aile variable (2) étant réglés, au moyen du dispositif de réglage (15), sur le côté extérieur dans une première moitié de la trajectoire circulaire (U) et sur le côté intérieur de la trajectoire circulaire (U) dans une seconde moitié, et le profil d'aile variable (2) présentant temporairement, au niveau du diamètre comportant les positions de réglage (C1), un profil d'aile symétrique (2) dont la corde (p) aux positions de réglage (C1) est orientée tangentiellement à la trajectoire circulaire (U) du module de rotor (10) et la corde de profil (p), par rotation vers l'intérieur et vers l'extérieur des segments d'aile avant et arrière (211, 213), chacun tournant dans le sens opposé, présentant, dans les deux moitiés de la trajectoire circulaire (U), un angle d'attaque positif (α) par rapport à une tangente à la trajectoire circulaire (U) et le longeron (14) du segment d'aile central (222) étant formé comme un profilé creux en forme de caisson (141) dont les brides opposées l'une à l'autre sur la trajectoire circulaire (U) forment une partie de la surface du profil d'aile asymétrique (2), et une pluralité de profilés creux (141) étant reliés aux points de jonction par des supports annulaires de renfort transversal (122) et formant un module de rotor (10) autoportant, résistant à la flexion, à la poussée cisaillement et à la torsion.

4. Dispositif selon la revendication 2 ou 3, dans lequel les pales du rotor (1) sont orientées parallèlement à l'axe de rotation (y) dans au moins une section longitudinale (L1-Ln), le dispositif de réglage (15) étant actionné, sur un diamètre de la trajectoire circulaire (U) de rayon (r1), en des positions de réglage (C1) opposées l'une à l'autre et librement réglables en angle complet, de telle sorte que le côté d'aspiration (-) du profil d'aile variable (2) passe, au cours d'une rotation de la pale de rotor (1), du côté extérieur au côté intérieur de la trajectoire de rotation (U) et inversement, les segments d'aile avant et arrière (211, 213) tournant respectivement, aux positions de réglage (C1), autour des axes de rotation (z) des charnières (214), dans des sens de rotation opposés, d'un maximum de 9 degrés et de préférence d'un maximum de 8 degrés par rapport au segment d'aile central (212) formé par le longeron (14).

5. Dispositif selon l'une des revendications 2 à 4, qui est conçu pour permettre la rotation du module de rotor (2) autour d'un axe de rotation horizontal (y) et la rotation d'une roue à rayons (17) tendue par des câbles, comportant un moyeu (170) et un support annulaire extérieur (122) formé en tant qu'anneau de pression (122), dans un plan de rotation vertical (R'), lequel module de rotor (2) peut être orienté au moyen d'un palier azimutal sur un mât en fonction de la direction respective du flux (F), et lequel dispositif est agencé pour faire tourner une pluralité de pales de rotor (1) sur une trajectoire circulaire (U) de rayons (r1, r2) autour de l'axe de rotation horizontal (y) et, dans le plan de rotation vertical (R'), de relier de manière résistante à la flexion les segments d'aile centraux (212) des pales de rotor enroulées sur elles-mêmes (1) au support annulaire (122) au moyen de paires de têtes de rotor opposées l'une à l'autre, de telle sorte que, dans chaque section longitudinale (L1-Ln) d'une pale de rotor (1) enroulée sur elle-même, la corde (p) du profil d'aile asymétrique (2) présente, par rapport à un écoulement (A) résultant de la vitesse du vent et de la vitesse de rotation, un angle d'attaque positif (α) pouvant atteindre 7 degrés, le dispositif de réglage par pas et décrochage étant de préférence conçu pour obtenir un angle d'attaque négatif (α') de la corde de profil (p) par rapport à l'écoulement résultant de la vitesse du vent et de la vitesse de rotation.

6. Dispositif selon l'une des revendications 2 à 5, dans lequel le dispositif de réglage (15) est conçu comme un dispositif de réglage électromécanique (15) comportant des éléments de retenue (151), au moins un des moteurs électriques (16) étant muni d'un engrenage pas à pas dans chaque section longitudinale (L1-Ln) de la pale de rotor (1), et lesdits éléments de retenue (151) étant formés soit par un verrou cylindrique (152) relié à l'arbre du moteur électrique (16), soit par une roue à vis sans fin reliée à l'arbre du moteur électrique (16), le sens de rotation du moteur électrique (16) changeant, grâce à l'engrenage pas à pas, à chaque tour de la pale de rotor (1) au niveau des positions de réglage (C1) de la trajectoire circulaire (U).

7. Dispositif selon l'une des revendications 2 à 6, qui est conçu comme un aéronef à voilure tournante (13), une éolienne (11) ou une turbine hydraulique (12), dans lequel
- dans le cas de l'aéronef à voilure tournante (13), aux positions de réglage (C1) de la trajectoire circulaire (U), le côté d'aspiration (-) du profil variable (2) des pales du rotor (1) peut être orienté, au moyen du dispositif de réglage (15), dans les deux moitiés de la trajectoire circulaire (U) du module de rotor (10) vers la direction de vol respective (D), et le moteur-générateur fonctionne en mode moteur pour produire une poussée, et
- dans le cas de la turbine éolienne ou hydraulique (11, 12), indépendamment d'un axe de rotation (y) orienté horizontalement ou verticalement, le côté d'aspiration (-) du profil d'aile variable (2) des pales de rotor (1) peut être orienté, aux positions de réglage (C1) de la trajectoire circulaire (U), au moyen du dispositif de réglage (15), vers le côté sous le vent du flux (F), et le moteur-générateur peut fonctionner au moins temporairement en tant que générateur et au moins temporairement en tant que moteur afin d'accélérer la turbine éolienne ou hydraulique (11, 12) à une vitesse de rotation nécessaire à son fonctionnement autonome en cas de faible flux (F).

8. Dispositif selon l'une des revendications 2 à 7, qui est conçu comme un aéronef à voilure tournante (13), en particulier comme un hélicoptère (130), et est équipé soit d'un module de rotor (10), soit d'un module de rotor (10) à l'avant et d'un module de rotor (10) à l'arrière, tournant dans des sens opposés, la pale de rotor (1) étant en forme d'étrier et comportant une partie longitudinale inférieure (L1) située en avant dans le sens de rotation du module de rotor (10), une partie longitudinale médiane (L2) et une partie longitudinale supérieure (L3) située en arrière dans le sens de rotation du module de rotor (10), la section longitudinale inférieure (L1) présentant un angle de décalage (β) dans le sens circonférentiel par rapport à la section longitudinale supérieure (L3), et la section longitudinale centrale (L2) reliant la section longitudinale inférieure (L1) à la section longitudinale supérieure (L3) et étant formée avec une pente dans le sens de rotation, le diamètre des modules de rotor (10) pouvant être orienté, dans les sections longitudinales inférieure et supérieure (L1, L3), à chacune des positions de réglage (C1), respectivement dans le sens de vol (D) et, dans la section longitudinale centrale (L2), respectivement transversalement au sens de vol (D), l'angle de décalage (β) étant de préférence d'environ 10 degrés.

9. Dispositif selon l'une des revendications 2 à 8, conçu comme un hélicoptère (13), dans lequel un module de rotor (10) formé de quatre pales de rotor (1) en forme d'étrier forme, conjointement avec un ensemble d'hélices arrière (131) relié au fuselage de l'hélicoptère (130), un système de propulsion hybride, les quatre pales de rotor (1) en forme d'étrier tournant respectivement par paires et dans des sens opposés autour de l'axe de rotation (y) et autour d'un fuselage profilé comprenant l'ensemble d'hélice arrière (131), une pale de rotor (1) en forme d'étrier comportant respectivement une section longitudinale (L1, L3) disposée au-dessus et au-dessous du fuselage parallèlement à l'axe longitudinal (x), et les sections longitudinales (L1, L3) étant reliées respectivement à leurs extrémités extérieures par une section longitudinale (L2) disposée parallèlement à l'axe de rotation (y), conçue pour aligner le diamètre, à chacune des positions de réglage (C1) dans une plage angulaire de 360 degrés, perpendiculairement à une direction de vol sélectionnable (D), afin de générer une poussée à partir de l'arrêt, dans la direction de vol sélectionnable (D).

10. Dispositif selon l'une des revendications 2 à 9, qui est conçu comme une turbine hydraulique (12) présentant un axe de rotation (y) orienté horizontalement ou verticalement, qui est ancrée dans un cours d'eau présentant un flux (F), soit dans un ouvrage transversal du cours d'eau, soit en flottant dans le cours d'eau, et qui comporte un flotteur (120) à la surface de l'eau, lequel est ancré au fond du cours d'eau au moyen d'au moins une ancre (121) et de câbles d'ancrage et qui reçoit le moteur-générateur annulaire sans engrenage avec un arbre qui, sous le flotteur (120), présente une distance radiale de rayon (r1) par rapport à au moins un support annulaire supérieur et un support annulaire inférieur (122) du module rotor (10), et lesquels supports annulaires supérieur et inférieur (122) étant reliés, conjointement avec l'arbre et les longerons (14) des profils d'ailes en trois parties (21), pour former un module de rotor (10) résistant à la flexion, à la poussée et à la torsion, le flotteur (120) étant de préférence réalisé soit sous la forme d'un radeau rectangulaire muni de capteurs photovoltaïques sur sa face supérieure, soit sous la forme d'un plateau en forme de disque, soit sous la forme d'un anneau flottant.

11. Dispositif selon l'une des revendications 2 à 10, dans lequel les pales de rotor (1) sont rectilignes et tournent sur une trajectoire circulaire (U) présentant un rayon intérieur et un rayon extérieur (r1, r2) dans un plan de rotation (R) autour de l'axe de rotation (y), dans lequel le longeron (14) de la pale de rotor (1), formé par le segment d'aile central (212), est relié au moteur-générateur soit à son extrémité extérieure, soit à son extrémité intérieure, et le dispositif de réglage (15) est conçu
- dans le cas d'une éolienne (11) ou d'une turbine hydraulique (12), pour orienter les côtés d'aspiration (-) des profils d'ailes variables (2) vers le côté sous le vent dans un flux (F, F') changeant périodiquement de direction de manière diamétrale, et
- dans le cas d'un aéronef à voilure tournante (13), pour générer une poussée dans la direction de vol (D) ou une poussée inverse contre la direction de vol (D), ou
- dans le cas d'un aéronef à voilure tournante (13) équipé d'un propulseur à jet transversal, pour générer une poussée dans l'une des deux directions possibles en tant que propulseur à jet transversal.

12. Dispositif selon l'une des revendications 2 à 11, qui est conçu comme une éolienne (11) ou une turbine hydraulique (12), et qui est conçu pour faire basculer, dans un flux (F, F') changeant régulièrement de direction, le côté d'aspiration (-) d'une pluralité de pales de rotor (1) disposées perpendiculairement et radialement par rapport à un axe de rotation (y) au moyen du dispositif de réglage (15) de manière synchrone avec le changement de direction du flux, respectivement vers le côté opposé au flux, le profil d'aile variable (2) de la pale de rotor (1) présentant temporairement, dans une position intermédiaire, un profil d'aile symétrique (2) avec un angle d'attaque (α) de la corde du profil (p) de zéro degré et, par l'actionnement du dispositif de réglage (15), la position de travail respective du profil d'aile asymétrique (2) présentant un angle d'attaque (α) positif, lequel angle d'attaque (α) positif allant de préférence jusqu'à quatre degrés dans chacune des deux directions du flux (F, F').

13. Dispositif selon l'une des revendications 2 à 12, conçu comme une éolienne (11), dont le module de rotor (10) est conçu comme un gyroscope afin d'utiliser l'inertie de masse provoquée par les moments et les forces gyroscopiques pour stabiliser l'axe de rotation vertical (y) du module de rotor (10) conçu comme une roue à rayons (17) avec un plan de rotation horizontal (R'), dans lequel module de rotor (10), des câbles porteurs et de tension relient un support annulaire externe (122), distant de l'axe de rotation (y) d'un rayon (r1), à un moyeu (170), le support annulaire (122), conçu comme une bague de pression, portant une pluralité de pales de rotor (1) droites disposées parallèlement à l'axe de rotation (y), lesquelles sont reliées au support annulaire (122) au moyen d'un haubanage (142) des longerons (14) et, par l'intermédiaire des rayons de la roue à rayons (17) formés par des câbles porteurs et de tension, au moyeu (170) et, via un palier de rotation supérieur et un palier de rotation inférieur (T, T') à une structure porteuse de l'éolienne (11) de telle sorte qu'un entrefer est formé entre au moins un stator côté structure porteuse, disposé de manière coaxiale et concentrique à l'axe de rotation (y), et au moins un rotor côté rotor du moteur-générateur de l'éolienne (11), la structure porteuse pouvant être ancrée dans un sol de fondation à terre ou en mer, et l'effet gyroscopique étant utilisé de préférence pour une éolienne (11) dont la structure porteuse comporte un flotteur (120) conçu comme une bouée lestée (171), qui peut être ancré au fond de la mer à l'aide de câbles et d'ancres (121), le module de rotor (10) pouvant de préférence être conçu avec un diamètre supérieur à cent mètres, et de préférence encore supérieur à deux cents mètres.

14. Dispositif selon l'une des revendications 2 à 13, conçu comme une éolienne (11), dans laquelle une pluralité de modules de rotor (10) est empilée verticalement les uns au-dessus des autres et est supportée par un support annulaire situé au niveau de la base (122) formant la bague de pression d'une roue à rayons (17) résistant à la flexion, à la poussée et à la torsion, dont le moyeu (170), disposé de manière concentrique et coaxiale par rapport à l'axe de rotation (y), reçoit sur sa face intérieure le rotor du moteur-générateur et est relié, au moyen d'un palier de rotation supérieur (T) et d'un palier de rotation inférieur (T'), par l'intermédiaire d'un entrefer, à un stator du moteur-générateur disposé de manière coaxiale et concentrique par rapport à l'axe de rotation (y), lequel stator étant relié soit à un bras en porte-à-faux de la fondation de l'éolienne (11), soit, dans le cas d'une éolienne flottante (11), à une bouée lestée (171).

15. Dispositif selon l'une des revendications précédentes, conçu comme un avion (18) comportant au moins une aile (180), le dispositif de réglage (15) présentant un engrenage à crans et un élément de retenue (151), cet arrangement permettant de relier, dans au moins une section longitudinale (L1-Ln) du profil d'aile asymétrique (2), le segment d'aile central (212) avec au moins un moteur électrique (16), et de relier les segments d'aile avant et arrière (211, 213) du profil d'aile en trois parties (21) avec l'élément de retenue (151) du dispositif de réglage (15) de telle sorte que, par l'actionnement du dispositif de réglage (15), la portance générée par le côté d'aspiration (-) du profil d'aile variable (2) puisse être adaptée à la situation de vol respective de l'avion (18), l'engrenage à crans permettant de préférence un rapport de transmission de la force de réglage de 1 à 10.
